# EUROPEAN PATENT APPLICATION

(11) **EP 4 552 484 A2**
(43) Date of publication of application: **14.05.2025**
(21) Application number: 23835939.2
(22) Date of filing: 06.07.2023
(51) Int. Cl.: A01K 1/06, A01K 1/02

(54) **ANIMAL TRANSPORT APPARATUS**

(30) Priority: 06.07.2022 CN 202210800316; 22.12.2022 US 202263476842 P
(71) Applicant: Jani International Pte. Ltd., Singapore 569874 (SG)
(72) Inventor: CHENG, Chinming, Hong Kong (CN); CHENG, Kaiwen, Hong Kong (CN); GUO, Zhengwen, Hong Kong (CN); CHEN, Yingzhong, Hong Kong (CN); FERGUSON, Joshua, Hong Kong (CN); HARMES, Clyde S., Hong Kong (CN); BOWERS, Patrick J. G., Hong Kong (CN); HARTENSTINE, Curtis M., Hong Kong (CN)
(74) Representative: Pfenning, Meinig & Partner mbB
(86) International application number: PCT/SG2023/050474
(87) International publication number: WO 2024/010527

(57) **Abstract**

An animal transport apparatus of the present disclosure comprises: a bottom plate, which provides an animal bearing surface, the bottom plate having at least one bottom plate opening located at a first position on the animal bearing surface; a side plate, which is connected to a long side of the bottom plate, and when viewed from a side of the animal transport apparatus, the bottom plate is connected to the side plate and together form an L-shaped structure; and a positional fixing assembly, which is capable of forming a closed positional fixing structure; the positional fixing assembly comprises: at least one fixing buckle strap, which is at one end secured to a second position on the animal bearing surface of the base plate; and at least one fixing pull strap, which extends on a surface of the bottom plate opposite to the animal bearing surface, one end of the fixing pull strap extending out from the at least one bottom plate opening and connecting to the fixing buckle strap to form a closed harness positional fixing structure.

## Description

### TECHNICAL FIELD

The present disclosure relates to an animal transport apparatus, particularly to a transport apparatus installed in a vehicle for carrying animals or pets.

### BACKGROUND

Recently, many people regard their pets as family members or companions, thus paying increasing attention to the companionship and care of pets, comprising their safety in vehicles.

At present, there are various pet carriers or vests on the market that can be secured with the vehicle seat belts to prevent pets from escaping while the vehicle is traveling. However, how to prevent pets from being impacted or injured due to sudden changes in vehicle speed remains a problem that pet owners urgently need to address.

**In** addition, a crate or another type of carrier can be used to transport animals in a vehicle. However, many existing carriers suffer from various deficiencies. For example, some carriers are insufficiently strong to contain and protect the animal in the event of a car crash, particularly larger animals. In another example, some carriers are difficult to ship, transport, or store outside of the vehicle. In still another example, some carriers are difficult to install in the vehicle.

### SUMMARY

An aspect of the present disclosure provides an animal transport apparatus for securing an animal wearing a wearable device thereon, comprising: a bottom plate providing an animal bearing surface; a side plate connected to a first long side of the bottom plate, and the bottom plate and the side plate being connected to form an L-shaped structure as viewed from a side of the animal transport apparatus; and at least one pair of fixing buckle straps, each having one end secured to a first position and a second position on the animal bearing surface of the bottom plate, and the other end connected to the wearable device.

Another aspect of the present disclosure provides an animal transport apparatus, comprising: a bottom plate providing an animal bearing surface, and having at least one bottom plate opening located at a first position on the animal bearing surface; a side plate connected to a first long side of the bottom plate, and the bottom plate and the side plate being connected to form an L-shaped structure as viewed from a side of the animal transport apparatus; and a positional fixing assembly, comprising: at least one fixing buckle strap, one end of which is secured to a second position on the animal bearing surface of the bottom plate; and at least one fixing pull strap, extending on a surface of the bottom plate opposite to the animal bearing surface, one end of the fixing pull strap extending out from the at least one bottom plate opening and connecting to the fixing buckle strap to form a closed positional fixing structure.

According to the aforesaid aspect, the bottom plate has a first bottom plate opening and a second bottom plate opening located on the animal bearing surface and spaced apart from each other, the positional fixing assembly comprising: a first fixing buckle strap and a second fixing buckle strap, each of which having one end secured to the animal bearing surface of the bottom plate, and spaced apart from each other; and a first fixing pull strap and a second fixing pull strap, extending on the surface of the bottom plate opposite to the animal bearing surface, having ends respectively extending from the first bottom plate opening and the second bottom plate opening, to connect with the first fixing buckle strap and the second fixing buckle strap to form a first closed positional fixing structure and a second closed positional fixing structure.

According to the aforesaid aspect, the animal transport apparatus further comprises an adjustment assembly provided at a bottom of the bottom plate to adjust positions of the first bottom plate opening and the second bottom plate opening.

According to the aforesaid aspect, the adjustment assembly is movably provided in a central recess of the bottom plate, and adjusts the positions of the first bottom plate opening and the second bottom plate opening on the bottom plate by movement within the central recess.

According to the aforesaid aspect, the first closed positional fixing structure is parallel to the second closed positional fixing structure or intersects with the second closed positional fixing structure at a midpoint.

According to the aforesaid aspect, the other end of the fixing pull strap is connected to a positioning buckle and exposed out of the bottom plate and the side plate.

According to the aforesaid aspect, the positional fixing assembly comprises: at least one fixing buckle connected to a corresponding free end of the at least one fixing buckle strap; and at least one buckle connected to the end of the at least one fixing pull strap extending from the first bottom plate opening, the positional fixing assembly forms the closed positional fixing structure by engagement of the fixing buckle and the buckle.

According to the aforesaid aspect, the animal transport apparatus further comprises an animal head guard connected to a first short side of the bottom plate.

According to the aforesaid aspect, one or more of the animal head guard and the side plate is connected to the bottom plate in a movable manner.

According to the aforesaid aspect, the animal transport apparatus further comprises a support member connected to a second long side of the bottom plate, the second long side being opposite to the first long side.

According to the aforesaid aspect, the support member is one of a support side plate and a U-shaped support rod.

According to the aforesaid aspect, one or more of the side plate and the support member is connected to the bottom plate in a movable manner.

According to the aforesaid aspect, one or more of the side plate and the support member is pivotally connected to the bottom plate.

According to the aforesaid aspect, one or more of the side plate and the support member is detachably connected to the bottom plate.

According to the aforesaid aspect, one or more of the support side plate and the U-shaped support rod is connected to the bottom plate in an insertion manner.

According to the aforesaid aspect, the animal transport apparatus further comprises a mounting structure located in the bottom plate, the animal transport apparatus being secured to a vehicle rear seat through the mounting structure.

According to the aforesaid aspect, the mounting structure is a ISOFIX soft connecting structure, a ISOFIX rigid connecting frame, or a LATCH system.

According to the aforesaid aspect, the animal transport apparatus further comprises an upper anchor assembly to further securing the animal transport apparatus to an anchor point on the vehicle rear seat, the upper anchor assembly comprises a first tether and a second tether each having a first end and a second end; a length adjuster, a first end of which is connected to a first end of each of the first tether and the second tether; a connecting tether, the first end of which is movably connected to a second end of the length adjuster to form an adjustable end; and a connecting hook, connected to the second end of the connecting tether, wherein the first tether and the second tether are connected to the side plate or the bottom plate with their respective second ends, wherein the upper anchor assembly secures the animal transport apparatus to the anchor point through the connecting hook.

According to the aforesaid aspect, the animal transport apparatus further comprises a transverse connecting tether connected between the first tether and the second tether.

According to the aforesaid aspect, the first tether and the second tether are engaged with the side plate by fixing buckles connected to the respective second ends thereof.

According to the aforesaid aspect, the first tether and the second tether are securely connected to the bottom plate with their respective second ends.

According to the aforesaid aspect, the ISOFIX soft connecting structure comprises a Y-shaped webbing, a first connector, and a second connector, wherein the first connector and the second connector are respectively connected to a first end and a second end of the Y-shaped webbing, and a third end of the Y-shaped webbing is connected to a positioning buckle; wherein the animal transport apparatus is secured to the ISOFIX anchor points on the vehicle rear seat through the first connector and the second connector.

According to the aforesaid aspect, the Y-shaped webbing extends out of the bottom plate and the side plate with its third end.

According to the aforesaid aspect, the ISOFIX rigid connecting frame comprises a first connector and a second connector, the first connector and the second connector are located at both ends of the ISOFIX rigid connectimg frame close to one side of the vehicle rear seat to be secured to the ISOFIX anchor points on the vehicle rear seat.

According to the aforesaid aspect, a plurality of storage slots is provided on a bottom of the bottom plate, the storage slots are designed to match and accommodate one or more of the mounting structure, the ISOFIX soft connecting structure, the ISOFIX rigid connecting frame, the LATCH system, the support member, the U-shaped support rod, and the animal head guard.

According to the aforesaid aspect, the side plate comprises a reinforcing frame, and the reinforcing frame has a shape corresponding to a perimeter of the side plate and is embedded in the side plate.

According to the aforesaid aspect, the side plate comprises at least one guide on an outer surface of the side plate, the outer surface faces away from the animal bearing surface.

According to the aforesaid aspect, the side plate comprises a U-shaped support rod connected to the bottom plate, and a support fabric sleeved on the U-shaped support rod.

According to the aforesaid aspect, the animal transport apparatus further comprises an animal head guard, which is formed by the support fabric connected to the side plate.

### BRIEF DESCRIPTION OF THE DRAWINGS

In order to further understand the features and technical content of the present disclosure, reference is made to the following detailed description and the accompanying drawings, which are provided for reference and illustration only and are not intended to limit the present disclosure. In the drawings:
Figs. 1 to 3 are schematic views of an animal transport apparatus according to an embodiment of the present disclosure, with Figs. 1 and 2 being perspective views of the animal transport apparatus viewed from different directions, and Fig. 3 being a side view of the animal transport apparatus;
Fig. 4 is a top view of an animal transport apparatus according to another embodiment of the present disclosure;
Fig. 5 schematically shows another securing method of a fixing pull strap in the animal transport apparatus shown in Fig. 4 of the present disclosure;
Figs. 6 to 9 are schematic views of an animal transport apparatus according to an embodiment of the present disclosure, with Figs. 6 and 7 being perspective views of the animal transport apparatus viewed from different directions, Fig. 8 being a top view of the animal transport apparatus, and Fig. 9 being a side view of the animal transport apparatus;
Fig. 10 is a front schematical view of the animal transport apparatus according to an embodiment of the present disclosure;
Fig. 11 is a top view of an animal transport apparatus according to another embodiment of the present disclosure;
Figs. 12 and 13 schematically show different usage scenarios of the animal transport apparatus according to the aforementioned embodiments of the present disclosure;
Figs. 14 to 17 are schematic views of an animal transport apparatus according to an embodiment of the present disclosure, with Figs. 14 and 15 being perspective views of the animal transport apparatus viewed from different directions, Fig. 16 being a top view of the animal transport apparatus, and Fig. 17 being a side view of the animal transport apparatus;
Fig. 18 is a front schematial view of the animal transport apparatus according to an embodiment of the present disclosure;
Fig. 19 is a front schematical view of an animal transport apparatus according to another embodiment of the present disclosure;
Fig. 20 is a top view of the animal transport apparatus according to another embodiment of the present disclosure;
Figs. 21 to 25 schematically show various usage scenarios of the animal transport apparatus according to the aforementioned embodiments of the present disclosure;
Figs. 26 to 29 are schematic views of an animal transport apparatus according to an embodiment of the present disclosure, with Figs. 26 and 27 being perspective views of the animal transport apparatus viewed from different directions, Fig. 28 being a top view of the animal transport apparatus, and Fig. 29 being a side view of the animal transport apparatus;
Fig. 30 is a front schematical view of the animal transport apparatus according to an embodiment of the present disclosure;
Fig. 31 is a top view of an animal transport apparatus according to another embodiment of the present disclosure;
Figs. 32 and 33 schematically show various usage scenarios of the animal transport apparatus according to the aforementioned embodiments of the present disclosure;
Figs. 34a and 34b are a perspective view and a corresponding top view of the animal transport apparatus according to an embodiment of the present disclosure;
Fig. 35 is a perspective view of an animal transport apparatus according to another embodiment of the present disclosure;
Fig. 36 is a perspective view of an animal transport apparatus according to still another embodiment of the present disclosure;
Fig. 37 is a bottom perspective schematic view of an animal transport apparatus according to an embodiment of the present disclosure;
Figs. 38a and 38b schematically show internal and bottom configuration of a bottom plate of the animal transport apparatus according to an embodiment of the present disclosure;
Figs. 39a, 39b, and 39c schematically show an installation belt structure of the animal transport apparatus, and setting of the installation belt structure within the animal transport apparatus according to an embodiment of the present disclosure;
Figs. 40a and 40b schematically show the installation belt structure and a length adjuster thereof in the animal transport apparatus according to an embodiment of the present disclosure;
Fig. 41 schematically shows a collapsed state of the animal transport apparatus according to an embodiment of the present disclosure;
Figs. 42a, 42b, and 42c are perspective schematical views of an animal transport apparatus and a main structure thereof according to still another embodiment of the present disclosure.
Fig. 43a shows a perspective view of an animal containment unit according to a first exemplary embodiment.
Fig. 43b shows a front view of the animal containment unit of the first exemplary embodiment.
Fig. 43c shows a side view of the animal containment unit of the first exemplary embodiment.
Fig. 43d shows a top view of the animal containment unit of the first exemplary embodiment.
Fig. 44a shows a base structure of the animal containment unit of the first exemplary embodiment.
Fig. 44b shows a base frame and latch carriage of the base structure of the animal containment unit of the first exemplary embodiment.
Fig. 44c shows a side view of the base structure of the animal containment unit of the first exemplary embodiment.
Fig. 45a shows the base structure of the first exemplary embodiment with the latch carriage in a first position toward a first side of the animal containment unit.
Fig. 45b shows front button of the base structure of the first exemplary embodiment extending through a front cavity in the front portion of the molded base.
Fig. 45c shows the base structure of the first exemplary embodiment with the latch carriage in the first position and with the latches extended out the rear cavity.
Fig. 45d shows a first side actuator of the base structure of the first exemplary embodiment positioned in the first side cavity in the first side portion of the molded base.
Fig. 45e shows a front button of the base structure of the first exemplary embodiment sliding within the front slot.
Fig. 45f shows the base structure of the first exemplary embodiment with the latch carriage in the second position toward the second side of the unit.
Fig. 45g shows the base structure of the first exemplary embodiment with the latch carriage in the second position and with the latches withdrawn into the rear cavity.
Fig. 46a shows the animal containment unit of the first exemplary embodiment in the expanded state.
Fig. 46b shows the animal containment unit of the first exemplary embodiment transitioning to the collapsed state.
Fig. 46c shows the animal containment unit of the first exemplary embodiment in the collapsed state.
Fig. 47a shows a perspective view of a sliding actuator of the first exemplary embodiment in a first state with the front middle support member and the rear middle support member connected via the sliding actuator.
Fig. 47b shows a side view of the sliding actuator of the first exemplary embodiment in the first state.
Fig. 47c shows a side view of the sliding actuator of the first exemplary embodiment in the second state with the front middle support member and the sliding actuator disconnected from the rear middle support member.
Fig. 48a shows a cross-sectional view of the containment materials of the first exemplary embodiment.
Fig. 48b shows the exterior layer for the containment materials of the first exemplary embodiment with the animal containment unit in the expanded state.
Fig. 48c shows the stiffener layer for the containment materials of the first exemplary embodiment with the animal containment unit in the expanded state.
Fig. 48d shows the interior layer for the containment materials of the first exemplary embodiment with the animal containment unit in the expanded state.
Fig. 49 shows a webbing and tether structure for the animal containment unit of the first exemplary embodiment assembled with the frame structure and the base structure.
Fig. 50 shows a diagram of the animal containment unit of the first exemplary embodiment installed in a vehicle.
Fig. 51a shows a perspective view of an animal containment unit according to a second exemplary embodiment.
Fig. 51b shows an exploded view of the animal containment unit according to the second exemplary embodiment.
Fig. 51c shows a top view of the animal containment unit according to the second exemplary embodiment.
Fig. 52a shows a base structure of the second exemplary embodiment with a top part nested with a bottom part.
Fig. 52b shows the bottom part of the base structure of the second exemplary embodiment.
Fig. 53a shows the latch system of the second exemplary embodiment without the base structure.
Fig. 53b shows a bottom view of the latch system mounted in the bottom part of the base structure with the latches pivoted into the extended position on a first side of the unit of the second exemplary embodiment.
Fig. 53c shows a bottom view of the latch system with the latches pivoted into the retracted position on the first side of the unit of the second exemplary embodiment.
Fig. 53d shows a bottom view of the latch system with the latches pivoted into the extended position on a second side of the unit of the second exemplary embodiment.
Fig. 54 shows the animal containment unit of the second exemplary embodiment transitioning from an expanded state into a collapsed state.
Fig. 55a shows the webbing and tether structure for the animal containment unit of the second exemplary embodiment assembled with the frame structure and the base structure.
Fig. 55b shows a diagram of the animal containment unit of the second exemplary embodiment installed in a vehicle.
Fig. 55c shows the animal containment unit of the second exemplary embodiment deflecting under the force of a car crash.
Fig. 56 shows the animal containment unit of the second exemplary embodiment being installed in a vehicle.
Fig. 57a shows a perspective view of an animal containment unit according to a third exemplary embodiment.
Fig. 57b shows a bottom view of the animal containment unit of the third exemplary embodiment.
Fig. 58 shows the X-bar of the frame structure of the animal containment unit of the third exemplary embodiment.
Fig. 59a shows an arrangement for a latch release actuator of the third exemplary embodiment.
Fig. 59b shows an arrangement for a first latch unlock actuator of the third exemplary embodiment.
Fig. 59c shows an arrangement for a second latch unlock actuator of the third exemplary embodiment.

### List of the reference numbers:

- 512: seat
- 514: seat backrest
- 515: rear seat safety belt
- 515A: shoulder belt
- 515B: abdominal belt
- 516: safety belt buckle
- 517: rear seat safety buckle strap
- 518: safety buckle strap buckle
- 521: extension strap
- 521A: adjustment buckle
- 522, 524: end buckle
- 531: extension strap
- 531A: adjustment buckle
- 532, 534: end buckle
- 541: extension strap
- 542, 544: end buckle
- 551: extension strap
- 551A: adjustment buckle
- 552, 554: end buckle
- 581: pivot
- 5100: animal transport apparatus
- 5110: bottom plate
- 5110A, 5110B: long side
- 5111: bottom plate opening
- 5113, 5114: opening
- 5120: side plate
- 5121, 5122: guide
- 5140: fixing pull strap
- 5140A: adjustment end
- 5142: buckle
- 5150: installation strap
- 5150A: adjustment end
- 5151, 5152: support strap
- 5153, 5154: connectors
- 5160: fixing buckle strap
- 5162: fixing buckle
- 5170: positioning buckle
- 5400: animal transport apparatus
- 5410: bottom plate
- 5410A, 5410B: long side
- 5410c: short side
- 5411, 5412: bottom plate opening
- 5420: side plate
- 5440, 5444: fixing pull strap
- 5442, 5446: buckle
- 5451: main frame
- 5452: connecting frame
- 5453, 5454: connector
- 5460, 5464: fixing buckle strap
- 5462, 5466: fixing buckle
- 5600: animal transport apparatus
- 5610: bottom plate
- 5610A, 5610B: long side
- 5611: bottom plate opening
- 5613, 5614: opening
- 5620: side plate
- 5621, 5622: guide
- 5630: side plate
- 5640: fixing pull strap
- 5640A: adjustment end
- 5642: buckle
- 5650: installation strap
- 5650A: adjustment end
- 5651, 5652: support strap
- 5653, 5654: connector
- 5660: fixing buckle strap
- 5662: fixing buckle
- 5670: positioning buckle
- 51000: animal transport apparatus
- 51013, 51014: opening
- 51020: side plate
- 51021: guide
- 51040: fixing pull strap
- 51050: installation strap
- 51100: animal transport apparatus
- 51110: bottom plate
- 51120: side plate
- 51130: side plate
- 51140: fixing pull strap
- 5140A: adjustment end
- 51142: buckle
- 51151: main frame
- 51152: connecting frame
- 51153, 51154: connector
- 51160: fixing buckle strap
- 51162: fixing buckle
- 51200: animal transport apparatus
- 51200A: animal
- 51210: bottom plate
- 51211: bottom plate opening
- 51220: side plate
- 51230: side plate
- 51240: fixing pull strap
- 51240A: adjustment end
- 51242: buckle
- 51260: fixing buckle strap
- 51262: fixing buckle
- 51300: animal transport apparatus
- 51300A: animal
- 51310: bottom plate
- 51320: side plate
- 51330: side plate
- 51340: fixing pull strap
- 51340A: adjustment end
- 51342: buckle
- 51360: fixing buckle strap
- 51362: fixing buckle
- 51390: pet vest
- 51395: central webbing
- 51400: animal transport apparatus
- 51410: bottom plate
- 51411: bottom plate opening
- 51413, 51414: opening
- 51420: side plate
- 51421, 51422: guide
- 51430: side plate
- 51440: fixing pull strap
- 51440A: adjustment end
- 51442: buckle
- 51450: installation strap
- 51450A: adjustment end
- 51451, 51452: support strap
- 51453, 51454: connector
- 51460: fixing buckle strap
- 51462: fixing buckle
- 51470: positioning buckle
- 51800: animal transport apparatus
- 51813, 51814: opening
- 51820: side plate
- 51821: guide
- 51840A: adjustment end
- 51850A: adjustment end
- 51900: animal transport apparatus
- 51913, 51914: opening
- 51920: side plate
- 51921, 51922: guide
- 51940A: adjustment end
- 51950A: adjustment end
- 52000: animal transport apparatus
- 52010: bottom plate
- 52011: bottom plate opening
- 52020: side plate
- 52030: side plate
- 52040: fixing pull strap
- 52042: buckle
- 52051: main frame
- 52052: connecting frame
- 52053, 52054: connector
- 52060: fixing buckle strap
- 52062: fixing buckle
- 52100: animal transport apparatus
- 52100A: animal
- 52110: bottom plate
- 52111: bottom plate opening
- 52120: side plate
- 52140: fixing pull strap
- 52140A: adjustment end
- 52142: buckle
- 52160: fixing buckle strap
- 52162: fixing buckle
- 52190: pet vest
- 52195: central webbing
- 52196: ring
- 52200: animal transport apparatus
- 52200A: animal
- 52210: bottom plate
- 52211: bottom plate opening
- 52220: side plate
- 52240: fixing pull strap
- 52240A: adjustment end
- 52242: buckle
- 52260: fixing buckle strap
- 52262: fixing buckle
- 52290: pet vest
- 52295: central webbing
- 52300: animal transport apparatus
- 52300A: animal
- 52310: bottom plate
- 52311: bottom plate opening
- 52320: side plate
- 52340: fixing pull strap
- 52340A: adjustment end
- 52342: buckle
- 52360: fixing buckle strap
- 52362: fixing buckle
- 52390: pet vest
- 52395: central webbing
- 52400: animal transport apparatus
- 52400A: animal
- 52410: bottom plate
- 52411: bottom plate opening
- 52420: side plate
- 52440: fixing pull strap
- 52440A: adjustment end
- 52442: buckle
- 52460: fixing buckle strap
- 52462: fixing buckle
- 52490: pet vest
- 52494: left abdominal belt
- 52495: central webbing
- 52496: right shoulder belt
- 52500: animal transport apparatus
- 52510: bottom plate
- 52510A, 52510B: long side
- 52511, 52512: bottom plate opening
- 52513, 52514, 52515: opening
- 52520: side plate
- 52521, 52522: guide
- 52530: side plate
- 52540, 52544: fixing pull strap
- 52540A, 52544A: adjustment end
- 52542, 52546: buckle
- 52550: installation strap
- 52550A: adjustment end
- 52551, 52552: support strap
- 52553, 52554: connector
- 52560, 52564: fixing buckle strap
- 52562, 52566: fixing buckle
- 52570: positioning buckle
- 52900: animal transport apparatus
- 52913, 52914, 52915: opening
- 52920: side plate
- 52921: guide
- 52940A, 52944A: adjustment end
- 52950A: adjustment end
- 53000: animal transport apparatus
- 53010: bottom plate
- 53020: side plate
- 53030: side plate
- 53140, 53144: fixing pull strap
- 53140A, 53144A: adjustment end
- 53142, 53146: buckle
- 53160, 53164: fixing buckle strap
- 53162, 53166: fixing buckle
- 53200: animal transport apparatus
- 53200A: animal
- 53210: bottom plate
- 53211, 53212: bottom plate opening
- 53220: side plate
- 53230: side plate
- 53240, 53244: fixing pull strap
- 53240A, 53244A: adjustment end
- 53242, 53246: buckle
- 53260, 53264: fixing buckle strap
- 53262, 53266: fixing buckle
- 53300: animal transport apparatus
- 53300A: animal
- 53310: bottom plate
- 53311, 53312: bottom plate opening
- 53320: side plate
- 53330: side plate
- 53340, 53344: fixing pull strap
- 53340A, 53344A: adjustment end
- 53342, 53346: buckle
- 53360, 53364: fixing buckle strap
- 53362, 53366: fixing buckle
- 53390: pet vest
- 53391A, 53391B: webbing
- 53392A, 53392B: webbing
- 53395: central webbing
- 53399: chest fixing portion
- 53399': back fixing portion
- 53400: animal transport apparatus
- 53410: bottom plate
- 53410A, 53410B: long side
- 53411, 53412: bottom plate opening
- 53420: side plate
- 53440, 53444: fixing pull strap
- 53442, 53446: buckle
- 53448: adjustment end
- 53453, 53454, 53456: connector
- 53455: connecting tether
- 53460, 53464: fixing buckle strap
- 53462, 53466: fixing buckle
- 53480: head guard
- 53488: support rod
- 53490: upper anchor assembly
- 53491, 53492: tether
- 53492A: fixing buckle
- 53493: length adjuster
- 53494: connecting tether
- 53494A: adjustment end
- 53495: connecting hook
- 53500: animal transport apparatus
- 53510: bottom plate
- 53510A, 53510B: long side
- 53511, 53512: bottom plate opening
- 53520: side plate
- 53540, 53544: fixing pull strap
- 53542, 53546: buckle
- 53553, 53554, 53556: connector
- 53555: connecting tether
- 53560, 53564: fixing buckle strap
- 53562, 53566: fixing buckle
- 53580: head guard
- 53588: support rod
- 53590: upper anchor assembly
- 53591, 53592: tether
- 53592A: fixing buckle
- 53593: length adjuster
- 53594: connecting tether
- 53594A: adjustment end
- 53595: connecting hook
- 53600: animal transport apparatus
- 53610: bottom plate
- 53610A, 53610B: long side
- 53611, 53612: bottom plate opening
- 53620: side plate
- 53653, 53654, 53656: connector
- 53655: connecting tether
- 53660, 53664: fixing pull strap
- 53662, 53666: end buckle
- 53668: adjustment end
- 53680: head guard
- 53688: support rod
- 53690: upper anchor assembly
- 53691, 53692: tether
- 53692A: fixing buckle
- 53693: length adjuster
- 53694: connecting tether
- 53694A: adjustment end
- 53695: connecting hook
- 53700, 53700B: animal transport apparatus
- 53710: bottom plate
- 53711, 53712: bottom plate opening
- 53718A: support rod storage recess
- 53718B: installation strap storage recess
- 53719A, 53719B: opening
- 53720, 53720B: side plate
- 53721, 53722: guide
- 53723, 53724: guide
- 53728: reinforcement frame
- 53748: adjustment end
- 53753, 53754, 53756: connector
- 53770: positioning buckle
- 53790, 53790B: upper anchor assembly
- 53791, 53792: tether
- 53791B, 53792B: tether
- 53793: length adjuster
- 53794: connecting tether
- 53795: connecting hook
- 53796B: lateral connecting tether
- 53800: bottom plate
- 53810: central recess
- 53811: adjustment device
- 53811A, 53811B: push button
- 53813: guide slot
- 53818A: support rod storage recess
- 53818B: storage recess
- 53819C: adjuster opening
- 53851: main frame
- 53852: connecting frame
- 53853, 53854: connector
- 53870: positioning buckle
- 53872: connecting frame release device
- 53888: support rod
- 53900: installation strap structure
- 53910: bottom plate
- 53919C: installation strap opening
- 53931-53936: webbing guide wheel
- 53950: installation strap
- 53950A: adjustment end
- 53951, 53952: support strap
- 53953, 53954: connector
- 53953A, 53954A: release webbing
- 53955: junction
- 53972: positioning buckle
- 54000: installation strap structure
- 54010: bottom plate
- 54018C: installation slot
- 54051, 54052: webbing
- 54052A: adjustment end
- 54053, 54054: connector
- 54053A, 54054A: release webbing
- 54074: length adjuster
- 54074A: side control part
- 54100: animal transport apparatus
- 54110: bottom plate
- 54110A, 54110B: long side
- 54120: side plate
- 54180: head guard
- 54180A: snap-fit structure
- 54200: animal transport apparatus
- 54210: bottom plate
- 54211, 54212, 54213: fixed groove
- 54220: side plate
- 54221, 54222: guide
- 54224: support fabric
- 54225: pivot axis
- 54227, 54228: guide
- 54280: head guard
- 54282: connector
- 54290: upper anchor assembly
- 54291, 54292: tether
- 54293: length adjuster
- 54294: connecting tether
- 54295: connecting hook
- 5S: animal carrying surface
- D1, D2: distance
- G1, G2: spacing

### DETAILED DESCRIPTION

Hereinaftere, exemplary embodiments are provided to illustrate the technical concepts and connotations of the present disclosure. In the drawings or description, the same or similar components are denoted by the same or corresponding reference numerals; moreover, the drawings are made for the sake of understanding, and sizes and shapes of the various elements in the drawings are not actual sizes or proportional relationships of the components.

Furthermore, the description of the drawings and embodiments in the following is construded as limiting implementing scope of the present disclosure to a single implementation; other implementations are available by replacing some or all of the components as described or shown. In addition, in the case that some or all of the known components are used in the disclosed embodiments, only such known components that are necessary for understanding the implementation of the present disclosure are described, and detailed description of these known components is omitted to avoid confusing concepts and implementations of the present disclosure.

An animal transport apparatus according to the present disclosure may comprise: a base, providing an animal bearing surface; and at least one side part, respectively connected to one side of the base, one of the side parts may be connected to the base in a movable or detachable manner.

The animal transport apparatus according to the present disclosure may comprise: a containment structure in which an animal is contained; and a webbing structure, arranged to span an exterior of the containment structure and apply force to an upper part of the containment structure, thereby securing the containment structure relative to a carrier. The upper part of the containment structure may be a top part thereof, or an upper part of a side part thereof.

The animal transport apparatus according to the present disclosure may comprise: a bottom part, providing an animal bearing surface; at least one side part, respectively connected to one side of the bottom part; and a mounting structure, arranged on the bottom part, the animal transport apparatus is secured relative to the carrier through the mounting structure.

The animal transport apparatus according to the present disclosure may comprise: a bottom part, providing an animal bearing surface; at least one side part, respectively connected to one side of the bottom part; and a mounting structure, movably arranged on the bottom part, thereby allowing position of the mounting structure variable relative to the bottom part, the animal transport apparatus is secured relative to the carrier through the mounting structure.

Additionally, the "carrier" herein may be a vehicle seat, or other tools of the vehicle, such as a trunk or a stroller. For sake of convenience, it will be described in the following by taking an example of the "carrier" as the vehicle seat.

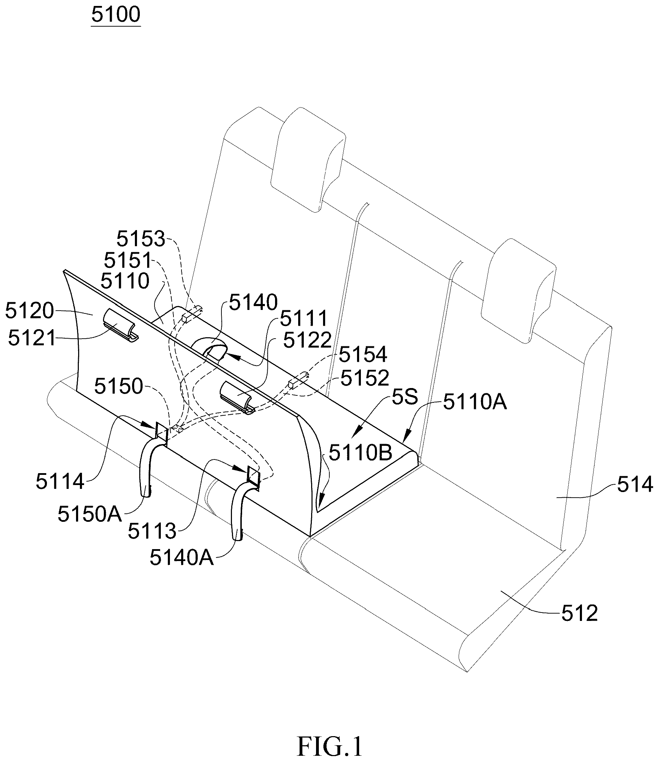

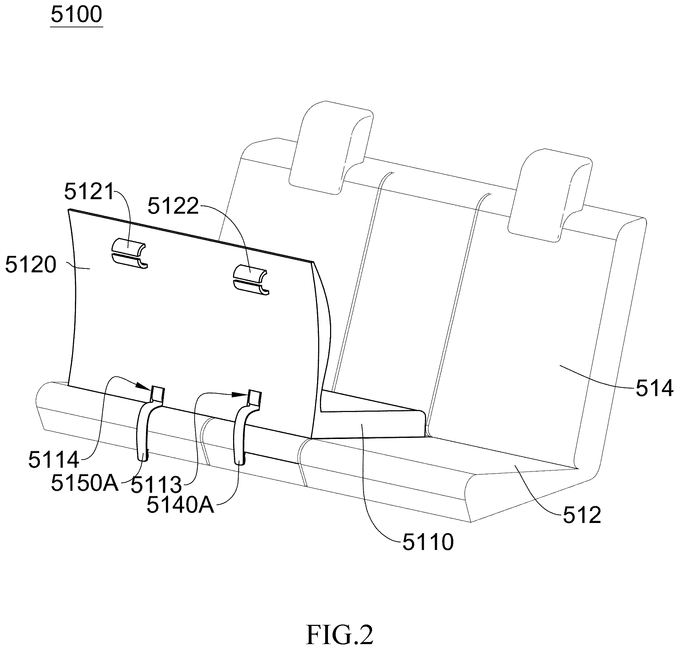

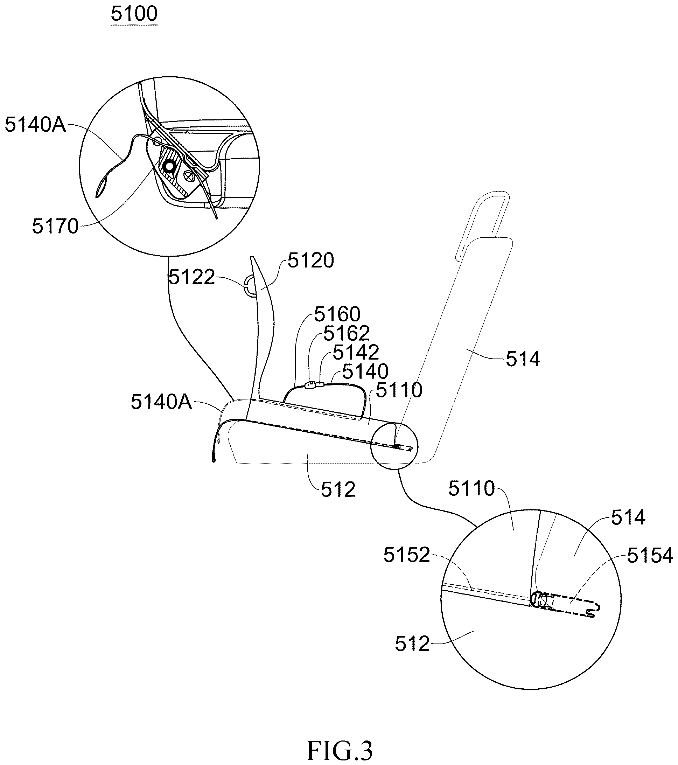

Referring to Figs. 1 to 3, which schematically show an animal transport apparatus 5100 according to an embodiment of the present disclosure, in which Fig. 1 and Fig. 2 are perspective views of the animal transport apparatus 5100 viewed from different directions, and Fig. 3 is a side view of the animal transport apparatus 5100.

As shown in Figs. 1 to 3, the animal transport apparatus 5100 in this embodiment is installed on a rear seat 512 of a vehicle and has one side arranged against a seat backrest 514 of the rear seat. In this embodiment, the animal transport apparatus 5100 comprises a bottom plate 5110 and a side plate 5120. In other words, the bottom part of the animal transport apparatus comprises a bottom plate, and at least one side part thereof comprises a side plate. Alternatively, the animal transport apparatus may comprise a containment structure formed by a bottom plate and a side plate. The bottom plate 5110 is generally rectangular and has a long side (i.e., a second long side, bottom plate long side 5110A) arranged against the seat backrest 514 of the rear seat. In this embodiment, the bottom plate 5110 of the animal transport apparatus 5100 provides an animal bearing surface 5S for placing and securing animals or pets but not limited to dogs to be transported by vehicle. The side plate 5120 is connected to the other long side of the bottom plate 5110 (i.e., a first long side, away from the seat backrest 514) (bottom plate long side 5110B), thereby making the animal transport apparatus 5100 in this embodiment appear to have a generally perpendicular L-shaped structure between the side plate 5120 and the bottom plate 5110 in a side view direction (i.e., a direction viewed from a window to the seat of the vehicle).

As shown in the figuress, there are a first guide 5121 and a second guide 5122 provided on an outer surface of the side plate 5120 (i.e., a face of the side plate 5120 away from the seat backrest 514 of the rear seat), such that the rear seat safety belt of the vehicle can pass through the first guide and the second guide and is positioned therein (further described in other embodiments below).

Referring to Fig. 3 that is a side view. In this embodiment, the animal transport apparatus 5100 has a fixing buckle strap 5160 secured to a surface of the bottom plate 5110 (i.e., the animal bearing surface 5S shown in Fig. 1). The fixing buckle strap 5160 has one end (i.e., fixed end) fixedly connected to the bottom plate 5110, and the other end (i.e., free end) connected to a fixing buckle 5162. Referring to Fig. 1, the bottom plate 5110 has a bottom plate opening 5111 formed on the surface thereof, the bottom plate opening 5111 penetrates through the bottom plate 5110 and allows a fixing pull strap 5140 that extends inside or below the bottom plate 5110 to be drawn out. The bottom plate 5110 has a first opening 5113 and a second opening 5114 on a side close to a connection with the side plate 5120, the openings 5113, 5114 penetrate through a wall of the corresponding bottom plate and are connected to an interior of the bottom plate, respectively. The fixing pull strap 5140 and an installation strap 5150 extending below or interter of the bottom plate 5110 pass through the openings to expose their respective ends 5140A, 5150A (also referred to as "adjustment end") out of the outer surface of the side plate 5120. Specifically, in this embodiment, the fixing pull strap 5140 extends inside or below the bottom plate 5110, with one end (i.e., adjustment end 5140A) exposed outside the first opening 5113; a user (e.g., an owner or caregiver of the animals or pets) can adjust length or tightness of the fixing pull strap 5140 by pulling the adjustment end 5140A of the fixing pull strap 5140 and securely lock the fixing pull strap 5140 in place by using a positioning buckle 5170. Optionally, in an alternative embodiment, the adjustment end of the fixing pull strap may also be designed to extend from a short side of the bottom plate 5110, which can facilitate for the user or the owner to adjust the length and tightness of the fixing pull strap from his/her care side. The other end of the fixing pull strap 5140 (also referred to as "buckling end") extends through the bottom plate 5110 and protrudes from the bottom plate opening 5111 on the surface of the bottom plate to connect to a buckle 5142. The buckle 5142 is corresponding to and matched with the fixing buckle 5162 in structure and shape. By buckling the fixing buckle 5162 and the buckle 5142 together, the fixing buckle strap 5160 and the fixing pull strap 5140 form a closed harness on the bottom plate 5110, for securing the animal within (further described below).

Referring back to Figs. 1 and 2, in this embodiment, the installation strap 5150 of the animal transport apparatus 5100 is made of a soft woven material and has one end connected to a first support strap 5151 and a second support strap 5152 by sewing, for example. Free ends of the first support strap 5151 and the second support strap 5152 respectively comprise a first connector 5153 and a second connector 5154 so as to be connected to anchor points on the rear seat of the vehicle (not shown). For example, in this embodiment, the soft installation strap 5150 is an ISOFIX soft connecting structure, which extends inside or below the bottom plate 5110 and has one end (i.e., the adjustment end 5150A) exposed out of the second opening 5114. The first connector 5153 and the second connector 5154 at the free ends of the first support strap 5151 and the second support strap 5152 are ISOFIX connectors. The first connector 5153 and the second connector 5154 are respectively connected to the ISOFIX anchor points (not shown) between the seat 512 and the seat backrest 514 of the rear seat of the vehicle, thereby securely installing the animal transport apparatus 5100 on the rear seat of the vehicle.

According to this embodiment, the bottom plate 5110 and the side plate 5120 may be made of appropriate materials as needed, comprising but not limited to plastic, wood, metal, or any material with a certain degree of rigidity to provide support, and may also comprise but not limit to cushion materials or foam materials, such as expanded polypropylene (EPP) or expanded polystyrene (EPS). Preferably, the bottom plate 5110 and the side plate 5120 may be made of hard plastic materials.

According to this embodiment, the installation strap 5150 comprising the first support strap 5151 and the second support strap 5152, the fixing pull strap 5140, and the fixing buckle strap 5160 all may be made of webbing material used in the vehicle seatbelt strap to provide a high-strength fixation and superior support.

According to this embodiment, the fixing buckle 5162 and the buckle 5142 may be selected from any existing buckle/buckle combination of any material known to those skilled in the art, such as but not limited to: plug buckles, hook buckles, tower buckles, quick-release buckles, etc., and the material thereof may be plastic or metal. For example, in this embodiment, the fixing buckle 5162 may be a female buckle, and the buckle 5142 may be a corresponding male buckle (or tongue), which may be buckled together to connect the fixing buckle strap 5160 with the fixing pull strap 5140.

As previously described, the fixing pull strap 5140 extends inside or below the bottom plate 5110, with one end (i.e., the adjustment end 5140A) exposed out of the first opening 5113 for adjustment, and the user can adjust length or tightness of the fixing pull strap 5140, and then use the positioning buckle 5170 to securely lock the fixing pull strap 5140 in place. A buckling end of the fixing pull strap 5140 is connected to the aforementioned buckle 5142, and is buckled with the fixing buckle 5162 on the animal bearing surface 5S of the bottom plate 5110, thereby connecting with the fixing buckle strap 5160 to fix and restrain the animal or the pet in place. Specifically, the user may adjust the length of the fixing pull strap 5140 exposed out of the first opening 5113 by pulling the adjustment end 5140A of the fixing pull strap 5140 exposed out of the first opening 5113 (down or up) according to shape and size of the animal or the pet, to adjust the tightness of the fixing pull strap 5140 to fit the size of the animal or the pet. After adjustment, the positioning buckle 5170 is configured for fixation to lock the fixing pull strap 5140 in place so as to prevent it from moving freely. In this embodiment, the animal transport apparatus 5100 has a single fixing pull strap 5140 and a single fixing buckle strap 5160, which are connected to each other to form a "Single-Belt" fixing structure (i.e., a closed fixing structure).

According to this embodiment, the positioning buckle 5170 may be selected from any existing strap length adjustment buckle of any material known to those skilled in the art, such as but not limited to: adjustment buckle rings, length adjustment buckles, buckles in a rectangular frame with one horizontoal rod inside, buckles in a rectangular frame with two horizontal rods inside, one-way adjustment buckles, cam buckles, etc.

For example, in this embodiment, it is possible to choose a cam buckle (or commonly known as "A Lock" in the field of the present disclosure) as the positioning buckle 5170 to allow the user to quickly and easily adjust the length and tightness of the fixing pull strap 5140. Similarly, according to this embodiment, a similar or the same positioning buckle may also be arranged at the second opening 5124 (not shown), thereby adjusting the length and tightness of the installation strap 5150 and fixing and locking the installation strap in place.

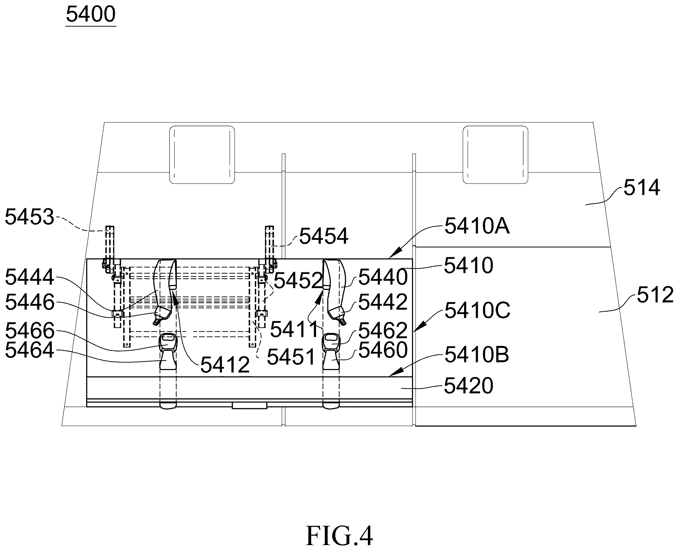

Optionally, the animal transport apparatus in this embodiment may also be securely installed on the rear seat of the vehicle through a rigid connecting structure. Referring to Fig. 4, which is a top view of an animal transport apparatus 5400 according to another embodiment of the present disclosure. The animal transport apparatus 5400 in this embodiment has a similar structure to the aforementioned animal transport apparatus 5100. For clear and concise description, only difference therebetween will be described to avoid confusing concept and implementation of the present disclosure.

As shown in Fig. 4, the animal transport apparatus 5400 of this embodiment comprises a bottom plate 5410 and a side plate 5420. The bottom plate 5410 is positioned against the seat backrest 514 of the rear seat of the vehicle with one long side 5410A thereof; the side plate 5420 is connected to the other long side 5410B of the bottom plate 5410 (i.e., the side away from the seat backrest 514). In this embodiment, the animal transport apparatus 5400 is connected to the rear seat of the vehicle by a connection frame (e.g., an ISOFIX connection frame) positioned inside or below the bottom plate 5410 in replacement of the soft installation strap mentioned in the previous embodiments. Specifically, the connection frame is a U-shaped rigid frame composed of a main frame 5451 and connecting frames 5452, with a first connector 5453 and a second connector 5454 respectively provided at the rear ends (i.e., at both ends close to the seat backrest 514) of the connecting frames 5452 to connect and fix to the rear seat of the vehicle. In this embodiment, the first connector 5453 and the second connector 5454 may be ISOFIX connectors, respectively connected to ISOFIX anchor points (not shown) between the seat 512 and the seat backrest 514 of the rear seat of the vehicle, thereby securely installing the animal transport apparatus 5400 on the rear seat of the vehicle.

As shown in the figures, the animal transport apparatus 5400 of this embodiment comprises a first fixing pull strap 5440 and a second fixing pull strap 5444, which are respectively connected to a first fixing buckle strap 5460 and a second fixing buckle strap 5464 fixed on the bottom plate 5420 to form two closed harnesses, serving as an animal positional fixing structure (i.e., a first closed positional fixing structure and a second closed positional fixing structure) of this embodiment. Specifically, the animal transport apparatus 5400 of this embodiment has the first fixing buckle strap 5460 and the second fixing buckle strap 5464 secured to the surface of the bottom plate 5410, with one end of each of the first fixing buckle strap 5460 and the second fixing buckle strap 5464 connected to the bottom plate 5410, and the other end thereof connected to their respective fixing buckles (i.e., the first fixing buckle 5462 and the second fixing buckle 5466). In this embodiment, the first fixing pull strap 5440 and the second fixing pull strap 5444 extend inside or below the bottom plate 5410. Each of the fixing pull strap 5440 and the second fixing pull strap 5444 has one end (i.e., the adjustment end) exposed out of the first opening and the second opening on the side of the bottom plate 5410 close to the connections with the side plate 5420, after length adjustment, to be fixed and locked in place by the corresponding positioning buckle (not shown); and the other end (i.e., the buckling end) extended out of the first bottom plate opening 5411 and the second bottom plate opening 5412 on the bottom plate 5410 to be connected to the corresponding buckle. The buckles 5442, 5446 correspond to the fixing buckles 5462, 5466. By buckling the fixing buckle 5462 with the buckle 5442 and bucking the fixing buckle 5466 with the buckle 5446, the first fixing buckle strap 5460 and the first fixing pull strap 5440, and the second fixing buckle strap 5464 and the second fixing pull strap 5444, can form their respective closed harnesses on the bottom plate 5410 to secure the animal. Optionally, in an alternative embodiment, the adjustment ends of the fixing pull straps can also be designed to extend from the short side of the bottom plate 5410, which can facilitate for the user or owner to adjust the length and tightness of the fixing pull straps from his/her care side.

As shown, the first bottom plate opening 5411 and the second bottom plate opening 5412 of this embodiment are positioned on the bottom plate 5410 close to the long side 5410A. A line for connecting a position of the first bottom plate opening 5411 and a fixed position of the first fixing buckle strap 5460, and a line for connecting a position of the second bottom plate opening 5412 and a fixed position of the second fixing buckle strap 5464, are parallel to the short side 5410C of the bottom plate 5410. Therefore, the first and second fixing buckle straps are connected with the first and second fixing pull straps respectively extending from the first and second bottom plate openings to form two closed harnesses in parallel, so as to create the "Double-Belt and Parallel" positional fixing structure (i.e., a first closed positional fixing structure and a second closed positional fixing structure) of this embodiment.

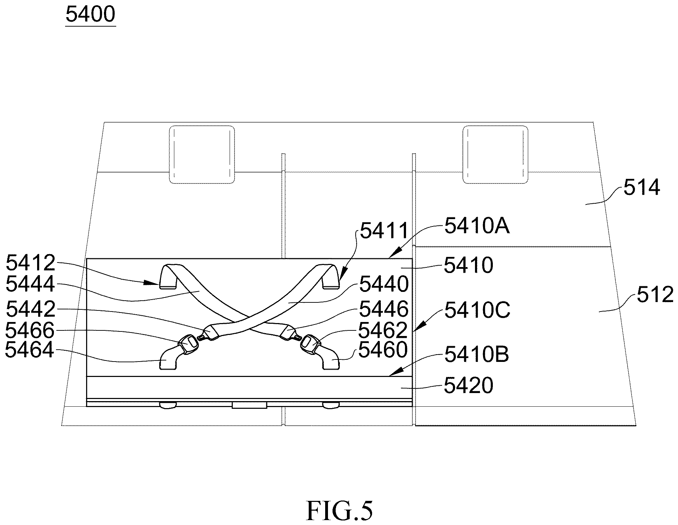

Optionally, the first fixing pull strap 5440 and the second fixing pull strap 5444 may also extend out of the first bottom plate opening 5411 and the second bottom plate opening 5412 and further connect with the second fixing buckle strap 5464 and the first fixing buckle strap 5460, thereby forming two closed harnesses that are crossed with each other, so as to create a "Double-Belt and Crossing" animal positional fixing structure (i.e., a first closed positional fixing structure and a second closed positional fixing structure), as shown in Fig. 5.

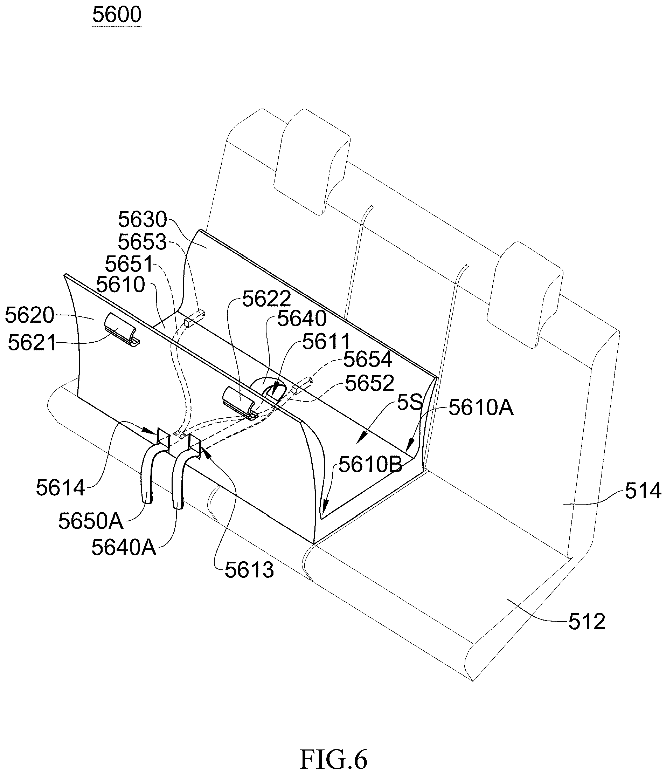

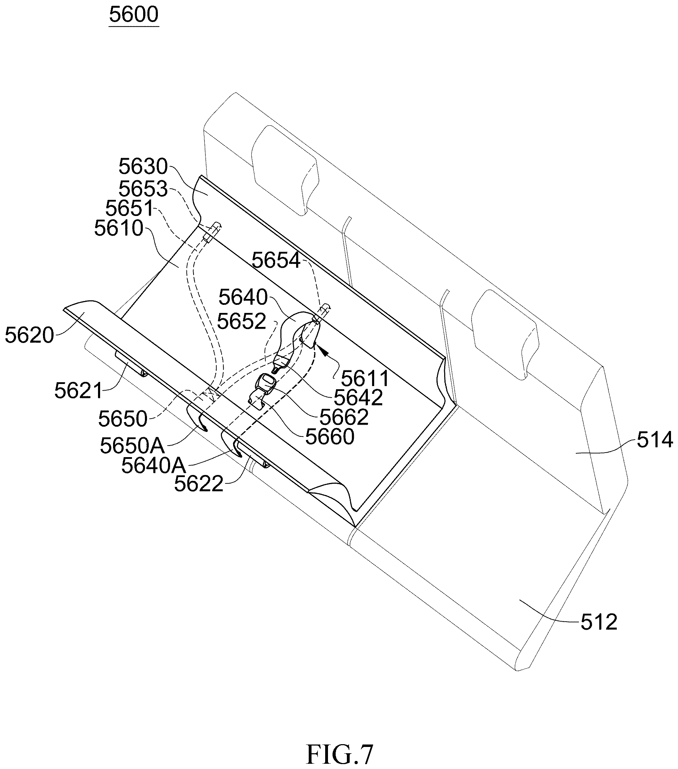

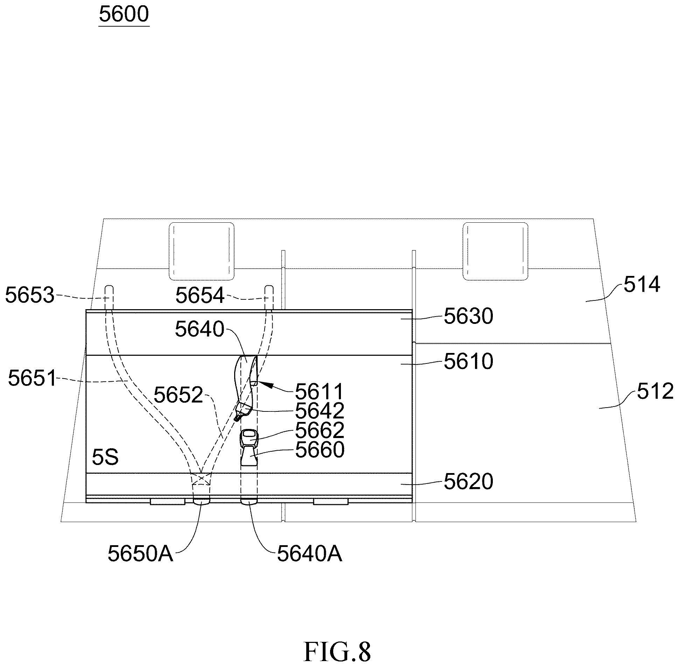

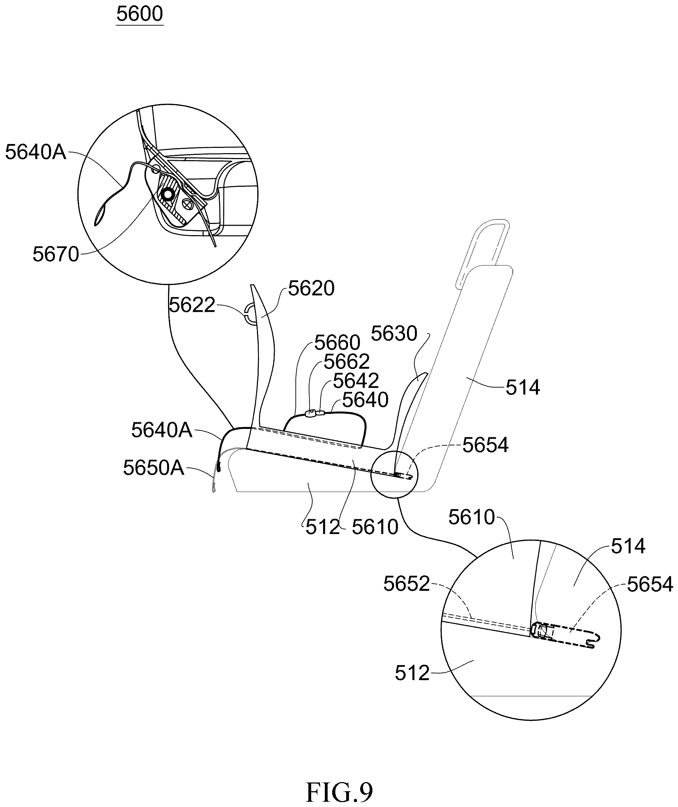

Referring to Figs. 6 to 9, which schematically show an animal transport apparatus 5600 according to an embodiment of the present disclosure. Figs. 6 and 7 are perspective views of the animal transport apparatus 5600 as viewed from different directions, Fig. 8 is a top view of the animal transport apparatus 5600, and Fig. 9 is a side view of the animal transport apparatus 5600. The animal transport apparatus 5600 in this embodiment is similar to the animal transport apparatus 5100 as previously described in structure and composition, comprising a bottom plate 5610 for installating on a rear seat 512 of a vehicle and providing an animal bearing surface 5S, a side plate 5620 connected to a long side 5610B of the bottom plate 5610, a first guide 5621 and a second guide 5622 formed on an outer surface of the side plate 5620, a first opening 5613 and a second opening 5614 defined on the side of the bottom plate 5610 close to a connection with the side plate 5620, a fixing buckle strap 5660 fixed on the bottom plate 5610 and a fixing buckle 5662 thereof, a fixing pull strap 5640 extending inside or below the bottom plate 5610 and passing through the first opening 5613 and a buckle 5642 thereof, an installation strap 5650 extending inside or below the bottom plate 5610 and passing through the second opening 5614, and a positioning buckle 5670.

In this embodiment, the installation strap 5650 of the animal transport apparatus 5600 is made of a soft woven material. It is identical to the previous embodiments, one end of the installation strap 5650 is connected to a first support strap 5651 and a second support strap 5652 by sewing, for example. The first support strap 5651 and the second support strap 5652 respectively comprise a first connector 5653 and a second connector 5654 at respective free ends thereof to be connected to anchor points on the rear seat of the vehicle (not shown). For example, in this embodiment, the soft installation strap 5650 is an ISOFIX soft connecting structure. This ISOFIX soft connecting structure comprises a Y-shaped strap, a first connector, and a second connector. The first connector and the second connector are connected to a first end and a second end of the Y-shaped strap, respectively. A third end of the Y-shaped strap is connected to a positioning buckle. The animal transport apparatus is secured to the ISOFIX anchor points on the rear seat of the vehicle through the first connector and the second connector. The third end of the Y-shaped strap is exposed out of the bottom plate and the side plate.

In this embodiment, the installation strap 5650 extends inside or below the bottom plate 5610, with one end (i.e., the adjustment end 5650A) exposed out of the second opening 5614. The first connector 5653 and the second connector 5654 at the respective free ends of a first support strap 5651 and a second support strap 5652 are ISOFIX connectors, which are respectively connected to the ISOFIX anchor points (not shown) between the seat 512 and the seat backrest 514 of the rear seat of the vehicle, thereby securely installing the animal transport apparatus 5600 on the rear seat of the vehicle. Optionally, in an alternative embodiment, the adjustment end of the fixing pull strap may also be designed to extend from the short side of the bottom plate 5610, which can facilitate the user or the owner to adjust length and tightness of the fixing pull strap from his/her care side.

The difference between this embodiment and the previous embodiments lies in that as shown in the figure, in this embodiment, the animal transport apparatus 5600 also comprises a second side plate 5630 as a supporting side plate, which is connected to a long side 5610A of the bottom plate 5610 and rests against the seat backrest 514 of the vehicle, to provid further support for the animal transport apparatus 5600 in the vehicle. In other words, as shown in Fig. 9, the animal transport apparatus 5600 in this embodiment forms a U-shaped structure in a side view direction, in which the two side plates 5620 and 5630 are generally perpendicular to the bottom plate 5610. The first opening 5623 is formed close to a centerline of the two short sides of the animal transport apparatus 5600 and penetrates through a side wall of the bottom plate 5610. The fixing buckle strap 5660 is secured to the bottom plate 5610, close to the centerline between the two short sides, and is located at a position of the bottom plate 5610 close to the side plate 5620. The bottom plate opening 5611 is correspondingly arranged at a postion of the bottom plate 5610 close to the centerline between the two short sides and near the side plate 5630. As shown in the figures, in this embodiment, a line connecting the bottom plate opening 5611 and a fixing portion of the fixing buckle strap 5660 is generally parallel to the short side of the bottom plate 5610.

As shown in the figures, the fixing pull strap 5640 extends inside or below the bottom plate 5610, with both ends (i.e., a buckling end and an adjustment end 5640A) extending out of the bottom plate opening 5611 and the first opening 5613, respectively. The fixing pull strap 5640 extending from the bottom plate opening 5611 may form a closed harness by buckling with the fixing buckle 5662 of the fixing buckle strap 5660 through its buckle 5642. In this embodiment, since the fixing portion of the fixing buckle strap 5660 and the bottom plate opening 5611 are located near a centerline between the two short sides of the bottom plate 5610, a single closed harness formed by the connection of the fixing buckle strap 5660 and the fixing pull strap 5640 is generally positioned at an abdomen of the animal, which is different from the diagonal extension as described in the previous embodiments (further explained below).

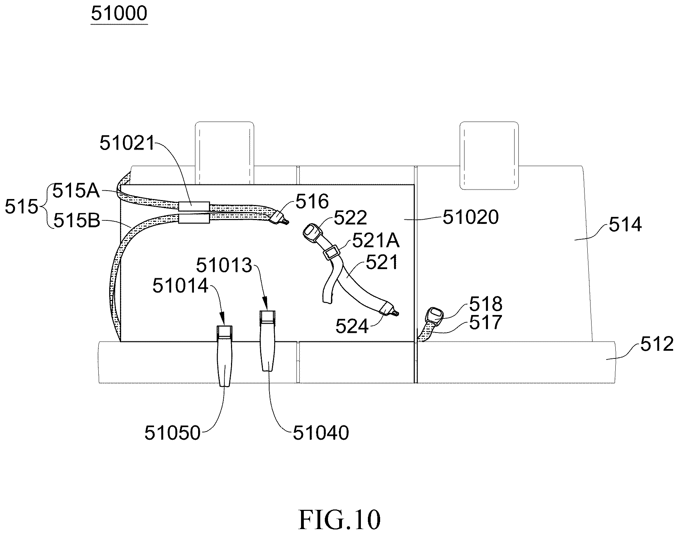

Referring to Fig. 10, which is a front schematic view of an animal transport apparatus 51000 according to an embodiment of the present disclosure, illustrating a mode of securing the animal transport apparatus 51000 to a rear seat of a vehicle.

The animal transport apparatus 51000 has a first opening 51013 and a second opening 51014 on its outer surface, formed on a side of the bottom plate close to a connection with the side plate and penetrating through a wall of the bottom plate. A fixing pull strap 51040 and an installation strap 51050 extending inside or below the bottom plate pass through and extend out of the first opening and the second opening, respectively as described in the previous embodiments. Optionally, in an alternative embodiment, the adjustment ends of the fixing pull strap 51040 may also be designed to extend from the short side of the bottom plate, which can facilitate the user or the owner to adjust the length and the tightness of the fixing pull strap from his/her care side. In this embodiment, as shown in the figure, the side plate 51020 of the animal transport apparatus 51000 is provided with at least one guide (i.e., guide 51201 in this embodiment). During the installation of the animal transport apparatus 51000, in addition to the securing mode, such as the installation strap 51050 or connection frame (not shown) as previously mentioned, an extension strap 521 is used as an accessory to connect with a rear seat safety belt 515 and a rear seat safety buckle strap 517 of the vehicle to further secure the animal transport apparatus 51000 to the rear seat. Specifically, the extension strap 521 is a soft woven strap structure of safety belt material, comprising an adjustment buckle 521A to adjust a length of the extension strap 521 appropriately. The extension strap has end buckles 522, 524 at the two ends thereof to buckle and connect with the safety belt buckle 516 of the rear seat safety belt 515 and the safety buckle strap buckle 518 of the rear seat safety buckle strap 517, respectively. As shown in the figures, the rear seat safety belt 515 generally consists of a shoulder belt 515A and an abdominal belt 515B, which after being pulled out, are extended together through the guide 51021 on the side plate 51020, and buckled with the end buckle 522 of the extension strap through the safety belt buckle 516. The extension strap 521 is further connecte with the safety buckle strap buckle 518 of the rear seat by buckling the end buckle 524 at its other end, thereby connecting to the rear seat safety buckle strap 517 and securing it in place. In this embodiment, in addition to the installation structure of the animal transport apparatus 51000 itself (e.g., the installation strap or the rigid connection frame), the rear seat safety belt of the vehicle itself may also be further used to secure the animal transport apparatus 51000, and may be positioned through the guide on the side plate, thereby preventing the rear seat safety belt from moving arbitrarily to affect installation stability of the animal transport apparatus 51000.

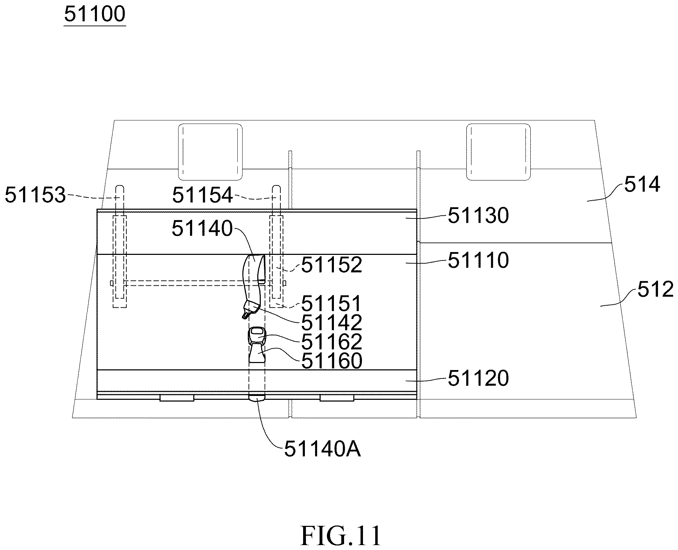

Optionally, the animal transport apparatus of the present disclosure may also be securely installed on the vehicle rear seat through a rigid connecting structure. Referring to Fig. 11, which is a top schematic view of an animal transport apparatus 51100 according to another embodiment of the present disclosure. The animal transport apparatus 51100 in this embodiment is similar to the aforementioned animal transport apparatuss 5100, 5400, 5600 in structure and composition, comprising: a bottom plate 51110 and two side plates 51120, 51130, fixing buckle strap 51160 and a fixing buckle 51162, fixing pull strap 51140 (comprising an adjustment end 51140A) and a buckle 51142, etc. The difference between this embodmetn and the previous embodimetns lies in that, in this embodiment, the animal transport apparatus 51100 is connected to the seat through a connection frame (e.g., ISOFIX connection frame) positioned below the bottom plate 51110, replacing the soft installation strap of the previous embodiments. Specifically, the connection frame is a U-shaped rigid frame composed of a main frame 51151 and a connecting frame 51152. The connecting frame 51152 has a first connector 51153 and a second connector 51154 respectively provided at the rear end thereof (i.e., en end close to the seat backrest 514) to connect and fix to the rear seat of the vehicle. In this embodiment, the first connector 51153 and the second connector 51154 may be ISOFIX connectors, respectively connected to the ISOFIX anchor points (not shown) between the seat 512 and the seat backrest 514 of the rear seat of the vehicle, thereby securely installing the animal transport apparatus 51100 on the rear seat of the vehicle. Optionally, in an alternative embodiment, the adjustment end of the fixing pull strap may also be designed to extend from the short side of the bottom plate 51110, which can facilitate the user or the owner to adjust the length and the tightness of the fixing pull strap from his/her care side.

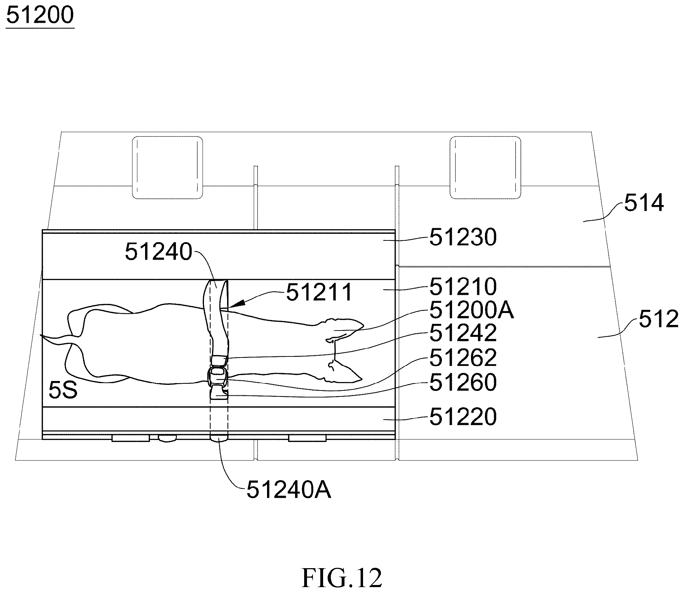

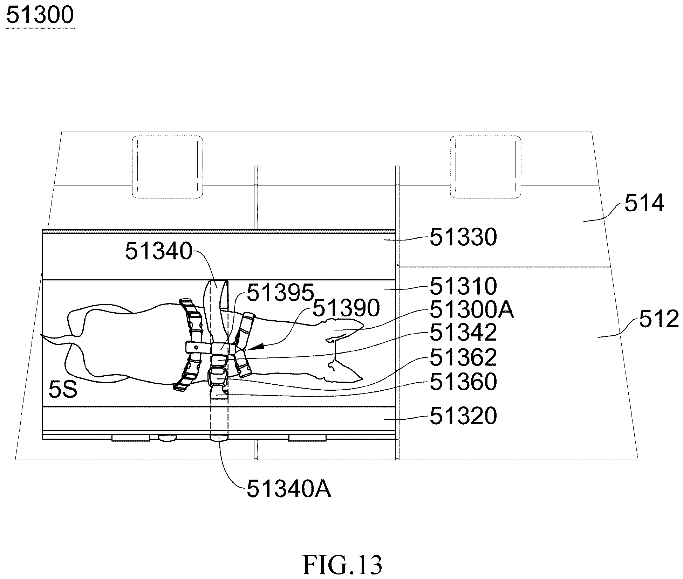

Referring to Figs. 12 and 13, which schematically show different usage scenarios of the animal transport apparatus in the embodiments previously described in the present disclosure.

As shown in Fig. 12, this embodiment pertains to a U-shaped animal transport apparatus 51200 with a single-strap positional fixing structure, which comprises a bottom plate 51210, and a first side plate 51220 and a second side plate (supporting side plate) 51230 connected to two long sides of the bottom plate 51210, respectively. Compared to the embodiment shown in Fig. 5, in this embodiment, the fixing pull strap 51240 extends inside or below the bottom plate 51210, with one end (i.e., adjustment end 51240A) exposed out of a first opening (not shown) to adjust length and tightness of the fixing pull strap, and is secured in place by a positioning buckle (not shown), as described in the previous embodiments. Optionally, in an alternative embodiment, the adjustment end of the fixing pull strap may also be designed to extend from the short side of the bottom plate 51210, which can facilitate the user or the owner to adjust the length and the tightness of the fixing pull strap from his/her care side. The other end (i.e., buckling end) of the fixing pull strap 51240 extends out of the bottom plate opening 51211 and is connected to the fixing buckle 51262 through the buckle 51242 at the other end, thereby connecting the fixing pull strap 51240 and the fixing buckle strap 51260 to secure an animal or pet (e.g., but not limited to a dog) 51200A placed on the animal bearing surface 5S defined by the bottom plate 51210.

As above described, in this embodiment, since the fixing portion of the fixing buckle strap 51260 and the bottom plate opening 51211 are close to the centerline between the two short sides of the bottom plate 51210, the single closed harness is roughly located at the abdomen of the animal 51200A. Specifically, as shown in Fig. 12, when the user tightens the fixing pull strap 51240 through the adjustment end 51240A, the fixing pull strap 51240 makes close contact with a right abdominal area of the animal 51200A, extends across a body of the animal 51200A and contact part of the body to provide support, and makes contact with a left abdominal area of the animal. That is, as shown in the figure, through the tightening effect of the fixing pull strap 51240 and its connection with the fixing buckle strap 51260, a strap-like support from the right abdominal area to the left abdominal area is provided for the animal 51200A, to securely carry the animal 51200A on the bottom plate 51210 without significant movement or impact due to sudden changes in the vehicle speed. Especially when the animal 51200A has a relatively large physique, the single-loop contact support formed by the fixing pull strap 51240 and fixing buckle strap 51260 in this embodiment provides a more stable and secure support for the animal.

Optionally, the owner may dress the pet in a wearable device (e.g., a pet vest), and by combining the fixing pull strap and fixing buckle of the animal transport apparatus of the present disclosure with various parts of webbings or webbing loops on the wearable device, to provide further fixing effect for the animal or the pet in a moving vehicle.

Referring to Fig. 13, the animal transport apparatus 51300 in this embodiment mainly consists of a bottom plate 51310 and two side plates 51320, 51330. After securing the animal transport apparatus 51300 to the rear seat 512 and against the seat backrest 514, the fixing pull strap 51340 passes through a webbing loop on a central webbing 51395 of the pet vest 51390 worn by the animal 51300A (or directly through a gap between the central webbing 51395 and the body of the animal 51300A), then is connected to the fixing buckle strap 51362 of the fixing buckle strap 51360 through a buckle 51342 and adjust the length and tightness by the adjustment end 51340A. In addition to providing contact support from the right abdominal area to the left abdominal area of the animal 51300A on the animal bearing surface 5S, in this embodiment, longitudinal positioning of the animal 51300A can be achieved by passing the fixing pull strap 51340 through the webbing loop or directly through the gap between the central webbing 51395 and the body of the animal 51300A, to prevent the animal 51300A from moving arbitrarily in a direction parallel to the rear seat and a travelling direction (i.e., a direction parallel to the short side of the bottom plate). Optionally, in an alternative embodiment, the adjustment end of the fixing pull strap may also be designed to extend from the short side of the bottom plate 51310, which can facilitate the user or the owner to adjust the length and the tightness of the fixing pull strap from his/her care side.

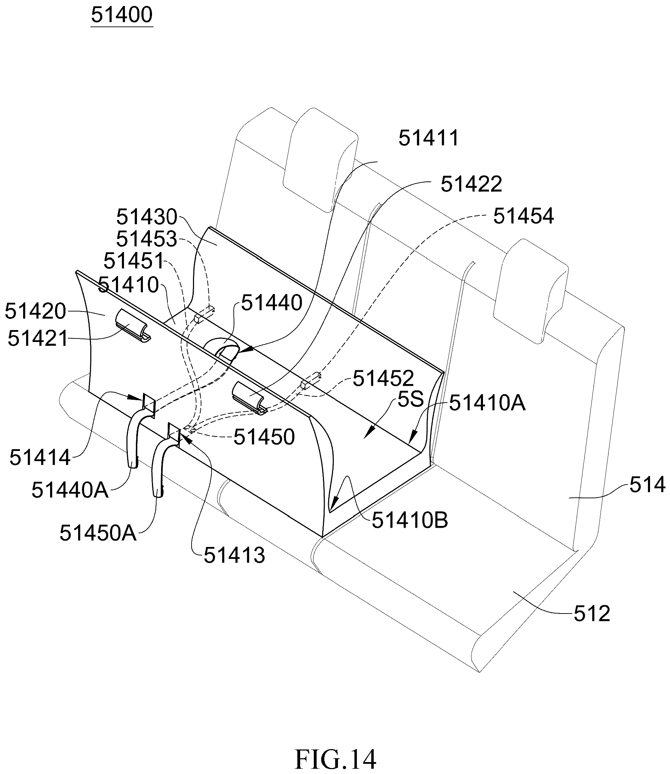

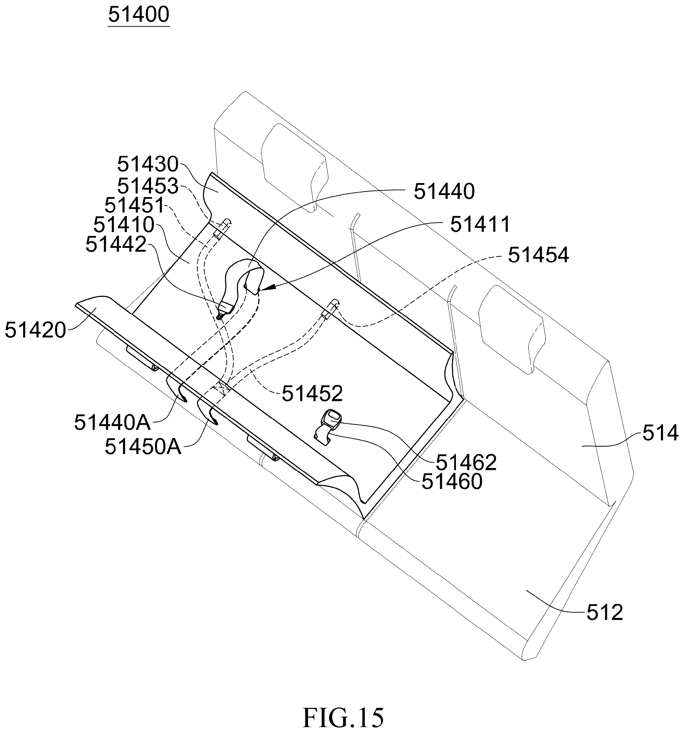

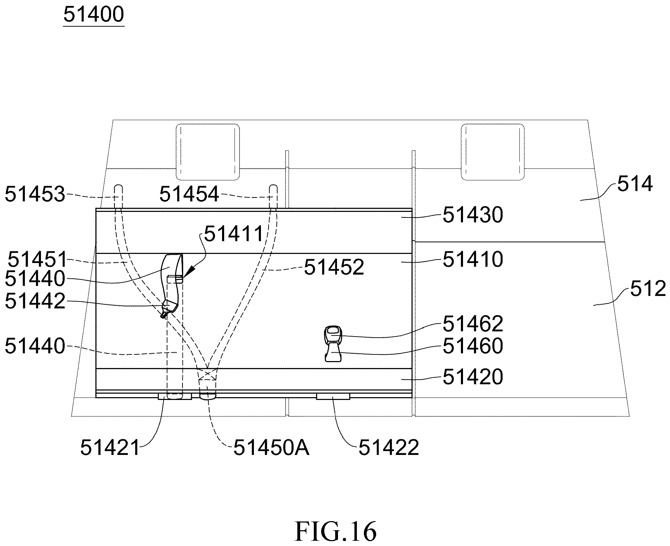

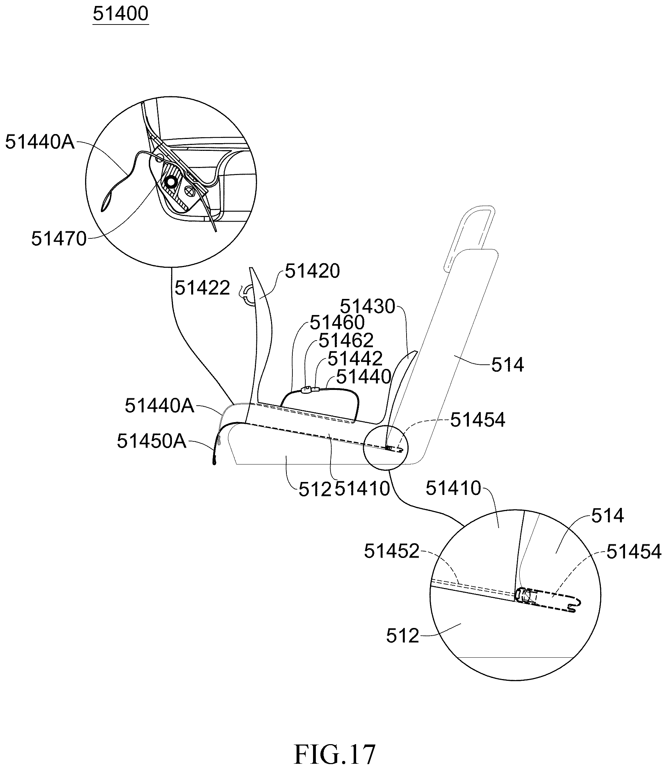

Referring to Figs. 14 to 17, which schematically show an animal transport apparatus 51400 according to an embodiment of the present disclosure. Figs. 14 and 15 are perspective views of the animal transport apparatus 51400 as viewed from different directions, Fig. 16 is a top view of the animal transport apparatus 51400, and Fig. 17 is a side view of the animal transport apparatus 51400.

The animal transport apparatus 51400 in this embodiment is similar to the aforementioned animal transport apparatus 5600 in structure and composition, comprising a bottom plate 51410 for installation on a rear seat 512 of a vehicle and providing an animal bearing surface 5S, a side plate 51420 connected to a long side 51410B of the bottom plate 51410, a first guide 51421 and second guide pieces 51422 formed on an outer surface of the side plate 51420, a first opening 51413 and a second opening 51414, a fixing buckle strap 51460 fixed to the bottom plate 51410 and its fixing buckle 51462, a fixing pull strap 51440 extending below the bottom plate 51410 and its buckle 51442, an installation strap 51450 extending below the bottom plate 51410 (comprising adjustment end 51450A), and a positioning buckle 51470. Similar to the animal transport apparatus 5600, the animal transport apparatus 51400 in this embodiment forms a U-shaped structure in a side view direction, in which the two side plates 51420, 51430 are approximately perpendicular to the bottom plate 51410, to support the U-shaped structure of the animal transport apparatus 51400 on the rear seat of the vehicle stably.

In this embodiment, the installation strap 51450 of the animal transport apparatus 51400 is made of a soft woven material. Identical to the previous embodiments, one end of the installation strap 51450 is connectedto a first support strap 51451 and a second support strap 51452 by sewing, for example. The first support strap 51451 and the second support strap 51452 respectively comprise a first connector 51453 and a second connector 51454 at the repective free ends, to be connected and fixed to the anchor points on the rear seat of the vehicle (not shown). For example, in this embodiment, the soft installation strap 51450 is an ISOFIX soft connecting structure. The installation strap 51450 extends inside or below the bottom plate 51410 and has one end (i.e., the adjustment end 51450A) exposed out of the second opening 51414. The first connector 51453 and the second connector 51454 at the free ends of the first support strap 51451 and the second support strap 51452 are ISOFIX connectors, and are respectively connected to the ISOFIX anchor points (not shown) between the seat 512 and the seat backrest 514 of the vehicle rear seat, thereby securely installing the animal transport apparatus 51400 on the rear seat of the vehicle.

The difference between this embodiment and the previous embodiments lies in that, as shown in the figure, in this embodiment, the bottom plate opening 51411 is formed on a position of the bottom plate 51410, corresponding to the second opening 51414 and close to the side plate 51430. In other words, a line connecting the bottom plate opening 51411 and the second opening 51414 is parallel to a short side of the bottom plate 51410. A fixing portion of the fixing buckle strap 51460 and the fixing buckle 51462 is located at a diagonally opposite end of the bottom plate 51410, relative to the bottom plate opening 51411. The fixing pull strap 51440 extends inside or below the bottom plate 51410, with an adjustment end 51440A exposed out of the second opening 51414, to be further secured in place by the positioning buckle 51470 to prevent the fixing pull strap from being arbitrarily pulled. Optionally, in an alternative embodiment, the adjustment end of the fixing pull strap may also be designed to extend from the short side of the bottom plate 51410, which can facilitate the user or the owner to adjust the length and the tightness of the fixing pull strap from his/her care side. The buckling end of the fixing pull strap 51440 may extend out of the bottom plate opening 51411 and is buckled with the fixing buckle strap 51460 and the fixing buckle 51462 located at the diagonally opposite end of the bottom plate 51410 through its buckle 51442, thereby forming a closed harness that diagonally extends on the animal bearing surface 5S of the bottom plate 51410 (further explained below).

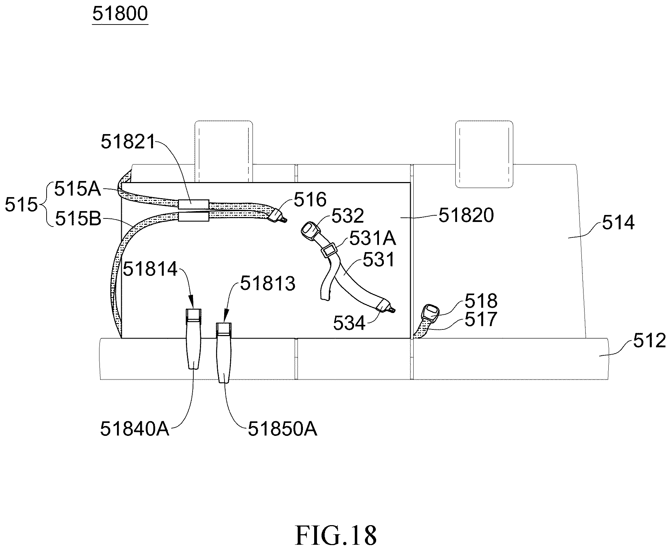

Referring to Fig. 18, which is a front schematical view of an animal transport apparatus 51800 according to an embodiment of the present disclosure, illustrating a mode for securing the animal transport apparatus 51800 to a rear seat of a vehicle.

A first opening 51813 and a second opening 51814 of the animal transport apparatus 51800 are formed on a side of the bottom plate connected to the side plate 51820, respectively. The installation strap and the fixing pull strap extending inside or below the bottom plate may pass through and extend out of the first opening and the second opening, to allow an adjustment end 51850A of the installation strap and an adjustment end 51840A of the fixing pull strap to be exposed out of the first opening 51813 and the second opening 51814, respectively, as described in the previous embodiments. Optionally, in an alternative embodiment, the adjustment end of the fixing pull strap may also be designed to extend from the short side of the bottom plate, which can facilitate the user or the owner to adjust the length and the tightness of the fixing pull strap from his/her care side. In this embodiment, as shown in the figure, the side plate 51820 of the animal transport apparatus 51800 is provided with at least one guide (i.e., guide 51821 in this embodiment). During the installation of the animal transport apparatus 51800, in addition to the securing mode, such as the installation strap 51850 or the connection frame (not shown) as previously described, an extension strap 531 is used as an accessory to connect with a rear seat safety belt 515 and a rear seat safety buckle strap 517 of the vehicle to further secure the animal transport apparatus 51800 to the rear seat. The extension strap 531 is a soft woven structure, comprising an adjustment buckle 531A on the extension strap 531 to adjust the length of the extension strap 531 appropriately. The extension strap has end buckle 532, 534 on both ends to buckle and connect with the safety belt buckle 516 of the rear seat safety belt 515 and the safety buckle strap buckle 518 of the rear seat safety buckle strap 517. As shown in the figures, the rear seat safety belt 515 generally consists of a shoulder belt 515A and an abdominal belt 515B, which after being pulled out, are extended together through the guide 51821 on the side plate 51820 to be buckled with the end buckle 532 of the extension strap 531 through the safety belt buckle 516. The end buckle 534 on the other end of the extension strap 531 is connected to the safety buckle strap buckle 518 of the rear seat, thereby connecting to the safety buckle strap 517 of the rear seat and securing it in place. In this embodiment, the extension strap 531 is an independent accessory, in addition to that the extension strap 531 is connected to the rear seat safety belt 515 and the rear seat safety buckle strap 517 through the end buckles 532, 534, the extension strap 531 is not connected and fixed to the animal transport apparatus 51800 (e.g., side plate 51820). In this embodiment, in addition to the installation structure of the animal transport apparatus 51800 itself (e.g., the installation strap or the rigid connection frame), the animal transport apparatus 51800 may be further secured by connecting the extension strap to the rear seat safety belt and the rear seat safety buckle strap of the vehicle, utilizing the rear seat safety belt of the vehicle, additionally, the rear seat safety belt may be positioned by the guide on the side plate, thereby preventing the rear seat safety belt from moving randomly to affect the stability of the installation of the animal transport apparatus 51800.

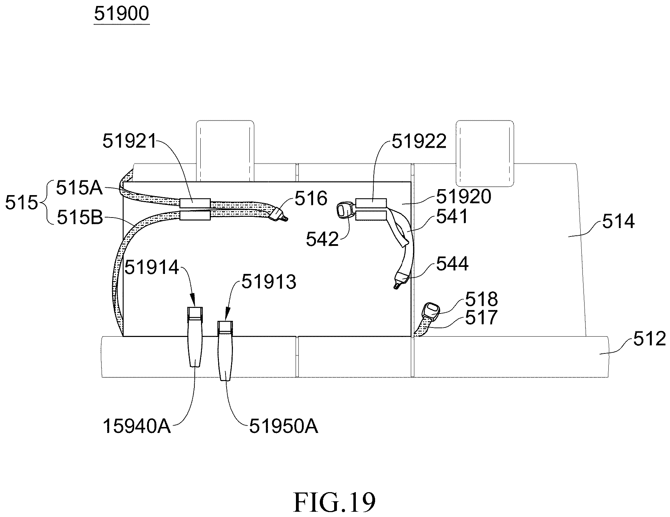

Referring to Fig. 19, which is a front schematic view of an animal transport apparatus 51900 according to an embodiment of the present disclosure, illustrating a mode of securing the animal transport apparatus 51900 to a rear seat of a vehicle. The animal transport apparatus 51900 in this embodiment is similar to the animal transport apparatus 51800 as aforementioned in structure and composition, comprising a side plate 51920, a first opening 51913 and a second opening 51914, and an adjustment end 51950A of the installation strap and an adjustment end 51940A of the fixing pull strap respectively extended out of the first opening and the second opening. In this embodiment, the side plate 51920 is provided with a first guide 51921 and a second guide 51922. The shoulder belt 515A and the abdomincal belt 515B of the rear seat are drawn out and extend together through the first guide 51921 to be positioned therebetween, and the extension strap 541 passes through the second guide 51922 to be positioned therein, ensuring that the extension strap 541 remains stable and unmovable arbitrarily when the end buckles 542, 544 are buckled and connected to the safety belt buckle 516 and safety buckle strap buckle 518, respectively. Similarly, the length of the extension strap 541 may be adjusted via an adjustment buckle (not shown) on the extension strap, as described in the previous embodiments. Optionally, in an alternative embodiment, the adjustment end of the fixing pull strap may also be designed to extend from the short side of the bottom plate, which can facilitate the user or the owner to adjust the length and the tightness of the fixing pull strap from his/her care side.

In this embodiment, the second guide 51922 of the animal transport apparatus 51900 is designed in width and space to allow the extension strap 541 to be threaded therethrough, and allow the end buckle 542 of the extension strap 541 to be snapped onto an outer edge of the second guide 51922, thereby connecting the extension strap 541 to the side plate 51920 of the animal transport apparatus 51900. Alternatively, in other embodiments, the extension strap may also be directly secured to the side plate of the animal transport apparatus in appropriate ways, such as but not limited to: adhesive bonding, nailing, or locking connections, etc., to ensure that the extension strap and the rear seat safety belt and the rear seat safety buckle strap connected at both ends of the extension strap maintain a high stability as the vehicle is traveling.

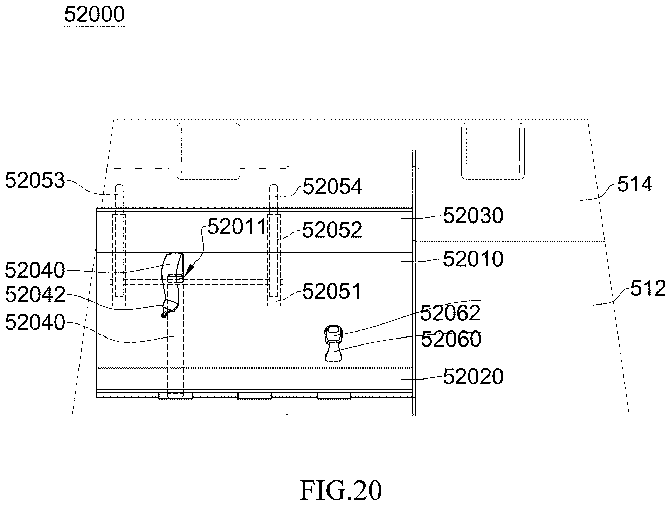

Optionally, the animal transport apparatus of the present disclosure may also be securely installed on the rear seat of the vehicle through a rigid connecting structure. Referring to Fig. 20, which is a top schematic view of an animal transport apparatus 52000 according to another embodiment of the the present disclosure. The animal transport apparatus 52000 in this embodiment is similar to the aforementioned animal transport apparatus 51400 in structure and composition, comprising: a bottom plate 52010 and two side plates 52020, 52030, a fixing buckle strap 52060 and its fixing buckle 52062, a fixing pull strap 52040 and its buckle 52042, and a bottom plate opening 52011 and a fixing portion of the fixing buckle strap 52060. The difference between this embodiment and the previous embodimetns lies in that, in this embodiment, the animal transport apparatus 52000 is connected to a seat through a connection frame (e.g., ISOFIX connection frame) below the bottom plate 52010 in replacement of the soft installation strap of the previous embodiment. Specifically, the connection frame is a U-shaped rigid frame composed of a main frame 52051 and a connecting frame 52052. A first connector 52053 and a second connector 52054 are respectively provided at the rear end of the connecting frame 52052 (i.e., one end close to the seat backrest 514) to be connected and fixed to the rear seat of the vehicle. In this embodiment, the first connector 52053 and the second connector 52054 may be ISOFIX connectors, respectively connected to the ISOFIX anchor points (not shown) between the seat 512 and the seat backrest 514 of the rear seat of the vehicle, thereby securely installing the animal transport apparatus 52000 on the rear seat of the vehicle. Optionally, in an alternative embodiment, the adjustment end of the fixing pull strap may also be designed to extend from the short side of the bottom plate 52010, which can facilitate the user or the owner to adjust the length and the tightness of the fixing pull strap from his/her care side.

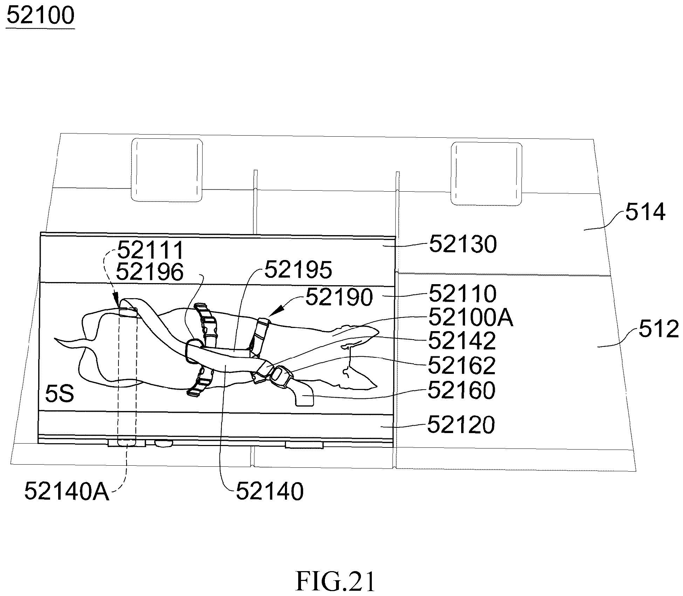

Referring to Figs. 21 to 24, which schematically show various usage scenarios of the animal transport apparatus in the previous embodiments of the present disclosure.

In this embodiment, the owner may dress the pet in a wearable device (e.g., a pet vest). The fixing pull strap and fixing buckle of the animal transport apparatus of the present disclosure are combined with the wearable device, to provide further fixing effect for the animal or the pet in a moving vehicle.

As shown in Fig. 21, in this embodiment, the bottom plate opening 52111 and the fixing portion of the fixing buckle strap 52160 are separately located at diagonal positions on the bottom plate 52110, so the fixing pull strap 52140 extends below the bottom plate 52110 in a direction parallel to the short side of the bottom plate 52110. The fixing pull strap 52140 has one end (i.e., the adjustment end 52140A) exposed out of the second opening (not shown) and the side plate 52120 and fixed in place by the positioning buckle (not shown), and the other end (i.e., the buckling end) extended out of the bottom plate opening 52111 on the bottom plate 52110 and buckled and connected to the fixing buckle 52162 at a diagonal far end on the bottom plate 52110 through its buckle 52142 at this end, thereby connecting the fixing pull strap 52140 and the fixing buckle strap 52160 to secure the animal or the pet (but not limited to a dog) 52100A placed on the animal bearing surface 5S defined by the bottom plate 52110. Optionally, in an alternative embodiment, the adjustment end of the fixing pull strap may also be designed to extend out of the bottom plate 52110 from the short side of the bottom plate 52110, which can facilitate the user or the owner to adjust the length and the tightness of the fixing pull strap from his/her care side.

As shown in Fig. 21, the owner may dress the pet in a wearable device, such as a pet vest 52190. In this embodiment, after the animal transport apparatus 52100 is fixed to the rear seat 512 and arranged against the seat backrest 514, the fixing pull strap 52140 passes through a ring 52196 on a central webbing 52195 of the pet vest 52190 worn by the animal 52100A, and then connected to the fixing buckle 52162 of the fixing buckle strap 52160 at a diagonally opposite end on the bottom plate 52100 via the buckle 52142. In this embodiment, the animal transport apparatus 52100 may provide diagonal contact support from a right scapula to a left abdomen close to a hind leg of the animal 52100A on the animal bearing surface 5S, to securely carry the animal 52100A on the animal bearing surface 5S of the bottom plate 52110 without significant movement or impact due to sudden changes in the vehicle speed. Furthermore, by passing the fixing pull strap 52140 through the ring 52196 on the central webbing 52195, the animal 52100A may be further limited in a longitudinal direction of its body, to prevent the animal 52100A from moving arbitrarily in a direction parallel to the rear seat and in a traveling direction (i.e., a direction parallel to the short side of the bottom plate).

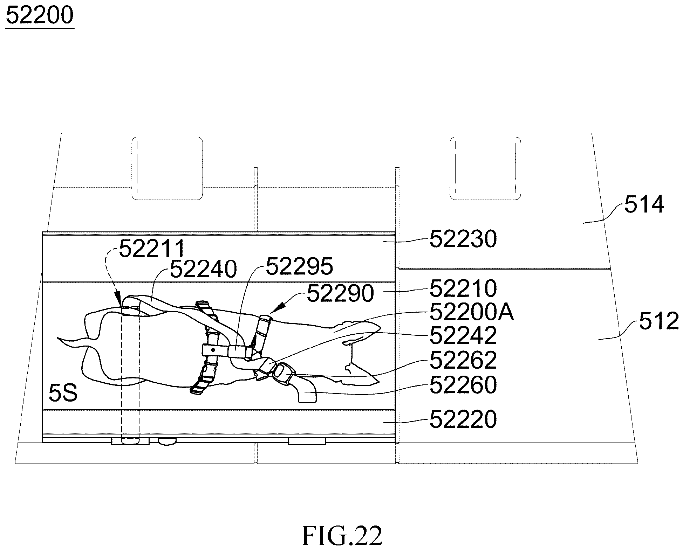

As shown in Fig. 22, the animal transport apparatus 52200 in this embodiment is identical to the aforementioned animal transport apparatus 52100 in configuration and arrangement, also comprising a bottom plate 52210 and two side plates 52220, 52230, with a bottom plate opening 52211 located at a diagonally opposite end to a fixing portion of the fixing buckle strap 52260 and its fixing buckle 52262 on the bottom plate 52210. According to this embodiment, after the animal transport apparatus 52200 is fixed to the rear seat 512 and arranged against the seat backrest 514, the fixing pull strap 52240 passes through the webbing loop on the central webbing 52295 of the pet vest 52290 worn by the animal 52200A, and then connected to the fixing buckle 52262 of the fixing buckle strap 52260 at the diagonally opposite end on the bottom plate 52200 via the buckle 52242. In this embodiment, the animal transport apparatus 52200 may provide diagonal contact support from a right scapula to a left abdomen close to a hind leg of the animal 52200A on the animal bearing surface 5S, to securely carry the animal 52200A on the animal bearing surface 5S of the bottom plate 52210 without significant movement or impact due to sudden changes in the vehicle speed. Additionally, by passing the fixing pull strap 52240 through the webbing loop on the central webbing 52295, the animal 52200A can be further limited in a longitudinal direction of its body, to prevent the animal 52200A from moving arbitrarily in a direction parallel to the rear seat and in a travelling direction (i.e., a direction parallel to the short side of the bottom plate). Optionally, in an alternative embodiment, the adjustment end of the fixing pull strap may also be designed to extend from the short side of the bottom plate 52210, which can facilitate the user or the owner to adjust the length and the tightness of the fixing pull strap from his/her care side.

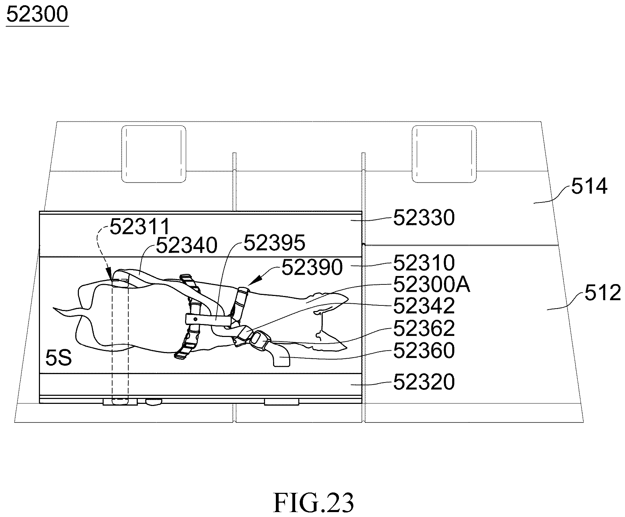

As shown in Fig. 23, the animal transport apparatus 52300 in this embodiment is identical to the aforementioned animal transport apparatuss 52100, 52200 in configuarion and arrangement, also comprising a bottom plate 52310 and two side plates 52320, 52330, with a bottom plate opening 52311 at a diagonally opposite end to a fixing portion of the fixing buckle strap 52360 and its fixing buckle 52362 on the bottom plate 52310. According to this embodiment, after the animal transport apparatus 52300 is fixed to the rear seat 512 and arranged against the seat backrest 514, the fixing pull strap 52340 passes through a gap between the central webbing 52395 of the pet vest 52390 worn by the animal 52300A and the animal's body, and then connected to the fixing buckle 52362 of the fixing buckle strap 52360 at the diagonally opposite end on the bottom plate 52300 via the buckle 52342. In this embodiment, the animal transport apparatus 52300 may provides diagonal contact support from the right scapula to the left abdomen near the hind leg for the animal 52300A positioned on the animal bearing surface 5S, allowing the animal 52300A to be securely carried on the animal bearing surface 5S of the bottom plate 52310 without significant movement or impact due to sudden changes in the vehicle speed. Furthermore, by passing the fixing pull strap 52340 through a gap between the central webbing 52395 and the animal's body, the animal 52300A may be further limited in a longitudinal direction of its body, to prevent the animal 52300A from moving arbitrarily in a direction parallel to the rear seat and in a traveling direction (i.e., a direction parallel to the short side of the bottom plate). Optionally, in an alternative embodiment, the adjustment end of the fixing pull strap may also be designed to extend out of the bottom plate 52310 from the short side of the bottom plate 52310, which can facilitate the user or the owner to adjust the length and the tightness of the fixing pull strap from his/her care side.

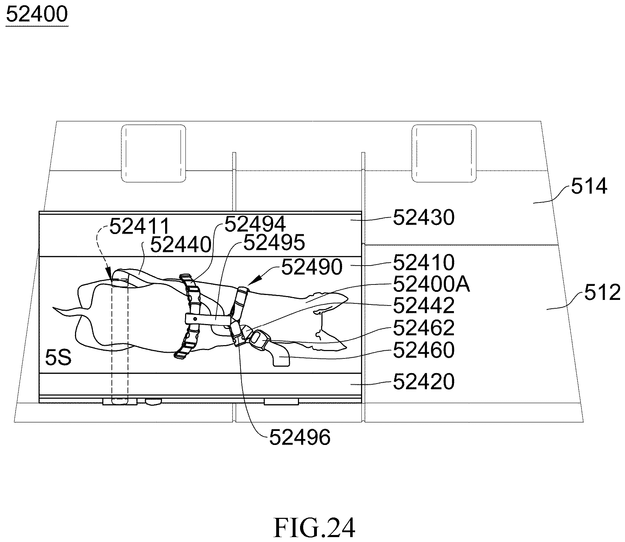

As shown in Fig. 24, the animal transport apparatus 52400 in this embodiment is identical to the aforementioned animal transport apparatuss 52100 to 52300 in configuration and arrangement, also comprising a bottom plate 52410 and two side plates 52420, 52430, with a bottom plate opening 52411 at the diagonally opposite end to the fixing portion of the fixing buckle strap 52460 and its fixing buckle 52462 on the bottom plate 52410. According to this embodiment, after the animal transport apparatus 52400 is fixed to the rear seat 512 and arranged against the seat backrest 514, the fixing pull strap 52440 passes through a gap between a left abdominal belt 52494 of the pet vest 52490 worn by the animal 52400A and the animal's body, and then through a gap between a central webbing 52495 of the pet vest 52490 and the animal's body, and again through a gap between a right shoulder (or scapula) belt 52496 of the pet vest 52490 and the animal's body, and then connected to the fixing buckle 52462 of the fixing buckle strap 52460 at the diagonally opposite end on the bottom plate 52400 via the buckle 52442. In this embodiment, the animal transport apparatus 52400 may provide diagonal contact support from a right scapula to a left abdomen close to a hind leg of the animal 52400A on the animal bearing surface 5S, to aecurely carry the animal 52400A on the animal bearing surface 5S of the bottom plate 52410 without significant movement or impact due to sudden changes in the vehicle speed. Furthermore, by passing the fixing pull strap 52440 through the gaps between the left abdominal belt 52494, the central webbing 52495, and the right shoulder (or scapula) belt 52496 of the pet vest 52490 and the animal's body, the animal 52400A may be further limited in ta longitudinal direction of its body, to prevent the animal 52400A from moving arbitrarily in a direction parallel to the rear seat and in a traveling direction (i.e., a direction parallel to the short side of the bottom plate). Optionally, in an alternative embodiment, the adjustment end of the fixing pull strap may also be designed to extend out of the bottom plate 52410 from the short side of the bottom plate 52410, which can facilitate the user or the owner to adjust the length and the tightness of the fixing pull strap from his/her care side.

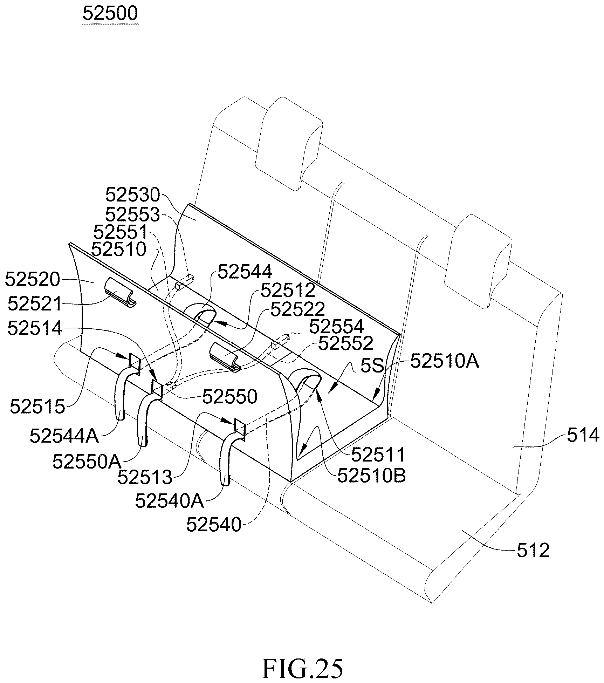

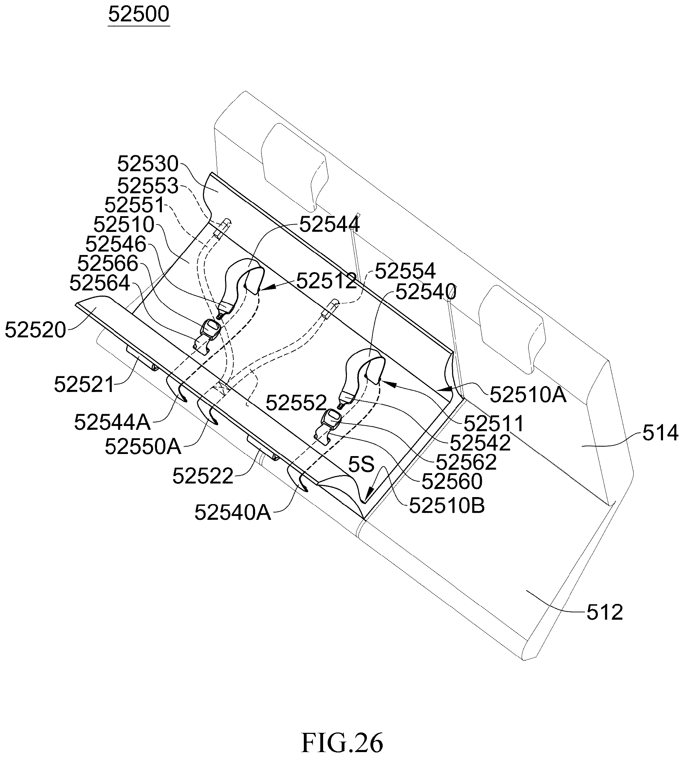

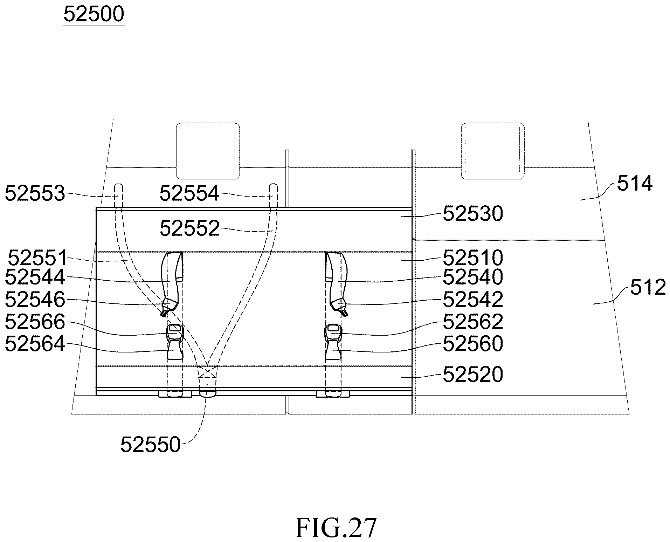

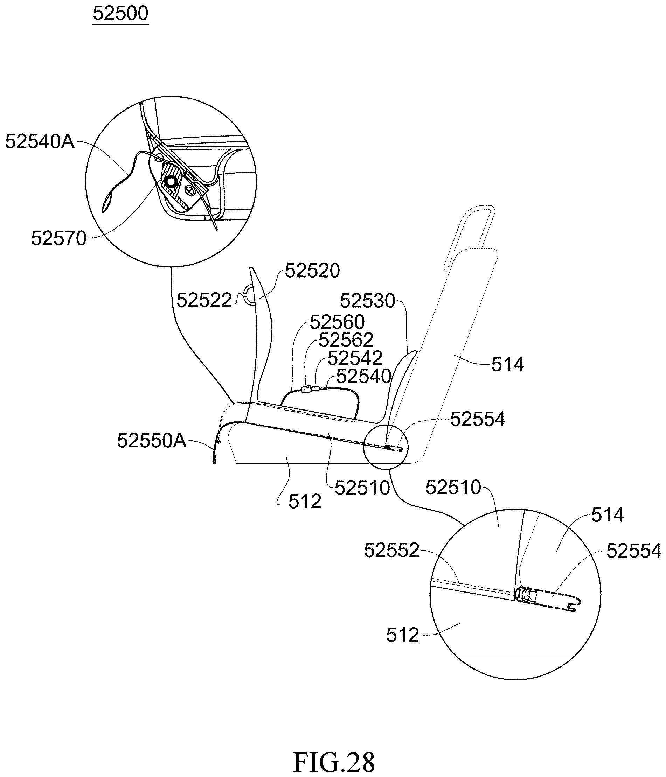

Referring to Figs. 25 to 28, which schematically show an animal transport apparatus 52500 according to an embodiment of the present disclosure. Figs. 25 and 26 are perspective views of the animal transport apparatus 52500 as viewed from different directions, Fig. 27 is a top view of the animal transport apparatus 52500, and Fig. 28 is a side view of the animal transport apparatus 52500.

The animal transport apparatus 52500 in this embodiment is similar to the aforementioned animal transport apparatuss 5600, 51400 in structure and composition, comprising a bottom plate 52510 for installation on a rear seat 512 of a vehicle and providing an animal bearing surface 5S, a side plate 52530 connected to a long side 52510A of the bottom plate 52510, a side plate 52520 connected to a long side 52510B of the bottom plate 52510, a first guide 52521 and a second guide 52522 formed on an outer surface of the side plate 52520, a fixing buckle strap 52560 fixed to the bottom plate 52510 and its fixing buckle 52562, a fixing pull strap 52540 extending below the bottom plate 52510 and its buckle 52542, an installation strap 52550 extending below the bottom plate 52510, and a positioning buckle 52570. Similar to the animal transport apparatuss 5600, 1400, the animal transport apparatus 52500 in this embodiment is a U-shaped structure in a side view direction, with the two side plates 52520, 52530 being approximately perpendicular to the bottom plate 52510. This U-shaped structure of the animal transport apparatus 52500 can be stably supported on the rear seat of the vehicle.

In this embodiment, the installation strap 52550 of the animal transport apparatus 52500 is made of a soft woven material. Similar to the previous embodiments, one end of the installation strap 52550 is connected to a first support strap 52551 and a second support strap 52552 by sewing, for example. A first connector 52553 and a second connector 52554 are respectively arranged at free ends of the first support strap 52551 and the second support strap 52552 to be connected and fixed to anchor points on the rear seat (not shown) of the vehicle. For example, in this embodiment, the soft installation strap 52550 is an ISOFIX soft connecting structure, which extends inside or below the bottom plate 52510 and has one end (i.e., the adjustment end 52550A) exposed out of the second opening 52514. The first connector 52553 and the second connector 52554 at the free ends of the first support strap 52551 and the second support strap 52552 are ISOFIX connectors. The first connector 52553 and the second connector 52554 are respectively connected to the ISOFIX anchor points (not shown) between the seat 512 and the seat backrest 514 of the rear seat of the vehicle, thereby securely installing the animal transport apparatus 52500 on the rear seat of the vehicle.

The difference between this embodiment and the previous embodiments lies in that, as shown in the figure, the animal transport apparatus 52500 in this embodiment is a "double-strap parallel" positional fixing structure, that is, the bottom plate 52510 has a first bottom plate opening 52511 and a second bottom plate opening 52512 spaced apart from each other, which are positioned on a position of the bottom plate 52510 close to the side plate 52530, and through which the buckle ends of the first fixing pull strap 52540 and the second fixing pull strap 52544 extend. The animal transport apparatus 52500 comprises a first fixing buckle strap 52560 and a second fixing buckle strap 52564, which are secured to a position on the bottom plate 52510 close to the side plate 52520, and respectively corresponding to the first bottom plate opening 52511 and the second bottom plate opening 52512. In other words, a line connecting the first bottom plate opening 52511 and a fixing portion of the first fixing buckle strap 52560, and a line connecting the second bottom plate opening 52512 and a fixing portion of the second fixing buckle strap 52564 are both parallel to the short side of the bottom plate 52510. In this way, the first fixing pull strap 52540 and the second fixing pull strap 52544 extend below the bottom plate 52510, the respective buckle ends thereof extend from the first bottom plate opening 52511 and the second bottom plate opening 52512, and are buckled to the fixing buckles 52562, 52566 of the first fixing buckle strap 52560 and the second fixing buckle strap 52564 via their respective buckles 52542 and 52546, so that two closed harnesses in parallel are formed. Optionally, in an alternative embodiment, the adjustment end of the fixing pull strap may also be designed to extend from the short side of the bottom plate 52510, which can facilitate the user or the owner to adjust the length and the tightness of the fixing pull strap from his/her care side.

As shown in the figures, in this embodiment, the bottom plate 52510 has a first opening 52513, a second opening 52514, and a third opening 52515 on a side close to a connection with the side plate 52520, penetrating through a wall part of the corresponding bottom plate to allow the first fixing pull strap 52540, the installation strap 52550, and the second fixing pull strap 52544 extend inside or below the bottom plate 52510 so as to pass through and extend outs of the side of the animal transport apparatus 52500. The second opening 52514 is located between the first opening 52513 and the third opening 52515. The positions of the first opening 52513 and the third opening 52515 on the side plate 52520 respectively correspond to the first bottom plate opening 52511 and the second bottom plate opening 52512, such that the first fixing pull strap 52540, which extends below the bottom plate 52510 and has two ends extending outwards respectively from the first opening 52513 and the first bottom plate opening 52511, and the second fixing pull strap 52544, which extends below the bottom plate 52510 and has two ends extending outwards respectively from the third opening 52515 and the second bottom plate opening 52512, are roughly parallel to the either short side of the bottom plate 52510.

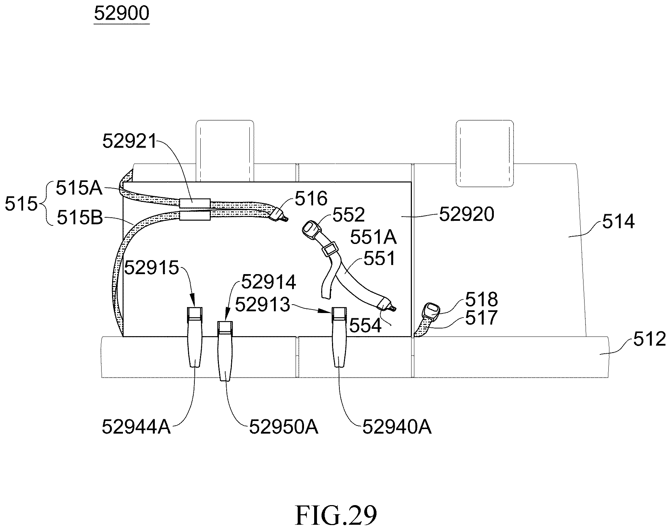

Referring to Fig. 29, which is a front schematical view of an animal transport apparatus 52900 according to an embodiment of the present disclosure, illustrating a mode for securing of the animal transport apparatus 52900 to a rear seat of a vehicle.

The animal transport apparatus 52900 has a first opening 52913, a second opening 52914, and a third opening 52915 on a side of the bottom plate connecting with the side plate 52920, which respectively penetrate through a wall portion of the bottom plate at corresponding position of the bottom plate. The first fixing pull strap, the installation strap, and the second fixing pull strap extending below the bottom plate pass through the first, second and third openings to be extended out of the side of the bottom plate, thereby revealing their respective adjustment ends 52940A, 52950A, and 52944A, as described in the previous embodiments. Optionally, in an alternative embodiment, the adjustment end of the fixing pull strap may also be designed to extend out of the bottom plate from the short side of the bottom plate, which can facilitate the user or the owner to adjust the length and the tightness of the fixing pull strap from his/her care side. In this embodiment, as shown in the figure, the side plate 52920 of the animal transport apparatus 52900 is provided with at least one guide (i.e., the guide 52921 in this embodiment). During the installation of the animal transport apparatus 52900, in addition to the securing mode, such as the installation strap 52950 or the connection frame (not shown) as above mentioned, an extension strap 551 is used as an accessory to connect a rear seat safety belt 515 and a rear seat safety buckle strap 517 of the vehicle to further secure the animal transport apparatus 52900 to the rear seat. The extension strap 551 is a soft woven strap structure, comprising an adjustment buckle 551A on the extension strap 551 to adjust the length of the extension strap 551 appropriately. The extension strap 551 has two ends with end buckles 552, 554 to be buckled and connected with the safety belt buckle 516 of the rear seat safety belt 515 and the safety buckle strap buckle 518 of the rear seat safety buckle strap 517. As shown in the figure, the rear seat safety belt 515 generally consists of a shoulder belt 515A and an abdominal belt 515B, which, after being pulled out, are extended together through the guide 52921 on the side plate 52920 to be buckled with the end buckle 552 of the extension strap 551 through the safety belt buckle 516. The extension strap 551 is further connected with the rear seat safety buckle strap 517 by buckling the end buckle 554 at the other end of the extension strap with the safety buckle strap buckle 518, so that the extension strap is connected to the rear seat safety buckle strap 517 and is anchored in place. In this embodiment, in addition to the installation structure of the animal transport apparatus 52900 itself (e.g., the installation strap or the rigid connection frame), it is possible to anchor the animal transport apparatus 52900 by means of the rear seat safety belt of the vehicle, and position the rear seat safety belt by the guide on the side plate, to prevent the arbitrary movement of the rear seat safety belt.

Alternatively, the extension strap 551 may also be connected to the side plate 52920 of the animal transport apparatus 52900 via a second guide on the side plate 52920, or directly adhered, nailed, or bolt-locked to the side plate 52920, as described in the previous embodiments.

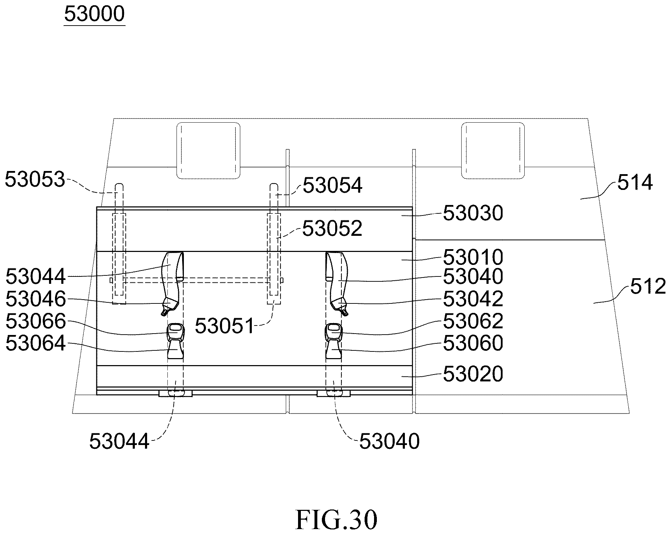

Optionally, the animal transport apparatus of the present disclosure may also be securely installed on the vehicle rear seat through a rigid connecting structure. Referring to Fig. 30, which is a top schematic view of an animal transport apparatus 53000 according to another embodiment of the present disclosure. The animal transport apparatus 53000 in this embodiment is similar to the aforementioned animal transport apparatus 52500 in structure and composition, comprising: a bottom plate 53010 and two side plates 53020, 53030, fixing buckle straps 53060, 53064 and their fixing buckles 53062, 53066, fixing pull straps 53040, 53044 and their buckles 53042, 53046, etc. The difference between this embodiment and the previous embodiments lies in that, in this embodiment, the animal transport apparatus 53000 is connected to the seat through a connection frame (e.g., ISOFIX connection frame) below the bottom plate 53010, in replacement of the soft installation strap of the previous embodiments. Specifically, the connection frame is a U-shaped rigid frame formed of a main frame 53051 and a connecting frame 53052. The connecting frame 53052 has a first connector 53053 and a second connector 53054 respectively provided at the rear end thereof (i.e., the end close to the seat backrest 514), which are connected and fixed to the rear seat of the vehicle. In this embodiment, the first connector 53053 and the second connector 53054 may be ISOFIX connectors, respectively connected to the ISOFIX anchor points (not shown) between the seat 512 and the seat backrest 514 of the rear seat of the vehicle, thereby securely installing the animal transport apparatus 53000 on the rear seat of the vehicle. Optionally, in an alternative embodiment, the adjustment end of the fixing pull strap may also be designed to extend out of the bottom plate 53010 from the short side of the bottom plate 53010, which can facilitate the user or the owner to adjust the length and the tightness of the fixing pull strap from his/her care side.

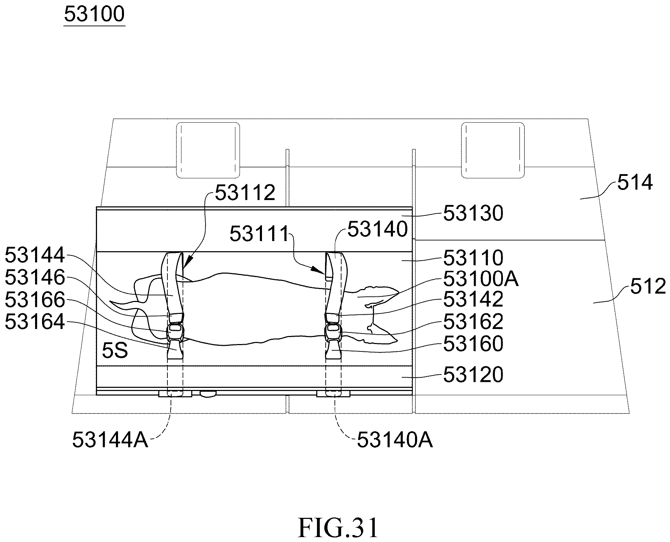

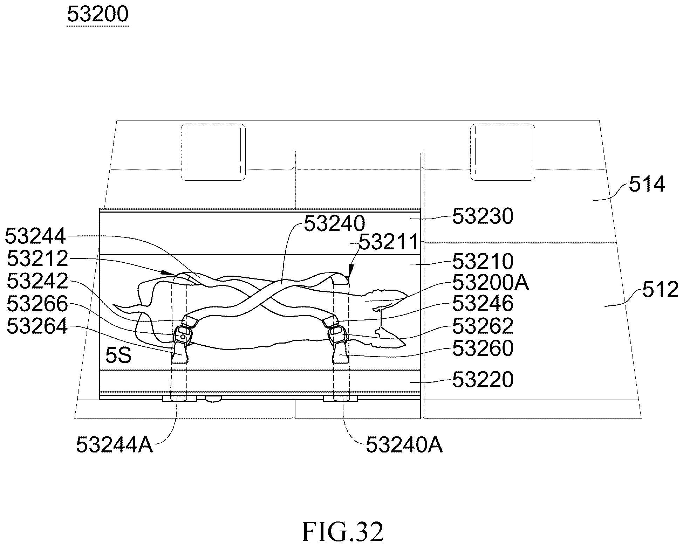

Referring to Figs. 31 and 32, which schematically show various usage scenarios of the double-strap animal transport apparatus in the previous embodiments of the present disclosure.

As shown in Fig. 31, the animal transport apparatus 53100 is identical to the aforementioned animal transport apparatus 52500 in structure and composition. In this embodiment, the first fixing pull strap 53140 extends below the bottom plate 53110. The first fixing pull strap 53140 has one end (i.e., the adjustment end 53140A) exposed out of the first opening (not shown) and secured in place by a positioning buckle (not shown), as described in the previous embodiments; and the other end (i.e., the buckling end) extended out of the first bottom plate opening 53111 on the bottom plate 53110 and connected to the first fixing buckle 53160 via its buckle 53142, so as to form a first closed harness. Similarly, the second fixing pull strap 53144 extends below the bottom plate 53110. The scond fixing pull strap 53144 has one end (i.e., the adjustment end 53144A) exposed out of the third opening (not shown) and secured in place by a positioning buckle (not shown), as described in the previous embodiments; and the other end (i.e., the buckling end) extended out of the second bottom plate opening 53112 on the bottom plate 53110 and connected to the second fixing buckle 53164 via its buckle 53146, so as to form a second closed harness. Optionally, in an alternative embodiment, the adjustment end of the fixing pull strap may also be designed to extend out of the bottom plate 53110 from the short side of the bottom plate 53110, which can facilitate the user or the owner to adjust the length and the tightness of the fixing pull strap from his/her care side.

As above described, the first bottom plate opening 53111 and the second bottom plate opening 53112 on the bottom plate 53110 are spaced apart from each other, and their positions correspond to the first and third openings, that is, both a line connecting the first bottom plate opening 53111 and the fixing portion of the first fixing buckle strap 53160, and a line connecting the second bottom plate opening 53112 and the fixing portion of the second fixing buckle strap 53164 are parallel to the short side of the bottom plate 53110. Thereby, the first fixing pull strap 53140 and the second fixing pull strap 53144 extend below the bottom plate 53110, their respective buckle ends extend from the first bottom plate opening 53111 and the second bottom plate opening 53112, and are buckled to the fixing buckles 53162 and 53166 of the first fixing buckle strap 53160 and the second fixing buckle strap 53164 via their respective buckles 53142 and 53146, so that the first and second closed harnesses in parallel are formed to secure the animal or the pet (e.g., but not limited to a dog) 53100A on the animal bearing surface 5S defined by the bottom plate 53110.

In this embodiment, the bottom plate openings 53111, 53112 and the fixing portions of the fixing buckle straps 53160, 53164 are designed such that the first fixing pull strap 53140 and the second fixing pull strap 53144, after respectively extending from the first bottom plate opening 53111 and the second bottom plate opening 53112, extend in parallel across the shoulders and hind legs of the animal 53100A and connect to the corresponding fixing buckle straps 53160, 53164, thereby providing stable support at the shoulders and hind legs of the animal 53100A. Specifically, as shown in Fig. 31, when the user respectively tightens the first fixing pull strap 53140 and the second fixing pull strap 53144 through the adjustment ends 53140A and 53144A, the first fixing pull strap 53140 makes close contact with a left shoulder of the animal 53100A, and extends across the body of the animal 53100A, making contact with part of the body for support, and thereby making contact at the left shoulder; that is, as shown in the figure, through the connection of the fixing pull strap 53140 with the fixing buckle strap 53160, it is possible to provide a strap-like support from the right shoulder to the left shoulder of the animal 53100A. Similarly, the second fixing pull strap 53144 makes close contact with a right hind leg of the animal 53100A, and extends across the body of the animal 53100A, making contact with part of the body for support, and also makes contact at the left hind leg; that is, through the connection of the fixing pull strap 53144 with the fixing buckle strap 53164, it is possible to provide a strap-like support from the right hind leg to the left hind leg of the animal 53100A. With two strap-like supports in parallel, the animal 53100A may be securely carried on the bottom plate 53110 without significant movement or impact due to sudden changes in the vehicle speed. Particularly, when the animal 53100A has a relatively large physique, the double-loop contact support is formed by the fixing pull strap 53140 with the fixing buckle strap 53160 and the fixing pull strap 53144 with the fixing buckle strap 53164 to provide a more stable and secure supporting and fixing effect.

Optionally, the first and second fixing pull straps of the aforementioned double-strap animal transport apparatus may also extend out of the first and second bottom plate openings and further connect with the second and first fixing buckle straps, thereby forming two closed harnesses crossed with each other, and creating a "Double-Belt and Crossing" positional fixing structure of this embodiment, as shown in Fig. 32.

Referring to Fig. 32, the animal transport apparatus 53200 is identical to the aforementioned animal transport apparatus 53100 in structure and composition, comprising a bottom plate 53210, two side plates 53220 and 53230, bottom plate openings 53211 and 53212, fixing pull straps 53240 and 53244 with their respective buckles (i.e., buckles 53242, 53246), fixing buckle straps 53260 and 53264 with their respective fixing buckles (i.e., fixing buckles 53262, 53266), and positioning buckles (not shown), etc. The difference between this embodiment and the previous embodimetns lies in that, in this embodiment, the first fixing pull strap 53240 extends below the bottom plate 53210. The first fixing pull strap has one end (i.e., the adjustment end 53240A) exposed out of the first opening (not shown) and secured in place by the positioning buckle (not shown), as described in the previous embodiments; and the other end (i.e., buckling end) extended out of the first bottom plate opening 53211 on the bottom plate 53210 and connected to the second fixing buckle 53264 via its buckle 53242, to form a first closed harness that extends diagonally across the bottom plate 53210. Similarly, the second fixing pull strap 53244 extends below the bottom plate 53210. The second fixing pull strap 53244 has one end (i.e., the adjustment end 53244A) exposed out of the third opening (not shown) and secured in place by the positioning buckle (not shown), as described in the previous embodiments; and the other end (i.e., the buckling end) extended out of the second bottom plate opening 53212 on the bottom plate 53210 and connected to the first fixing buckle 53260 via its buckle 53246, to form a second closed harness that extends diagonally across the bottom plate 53210 in an opposite direction. Optionally, in an alternative embodiment, the adjustment end of the fixing pull strap may also be designed to extend out of the bottom plate 53210 from the short side of the bottom plate 53210, which can facilitate the user or the owner to adjust the length and the tightness of the fixing pull strap from his/her care side.

As shown in the figure, in this embodiment, when the user tightens the first fixing pull strap 53240 and the second fixing pull strap 53244 through their respective adjustment ends 53240A and 53244A. The first fixing pull strap 53240 makes close contact with the right hind leg of the animal 53200A, and extends diagonally across the body of the animal 53200A, making contact with part of the body for support, and thereby making contact at the left shoulder; that is, as shown in the figure, the connection of the first fixing pull strap 53240 with the second fixing buckle strap 53264 provides diagonal strap-like support from the right hind leg to the left shoulder of the animal 53200A. Similarly, the second fixing pull strap 53244 makes close contact with the right shoulder of the animal 53200A, extends diagonally across the body of the animal 53200A, making contact with part of the body, and thereby making contact at the left hind leg; that is, the connection of the second fixing pull strap 53244 with the first fixing buckle strap 53260 provides diagonal strap-like support from the right shoulder to the left hind leg of the animal 53200A. In this embodiment, the first fixing pull strap 53240 and the second fixing pull strap 53244 further form a crossing point at a center of the back of the animal 53200A. In this embodiment, the two diagonal strap-like supports that cross each other, formed by the fixing pull straps, at the crossing point in the center of the back of the animal 53200A, enable the animal 53200A to be securely carried on the bottom plate 53210 without significant movement or impact due to sudden changes in the vehicle speed. Particualry, when the animal 53200A has a relatively large physique, the crossing diagonal strap-like support formed by the connection of the fixing pull strap 53240 with the fixing buckle strap 53264 and the fixing pull strap 53244 with the fixing buckle strap 53260 can provide more stable and secure supporting and fixing effect.

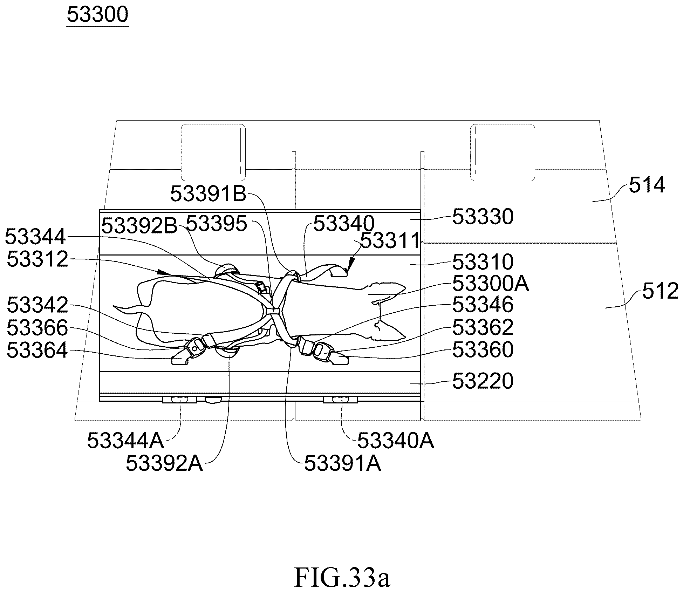

Optionally, the owner may dress the pet in a wearable device, and the fixing pull straps and fixing buckles of the animal transport apparatus in this embodiment are combined with various straps or strap loops on the wearable device, to provide further fixing effect for the animal or the pet in a moving vehicle, as shown in Figs. 33a to 33c.

Referring to Figs. 33a to 33c. In this embodiment, the animal transport apparatus 53300 is identical to the aforementioned animal transport apparatus 53200 in structure and composition, comprising a bottom plate 53310, two side plates 53320 and 53330, bottom plate openings 53311 and 53312, fixing pull straps 53340 and 53344 with their respective buckles (i.e., the buckles 53342, 53346), fixing buckle straps 53360 and 53364 with their respective fixing buckles (i.e., the fixing buckles 53362, 53366), and positioning buckles (not shown), etc. Similarly, in this embodiment, the first fixing pull strap 53340 extends below the bottom plate 53310. The first fixing pull strap 53340 has one end (i.e., the adjustment end 53340A) exposed out of the first opening (not shown) and secured in place by the positioning buckle (not shown), as described in the previous embodiments; and the other end (i.e., the buckling end) extended out of the first bottom plate opening 53311 on the bottom plate 53310 and further connected to the second fixing buckle 53366 via its buckle 53342, to form a first closed harness that extends diagonally across the bottom plate 53310. Similarly, the second fixing pull strap 53344 extends below the bottom plate 53310. The second fixing pull strap 53344 has one end (i.e., the adjustment end 53344A) exposed out of the third opening (not shown) and secured in place by the positioning buckle (not shown), as described in the previous embodiments; and the other end (i.e., the buckling end) extended out of the second bottom plate opening 53312 on the bottom plate 53310 and further connected to the first fixing buckle 53362 via its buckle 53346, to form a second closed harness that extends diagonally across the bottom plate 53310 in an opposite direction. Optionally, in an alternative embodiment, the adjustment end of the fixing pull strap may also be designed to extend out of the bottom plate 53310 from the short side of the bottom plate 53310, which can facilitate the user or the owner to adjust the length and the tightness of the fixing pull strap from his/her care side.

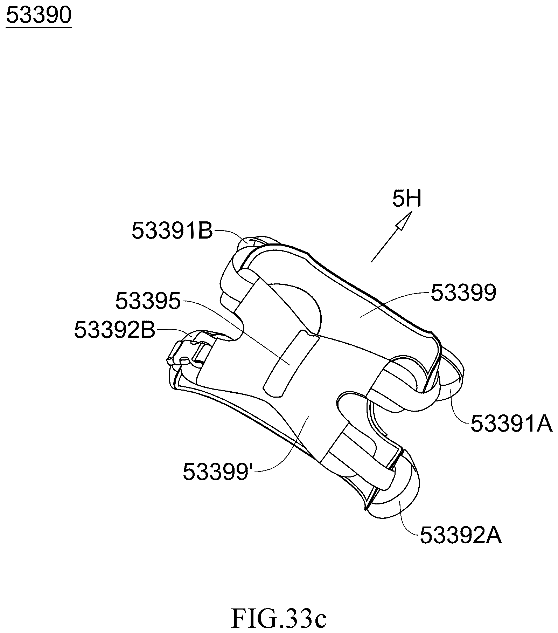

As shown in Fig. 33c, the pet vest 53390 comprises a chest fixing portion 53399 and a back fixing portion 53399', which are adjustably connected with each other through corresponding tethers, and the main structure of the pet vest 53390 is known to those skilled in the art. Furthermore, in this embodiment, webbings 53391A, 53391B, 53392A, 53392B are formed at the corresponding positions of the tethers, and the webbings and the tethers form closed webbing loops respectively. In addition, a central webbing 53395 is also formed on the back fixing portion 53399' of the pet vest 53390 in this embodiment, as described in the previous embodiments. When the animal or the pet wears the pet vest 53390 of this embodiment, its head will be directed in a direction of an arrow H shown in Fig. 33c.

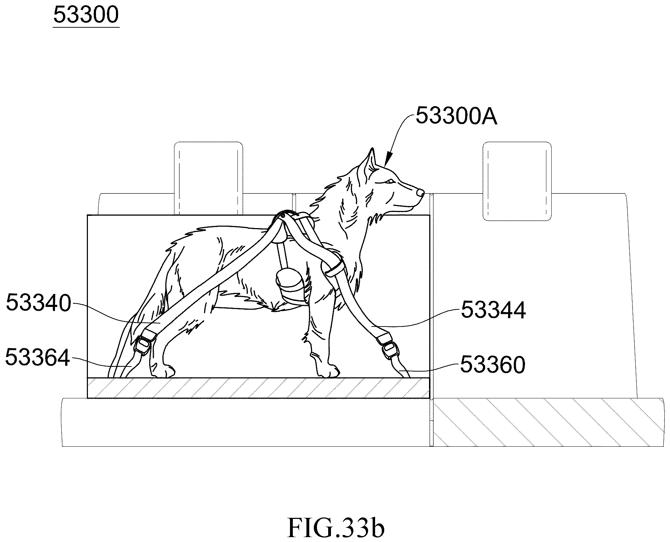

Referring back to Figs. 33a and 33b, which are a top view and a side view schematically showing scenarios for securing an animal wearing the pet vest 53390 to the animal transport apparatus 53300 in the previous embodiments, respectively. This embodiment is different from the embodiment shown in Fig. 32 in that in this embodiment, the first fixing pull strap 53340, after extending out of the first bottom plate opening 53311, extends along a front leg (e.g., the left front leg) of the animal 53300A, and the buckling end of the first fixing pull strap 53340 passes through the webbing loop formed by the webbing 53391B and its corresponding tether of the pet vest 53390 (e.g., the left shoulder webbing loop), and further passes through the loop formed by the central webbing 53395 and the back fixing portion 53399', then extends along a side of the abdomen (e.g., a right abdomen) of the animal 53300A towards the bottom plate 53310 of the animal transport apparatus 53300, and is connected to the second fixing buckle 53366 via its buckle 53342, to form a first closed harness that extends diagonally across the bottom plate 53310 and through the left shoulder webbing loop of the pet vest 53390. Similarly, the second fixing pull strap 53344, after extending out of the second bottom plate opening 53312, extends along the corresponding hind leg (e.g., the left hind leg) of the animal 53300A, and the buckling end of the second fixing pull strap 53344 passes through the loop formed by the central webbing 53395 and the back fixing portion 53399', and then extends towards the head along the body of the animal 53300A to the right shoulder, and passes through the webbing loop formed by the webbing 53391A and its corresponding tether of the pet vest 53390 (e.g., the right shoulder webbing loop), and then extends towards the bottom plate 53310 of the animal transport apparatus 53300, and is connected to the first fixing buckle 53362 via its buckle 53346, to form a second closed harness that extends diagonally across the bottom plate 53310 and through the right shoulder webbing loop of the pet vest 53390. It should be noted that in this embodiment, as shown in Fig. 33b, the connection of the first fixing buckle 53360 and the second fixing buckle 53364 with the corresponding second fixing pull strap 53340 and first fixing pull strap 53340 are behind the left and right hind legs of the animal 53300A. However, in a variant embodiment of this embodiment (not shown), the connection may also be in front of the left and right hind legs of the animal 53300A by shifting the positions for fixing the first fixing buckle 53360 and the second fixing buckle 53364 on the bottom plate 53310, depending on the size of the animal 53300A.

Compared to the previous embodiments, in this embodiment, in addition to forming a diagonal strap-like support by the crossing and connection of the fixing pull straps and the fixing buckles, and providing further support at the central crossing point on the back of the animal 53300A, which enables the animal 53300A to be securely carried on the bottom plate 53310 without significant movement or impact due to sudden changes in the vehicle speed, the first fixing pull strap 53340 and the second fixing pull strap 53344 passing through the webbing loop formed by the central webbing 53395 and the back fixing portion 53399' and crossing each other in the loop can further prevent the fixing pull straps from easily moving as traveling.

Hereinafter, the detailed structure of the animal transport apparatus of the present disclosure will be further illustrated with reference to the accompanying drawings below.

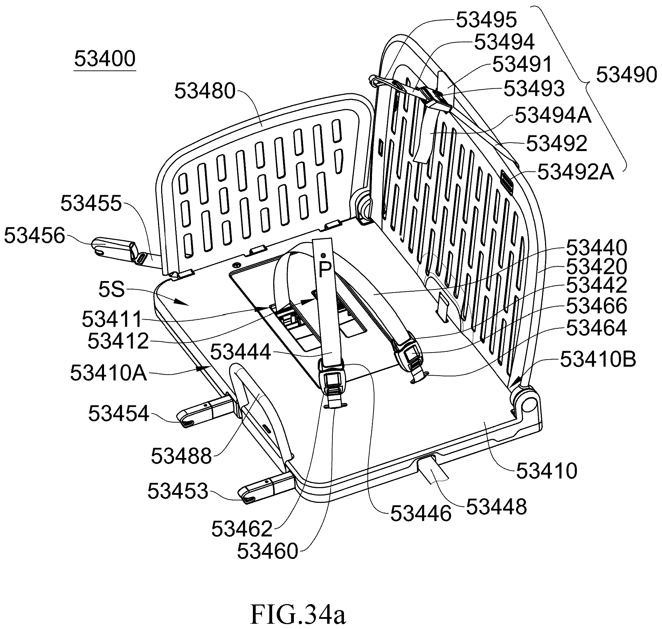

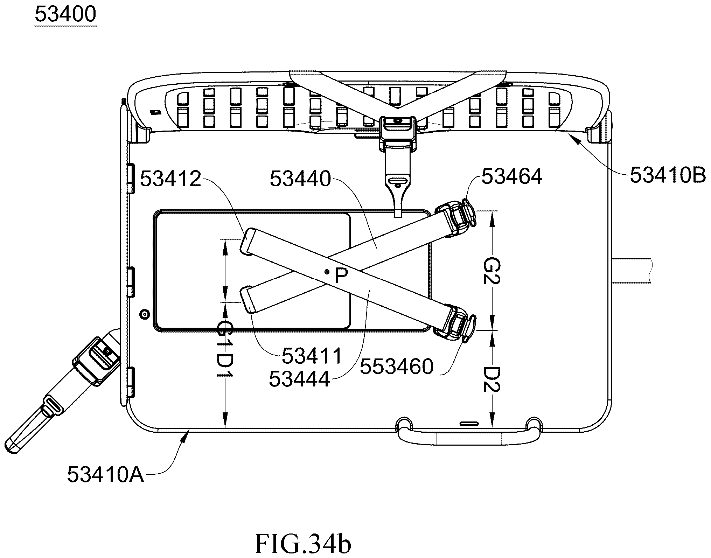

Referring to Figs. 34a and 34b, which schematically show an animal transport apparatus 53400 according to an embodiment of the present disclosure. Fig. 34a is a perspective view of the animal transport apparatus 53400, and Fig. 34b is a simplified top view illustrating positional relationship between bottom plate openings, fixing pull straps, and fixing buckle straps on the bottom plate of the animal transport apparatus 53400 in Fig. 34a.

According to this embodiment, the animal transport apparatus 53400 comprises a bottom plate 53410 and a side plate 53420. The bottom plate 53410 provides an animal bearing surface 5S for placing an animal or a pet to be transported by the vehicle, and has one long side (i.e., a second long side, the bottom plate long side) arranged against a backrest of the rear seat of the vehicle53410A; and the other long side 53410B (i.e., a side away from the backrest of the rear seat) (a first long side, bottom plate long side) connected to the side plate 53420, thus making the animal transport apparatus 53400 in this embodiment appear to have an L-shaped structure that is generally perpendicular between the side plate 53420 and the bottom plate 53410 when viewed from the side. Optionally, the animal transport apparatus 53400 may also comprise a head guard 53480, which is connected to the short side of the bottom plate 53410 away from a rear window in an installation side.

According to this embodiment, the side plate 53420 and the head guard 53480 may be made of plastic materials and formed as a lattice structure to facilitate the user's care or interaction with the animal or the pet placed within. However, the present disclosure is not limited thereto, and optionally, the side plate and the head guard may also be formed without a lattice structure or may be formed by a combination of a frame and a soft net (e.g., mesh fabric).

As shown in the figures, the animal transport apparatus 53400 in this embodiment provides a double-strap positional fixing structure. Specifically, the bottom plate 53410 of the animal transport apparatus 53400 has a first bottom plate opening 53411 and a second bottom plate opening 53412, respectively. The first fixing pull strap 53440 and the second fixing pull strap 53444 may respectively pass through and extend out of the first bottom plate opening 53411 and the second bottom plate opening 53412, and the first bottom plate opening 53411 is farther from a side of the bottom plate 53410 in connection with the side plate 53420 (i.e., the long side 53410B) than the second bottom plate opening 53411. In other words, the first bottom plate opening 53411 is located at a position of the bottom plate 53410 close to the long side 53410A, and the second bottom plate opening 53412 is located at a position of the bottom plate 53410 close to the long side 53410B. The animal transport apparatus 53400 comprises a first fixing buckle strap 53460 and a second fixing buckle strap 53464 fixed on the bottom plate 53410, and the first fixing buckle strap 53460 is located at a position of the bottom plate 53410 close to the long side 53410A, and the second fixing buckle strap 53464 is located at a position of the bottom plate 53410 close to the long side 53410B. In this embodiment, as shown in Fig. 34b, the first bottom plate opening 53411 is spaced from the long side 53410A by a first distance D1, the first fixing buckle strap 53460 is spaced from the long side 53410A by a second distance D2, and the first distance D1 is greater than the second distance D2. In other words, in this embodiment, a spacing G1 between the first bottom plate opening 53411 and the second bottom plate opening 53412 is less than a spacing G2 between the first fixing buckle strap 53460 and the second fixing buckle strap 53464, and the spacings G1, G2 may be designed to respectively accommodate the width of the shoulder and the hip of the animal.

As shown in Fig. 34a, the buckling end of the first fixing pull strap 53440, which extends below the bottom plate 53410, extends out of the first bottom plate opening 53411 and is buckled to a fixing buckle 53466 of the second fixing buckle strap 53464 on the bottom plate 53410 in a diagonal direction; the buckling end of the second fixing pull strap 53444, which extends below the bottom plate 53410, extends out of the second bottom plate opening 53412 and is buckled to the first fixing buckle 53462 of the first fixing buckle strap 53460 on the bottom plate 53410 in a diagonal direction. As shown in the figure, the first fixing pull strap 53440 and the second fixing pull strap 53444 form a crossing point P in a space defined by the bottom plate 53410, the side plate 53420, and the head guard 53480, at a central position substantially corresponding to the bottom plate 53410, thereby forming a "double-strap crossing" positional fixing structure. As above described, in this embodiment, the spacing G1 between the first bottom plate opening 53411 and the second bottom plate opening 53412 is less than the spacing G2 between the first fixing buckle strap 53460 and the second fixing buckle strap 53464, so that the crossing point P of the formed "double-strap crossing" positional fixing structure is located closer to the front side shoulder of the animal.

Optionally, the first fixing pull strap and the second fixing pull strap may also be connected to the first fixing buckle strap and the second fixing buckle strap, respectively, to form two non-crossing closed harnesses on the bottom plate 53410 (not shown), which is a "double-strap longitudinal narrow front and wide back" positional fixing structure. As can be seen from Fig. 34a, when the animal is secured in this positional fixing structure formed by the animal transport apparatus 53400 of this embodiment, the first fixing buckle and the second fixing buckle are located on different sides of the animal's body (e.g., shoulder position of the animal's body), and the extension directions of the first fixing pull strap and the second fixing pull strap are diagonal to a longitudinal direction of the animal's body.

In this embodiment, the first fixing pull strap 53440 and the second fixing pull strap 53444 may be optionally formed into a Y-strap structure, extending within the corresponding structure below the bottom plate 53410 (further explained below), and their ends (i.e., the adjustment ends) 53448 exposed out of the bottom plate 53410 from the short side of the bottom plate, as shown in Fig. 34a. The fixing pull straps may be further secured in length and tightness by the positioning buckles (not shown), as described in the previous embodiments. Optionally, in an alternative embodiment, the adjustment ends of the fixing pull straps may also be designed to extend out of the bottom plate 53410 from the short side connecting to the head guard 53480 of the bottom plate 53410, which can facilitate the user or the owner to adjust the length and the tightness of the fixing pull straps from his/her care side.

In this embodiment, the animal transport apparatus 53400 is securely connected to the ISOFIX anchor points of the rear seat (not shown) of the vehicle by the first connector 53453 and the second connector 53454 (e.g., ISOFIX connectors) protruding from the bottom plate 53410. Optionally, the animal transport apparatus 53400 further comprises a third connector 53456 and its connecting tether 53455. The user may adjust an extension direction of the connecting tether 53455 according to actual needs (e.g., the position of the fixing points on the rear seat of the vehicle), to allow the third connector 53456 to protrude from the long side 53410A of the bottom plate 53410, or from the short side connected with the head guard 53480 (as shown in Fig. 34a), or even from an intersection of the long side 53410A and the short side, to be further secured to the corresponding fixing points on the rear seat (not shown) of the vehicle, serving as a third anchor point for the animal transport apparatus 53400 when installed on the rear seat of the vehicle, in addition to the two ISOFIX anchor points.

Optionally, the animal transport apparatus 53400 may comprise an upper anchor assembly (e.g., top tether) 53490. In other words, the webbing structure of the animal transport apparatus may comprise an upper anchor assembly, which mainly comprises a first tether 53491 and a second tether 53492, a length adjuster 53493, and a connecting tether 53494. The respective ends of the first tether 53491 and the second tether 53492 are inwardly threaded through through-holes (not shown) on an upper edge of the side plate 53420 from an outer surface of the side plate 53420, and then secured to an inner surface of the side plate 53420 by the fixing buckles (for example but not limited to buckle in a rectangular frame with one horizonal rod inside, e.g., the fixing buckle 53492A) to be secured to the side plate 53420. The respective other ends of the first tether 53491 and the second tether 53492 are fixedly connected to the same side of the length adjuster 53493. In this embodiment, the connecting tether 53494 of the upper anchor assembly 53490 extends through the other side of the length adjuster 53493 to form an adjustment end 53494A; the opposite end of the adjustment end 53494A of the connecting tether 53494 is connected to a connecting hook 53495, to be secured to a corresponding fixing point (not shown) above the vehicle rear seat or the rear bottom portion spaning the seat, serving as a third anchor point.

In this embodiment, the lengths of the first tether 53491 and the second tether 53492 are fixed, and the user may pull the adjustment end 53494A threaded through the length adjuster 53493 to adjust the length of the connecting tether 53494 in conjunction with the fixing of the length adjuster 53493, thereby adjusting an overall length of the upper anchor assembly 53490 to accommodate the fixing point. Alternatively, in other embodiments, the length of the strap 53494 may be fixed, and the user may adjust the lengths of the first tether 53491 and the second tether 53492 by the length adjuster 53493, thereby adjusting the overall length of the upper anchor assembly 53490 to accommodate the fixing points of the vehicle rear seat.

In this embodiment, the animal transport apparatus 53400 may further comprise a support connected to a second long side 53410A of the bottom plate 53410, the second long side 53410A is opposite to the first long side 53410B.

The support may be either a support side plate or a U-shaped support rod 53488.

One or more of the side plate 53420 and the support member may be connected to the bottom plate 53410 in a movable manner.

One or more of the side plate 53420 and the support member may be hinged to the bottom plate 53410.

One or more of the side plate 53420 and the support member may be connected to the bottom plate 53410 in a detachable manner.

One or more of the support side plate and the U-shaped support rod 53488 may be connected to the bottom plate 53410 in an insertion manner.

The side plate 53420 may be connected to the bottom plate 53410 in a movable or detachable manner.

The side plate 53420 may be connected to the bottom plate 53410 in a pivotable manner.

For example, in this embodiment, the animal transport apparatus 53400 may further comprise a support rod 53488, which is connected to a long side 53410A of the bottom plate 53410 and provides a further support to the animal transport apparatus 53400 by resting against the backrest of the rear seat of the vehicle during installation. Preferably, the support rod 53488 is a U-shaped support rod, with two ends being inserted into corresponding holes (not shown) on the bottom plate 53410.

To facilitate care or supervision of the animal placed inside the animal transport apparatus 53400 by the user or the owner while taking a securing effect of the animal transport apparatus 53400 on the animal, in this embodiment, a height of the head guard 53480 is less than a height of the side plate 53420. The height difference is designed to allow caregivers to care for or interact with the animal as travelling. For example, in a specific embodiment, the height of the side plate 53420 of the animal transport apparatus 53400 may be, but not limited to, between 5500 mm and 5550 mm, and the height of the head guard 53480 may be, but not limited to, between 5200 mm and 5300 mm; more specifically, the height of the side plate 53420 may be, for example, 5522 mm, and the height of the head guard 53480 may be, for example, between 5200 mm and 5300 mm. In this embodiment, the head guard at the lower height is beneficial for caregivers to care for the animal, while the side plate at the greater height is helpful to provide an optimal securing effect for the animal and prevent the animal from interfering with a driver in a front seat.

According to the present disclosure, the side plate, the head guard, and the support rod of the animal transport apparatus all are connected to the corresponding side of the bottom plate in a movable manner, and may be removed from the bottom plate when not in use, either for separate storage, or stored within the bottom plate, or folded for storage (further details will be provided below).

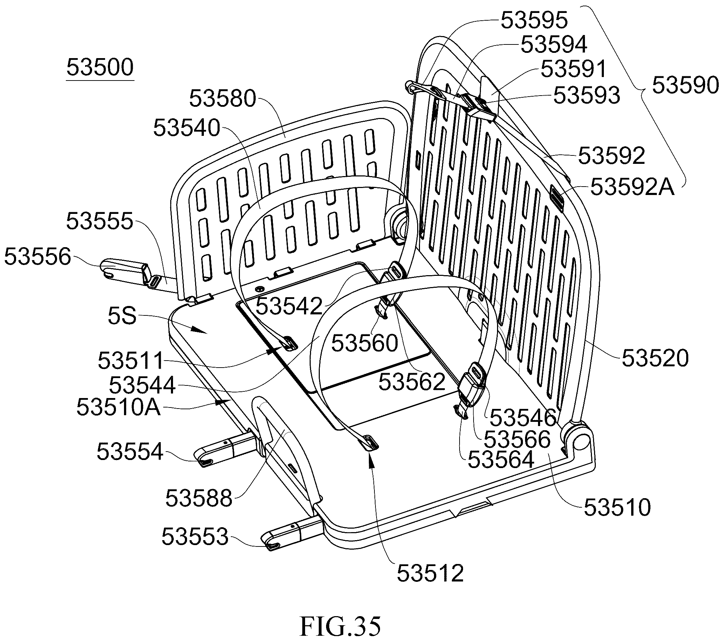

Referring to Fig. 35, which is a perspective view of an animal transport apparatus 53500 according to an embodiment of the present disclosure. The animal transport apparatus 53500 in this embodiment is similar to the aforementioned animal transport apparatus 53400 in structure and composition, comprising: a bottom plate 53510, a side plate 53520, a head guard 53580, first and second connectors 53553 and 53554, a third connector 53556 and its connecting tether 53555, a support rod 53588, an upper anchor assembly 53590 comprising a first tether 53591, a second tether 53592, a fixing buckle 53592A, a length adjuster 53593, a connecting tether 53594, and a connecting hook 53595), etc.

The difference between this embodiment and the previous embodiments lies in that, in this embodiment, the animal transport apparatus 53500 forms a double-strap parallel positional fixing structure similar to the animal transport apparatus 52600. Specifically, as shown in the figures, in this embodiment, the first bottom plate opening 53511 and the second bottom plate opening 53512 are located on the bottom plate 53510 close to the long side 53510A and are separated from each other in the longitudinal direction of the bottom plate 53510; the first fixing buckle strap 53560 and the second fixing buckle strap 53564 are fixed on a position of the bottom plate 53510 close to the long side 53510B and are separated from each other in a longitudinal direction of the bottom plate 53510. A line connecting the first bottom plate opening 53511 and a fixing portion of the first fixing buckle strap 53560, and a line connecting the second bottom plate opening 53512 and a fixing portion of the second fixing buckle strap 53564, are generally parallel to the short side of the bottom plate 53510. In this embodiment, the first fixing pull strap 53540 extends below the bottom plate 53510, and the buckling end of the first fixing pull strap extends out of the first bottom plate opening 53511 and is connected to the fixing buckle 53562 of the first fixing buckle strap 53560 via its buckle 53542; the second fixing pull strap 53544 extends below the bottom plate 53510, the buckling end of the second fixing pull strap 53544 extends out of the second bottom plate opening 53512 and is connected to the fixing buckle 53566 of the second fixing buckle strap 53564 via its buckle 53546. In other words, the first fixing pull strap 53540 and the first fixing buckle strap 53560 form a first closed harness by buckling with the buckle 53542 and the fixing buckle 53562; the second fixing pull strap 53544 and the second fixing buckle strap 53564 form a second closed harness by buckling with the buckle 53546 and the fixing buckle 53566. The first and second closed harnesses are generally parallel to the short side of the bottom plate 53510, thus forming the double-strap parallel positional fixing structure. It can be seen from Fig. 35 that when an animal is secured in the double-strap parallel positional fixing structure formed by the animal transport apparatus 53500 of this embodiment, the first fixing buckle 53562 and the second fixing buckle 53566 are located on the same side of the animal's body, and an extension direction of the first fixing pull strap 53540 and the second fixing pull strap 53544 is transverse to a longitudinal direction of the animal's body.

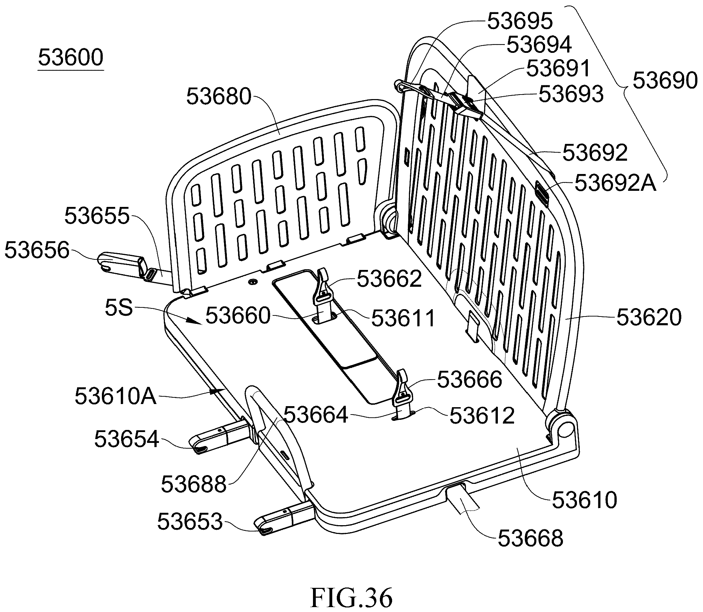

Referring to Fig. 36, which is a perspective view of an animal transport apparatus 53600 according to an embodiment of the present disclosure. The animal transport apparatus 53600 in this embodiment is similar to the aforementioned animal transport apparatuss 53400 and 53500 in structure and composition, comprising: a bottom plate 53610, a side plate 53620, a head guard 53680, first and second connectors 53653 and 53654, a third connector 53656 and its connecting tether 53655, a support rod 53688, an upper anchor assembly 53690 comprising a first tether 53691, a second tether 53692, a fixing buckle 53692A, a length adjuster 53693, a connecting tether 53694, and a connecting hook 53695, etc.

The difference between this embodiment and the previous embodiments lies in that, in this embodiment, the animal transport apparatus 53600 forms a positional fixing structure that is different from the various closed harnesses previously mentioned. Specifically, as shown in the figures, in this embodiment, a first bottom plate opening 53611 and a second bottom plate opening 53612 are arranged on a centerline of the bottom plate 53610 and are separated from each other. The first fixing pull strap 53660 and the second fixing pull strap 53664 extend out of the first bottom plate opening 53611 and the second bottom plate opening 53612, respectively, and their exposed ends have first end buckles 53662 and second end buckles 53666, respectively. The other ends of the first fixing pull strap 53660 and the second fixing pull strap 53664 extend inside or below the bottom plate 53610 and extend from a side of the bottom plate 53610 to form adjustment ends 53668, which may be further secured in length and tightness by positioning buckles (not shown), as described in the previous embodiments. The animal transport apparatus 53600 of this embodiment is particularly suitable for animals wearing pet vests, for example. By using end buckles 53662 and 53666 to buckle with various loops at corresponding positions on the pet vest (such as the webbing loops on the chest portion of the vest, the central webbing loops, and metal loops on the central webbing, etc.), the animal may be secured on the animal bearing surface 5S. In this embodiment, the end buckles 53662 and 53666 may comprise, but not limited to, hook buckles, chain buckles, plug buckles, lock buckles, etc. Compared to the previous embodiments, the animal transport apparatus 53600 of this embodiment omits the fixing pull straps that extend across the animal's body in various directions, which can relatively reduce tension and discomfort the animal when being secured in the vehicle.

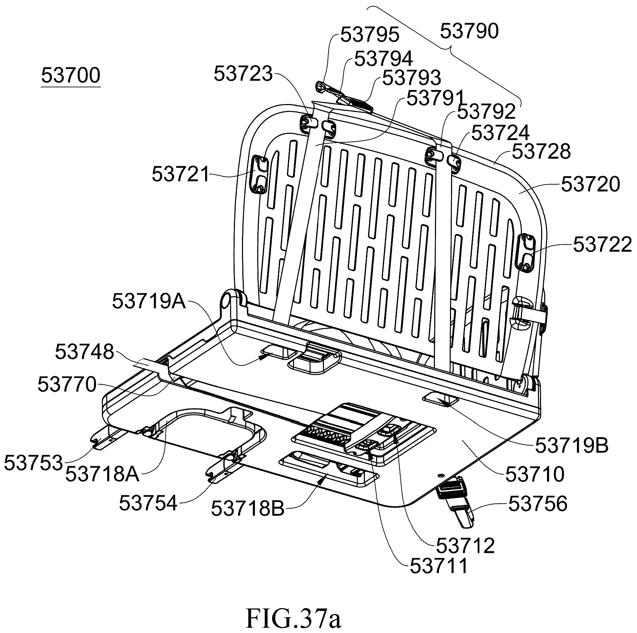

Referring to Fig. 37a, which schematically shows an animal transport apparatus 53700 according to an embodiment of the present disclosure. The animal transport apparatus 53700 of this embodiment is similar to the aforementioned animal transport apparatuss 53400 to 53600 in structure and composition, comprising: a bottom plate 53710, a side plate 53720, first and second connectors 53753 and 53754, a third connector 53756, a first bottom plate opening 53711 and a second bottom plate opening 53712, adjustment ends 53748 of the first fixing pull strap and the second fixing pull strap and their positioning buckles 53770, etc.

In this embodiment, a support rod storage recess 53718A in a shape corresponding to the aforementioned support rod and an installation strap storage recess 53718B are formed on the bottom surface of the bottom plate 53710 of the animal transport apparatus 53700. The bottom plate 53710 also has a first bottom plate opening 53711 and a second bottom plate opening 53712. The first fixing pull strap and the second fixing pull strap extend out of the first bottom plate opening and the second bottom plate opening to be exposed to the animal bearing surface of the bottom plate 53710. The side plate 53720 of the animal transport apparatus 53700 is provided with a first guide 53721 and a second guide 53722, and the rear seat safety belts (not shown) pass through the first gudide and the second guide to be positioned therebetween when installing (as described previously regarding the guides 51821, 51921), to prevent the safety belt from swaying or swinging arbitrarily. In addition, a pair of tether guides 53723 and 53724 is provided on a position of the side plate 53720 of the animal transport apparatus 53700 close to the upper side, and the first tether 53791 and the second tether 53792 of the upper anchor assembly 53790 pass through the pair of the tether guides to be positioned therebetween (as described below). In this embodiment, a reinforcing frame 53728, such as a rigid tube may be embedded on a perimeter of the side plate 53720 to further strengthen the structural strength of the side plate 53720. The reinforcing frame has a shape corresponding to the perimeter of the side plate and is embedded within the side plate.

As shown in the figures, the difference between the upper anchor assembly 53790 of this embodiment and the upper anchor assembly in the previous embodiments (e.g., upper anchor assembly 53490, upper anchor assembly 53590, upper anchor assembly 53690) lies in that, in this embodiment, the first tether 53791 and the second tether 53792 of the upper anchor assembly 53790 extend towards the side plate 53720 and pass through the tether guides 53723 and 53724 of the side plate 53720 close to the upper side to be positioned within them, then further extend along the side plate 53720 to the corresponding openings 53719A and 53719B on the bottom plate 53710 connected to the side plate 53720, and are secured the by positioning buckles (not shown) located therein, which may be, for example, buckles in a rectangular frame with one horizontoal rod inside, buckles in a rectangular frame with two horizontal rods inside, etc. When the upper anchor assembly 53790 is secured to the corresponding fixing points on the bottom above or behind the vehicle rear seat with its connecting tether 53794 and connecting hook 53795 (not shown), the first tether 53791 and the second tether 53792, which are as long as the extension strap, are fixedly positioned by the tether guides 53723 and 53724 on the side plate 53720, and are secured to the bottom plate 53710 and have an overall strap length in contact with the side plate 53720, thereby providing more stable support for the animal transport apparatus 53700.

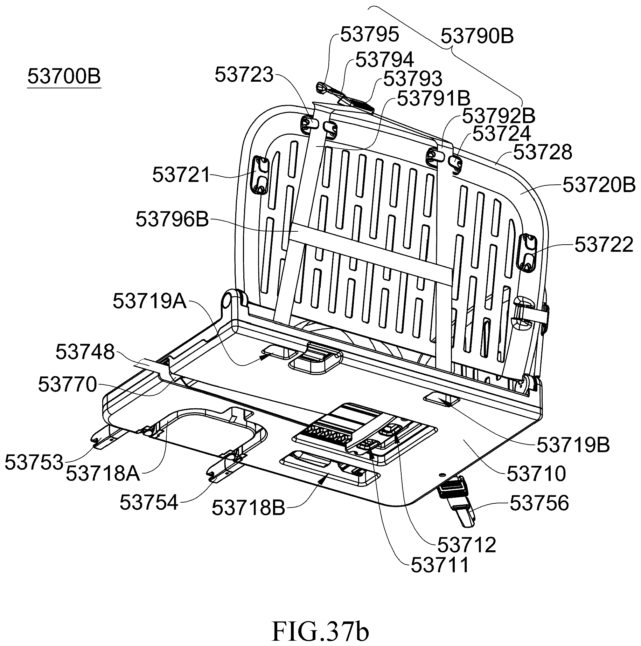

Referring to Fig. 37b, which schematically shows an animal transport apparatus 53700B according to an embodiment of the present disclosure. The animal transport apparatus 53700B of this embodiment is identical to the aforementioned animal transport apparatus 53700 in structure and composition. The difference between this embodiment and the previous embodiments lies in that, in this embodiment, the upper anchor assembly 53790B further comprises a transverse connecting tether 53796B connected between the first tether 53791A and the second tether 53791B. The tension provided by the transverse connecting tether 53796B can further provide stable support for the side plate 53720B of the animal transport apparatus 53700B. In this embodiment, the transverse connecting tether 53796B is connected approximately at the midpoint of the lengths of the first tether 53791A and the second tether 53791B where they abut against the side plate 53720B, so that the first tether 53791A, the second tether 53791B, and the transverse connecting tether 53796B form an H-shaped support structure on the side plate 53720B.

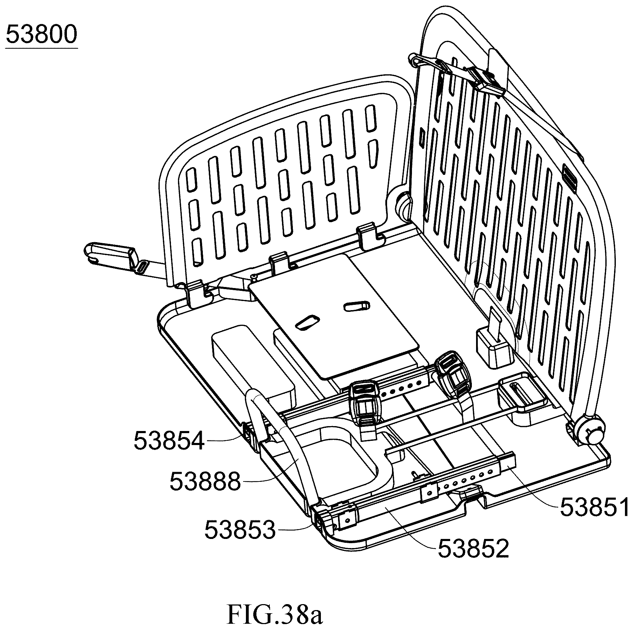

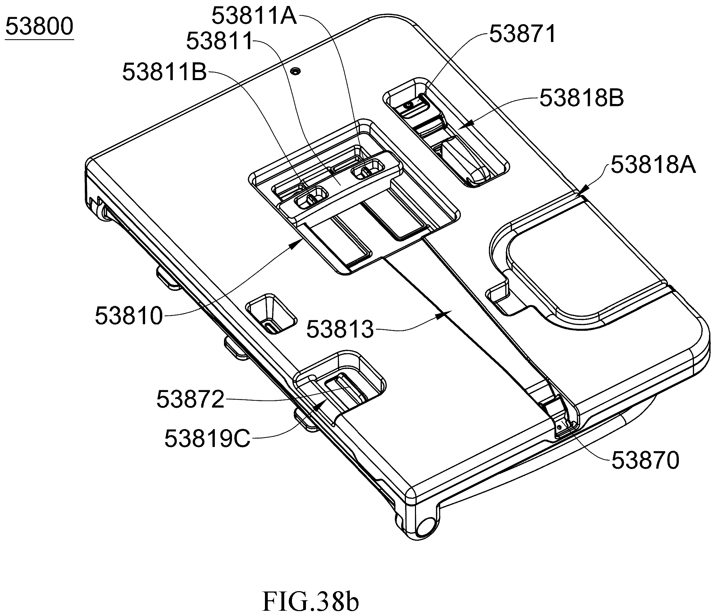

Referring to Figs. 38a and 38b, which further schematically show interior and bottom structures of a bottom plate 53800 in an animal transport apparatus according to an embodiment of the the present disclosure.

As shown in Fig. 38a, in this embodiment, the interior of the bottom plate 53800 of the animal transport apparatus is provided with an ISOFIX rigid connecting frame, which is a rigid frame composed of a main frame 53851 and a connecting frame 53852 engaged with each other. The connecting frame 53852 has a first connector 53853 and a second connector 53854 (e.g., ISOFIX connectors) at the rear end (i.e., the two ends close to the seat backrest) to connect and secure to the anchor points of the vehicle rear seat (e.g., the ISOFIX anchor points between the vehicle rear seat and the seat backrest), thereby securely installing the animal transport apparatus of this embodiment on the vehicle rear seat.

Referring to Fig. 38b, a plurality of corresponding recessed structures is formed on the bottom of the bottom plate 53800 in this embodiment, mainly for storing various accessories of the animal transport apparatus of this embodiment. As shown in the figure, a central recess 53810 is formed in the overall center of the bottom plate 53800, and an adjustment mechanism 53811 is provided in the central recess 53810, with two parallel openings in the adjustment mechanism 53811, each having a corresponding push button 53811A, 53811B. When the user presses the two push buttons 53811A, 53811B towards each other, the adjustment mechanism 53811 is unlocked, releasing the positioning of the adjustment mechanism 53811 and allowing it to move within the central recess 53810 in a direction parallel to a long side of the bottom plate 53800, thereby adjusting the position of the first bottom plate opening and the second bottom plate opening (not shown) on an upper surface of the bottom plate 53800 (i.e., the animal bearing surface), and thus adjusting a position of the fixing pull strap extending from the bottom plate opening to the animal bearing surface. Specifically, if the animal has a small physique, the user can unlock the adjustment mechanism 53811 by pressing the push buttons 53811A, 53811B on the adjustment mechanism 53811, and then move the adjustment mechanism 53811 towards a direction of the fixing buckle (not shown), thereby reducing a distance between the protrusion position of the fixing pull strap and the fixing portion of the fixing buckle, to form an animal positional fixing structure that can adapt to a small animal with short body length.

Furthermore, a guide slot 53813 on the adjustment end of the fixing pull strap is formed on a side of the central recess 53810 on the bottom plate 53800. In this embodiment, a longitudinal strap of the fixing pull strap in a Y-shaped structure extends within the guide slot 53813, and one end (i.e., the adjustment end) of the fixing pull strap is guided through the positioning buckle 53870 at a downstream end of the guide slot 53813 to adjust the length and the tightness of the strap. On the bottom side of the bottom plate 53800, which is away from the side plate (i.e., close to the backrest of the vehicle rear seat), a support rod storage recess 53818A is appropriately formed, matching a shape of the detachable support rod (e.g., support rod 53488, 3588, 53688, or support rod 53888 shown in Fig. 38a). When collapsing the animal transport apparatus of this embodiment, the support rod 53888 may be removed from the bottom plate 53888 and accommodated within the support rod storage recess 53818A. Alternatively, the support rod 53888 may also be pivotably connected to the bottom plate 53800, so that during storage, the support rod 53888 may be pivoted towards the bottom of the bottom plate 53800 and stored within the support rod storage recess 53818A.

A plurality of storage slots is arranged on the bottom of the bottom plate, which are designed to match and accommodate one or more of an installation structure, an ISOFIX soft connecting structure, an ISOFIX rigid connection frame, a LATCH system, a support member, a U-shaped support rod, and an animal head guard.

In one embodiment, on the bottom side of the bottom plate 53800, which is away from the side plate (i.e., close to the backrest of the vehicle rear seat), a storage slot 53818B of LATCH (Lower Anchors and Tethers for Children) system is appropriately formed to store webbing and related accessories of the LATCH system or the ISOFIX soft connecting structure. A strap length adjuster 53871 is provided in the storage slot 53818B for the user to quickly and easily adjust the length of the webbing with the soft connecting structure.

As shown in Fig. 38a, the animal transport apparatus is installed on the rear seat of the vehicle by the ISOFIX rigid connection frame inside the bottom plate 53800. In this embodiment, an adjuster opening 53819C is formed on the bottom side of the bottom plate 53800 close to the side plate (i.e., the side away from the backrest of the vehicle rear seat), and a connecting frame release device 53872 is located inside the adjuster opening 53819C. Specifically, the user may manipulate (e.g., press, push, etc.) the connecting frame release device 53872 to move the connecting frame 53852 of the ISOFIX rigid connection frame relative to the main frame 53851, thereby allowing the first connector 53853 and the second connector 53854 to move towards the vehicle seat backrest to the appropriate position for connecting and fixing to the ISOFIX anchor points between the vehicle rear seat and the seat backrest, as described in the previous embodiments.

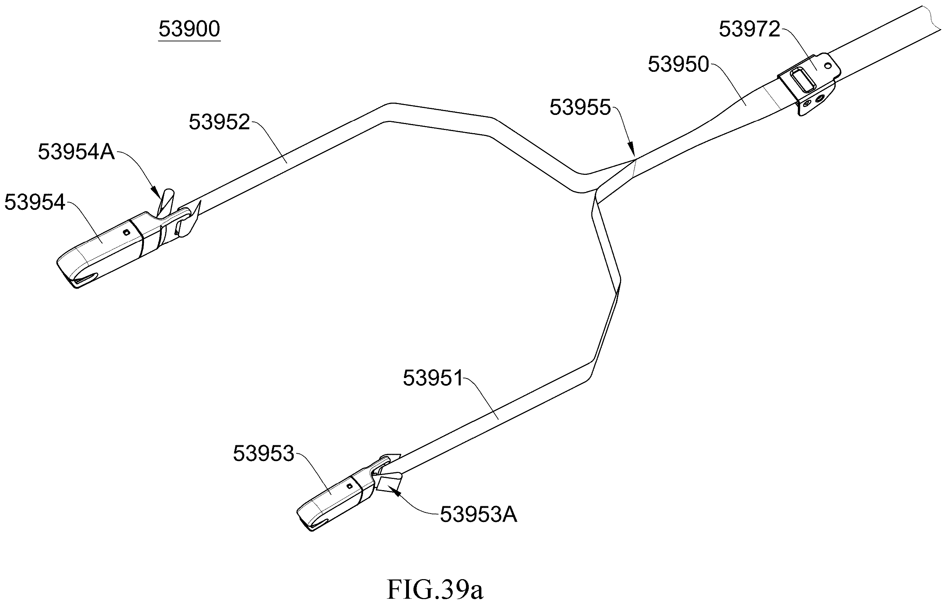

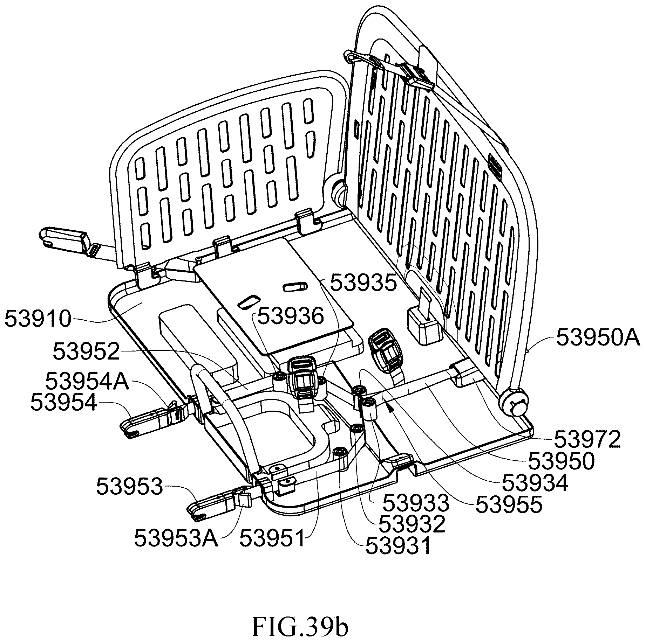

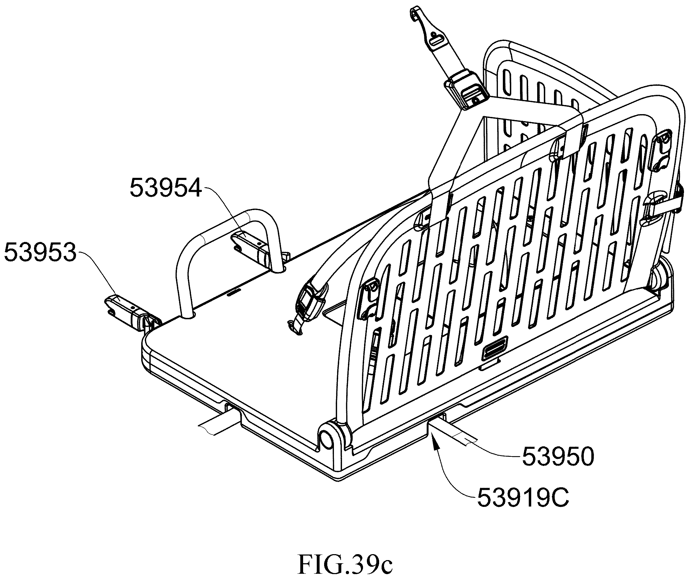

Referring to Figs. 39a to 39c, which schematically show the installation strap structure 53900 and its layout path on the bottom plate 53910 of the animal transport apparatus according to the embodiments of the present disclosure. Fig. 39a is a perspective view of the installation strap structure 53900 of the animal transport apparatus according to this embodiment. Fig. 39b shows an internal structure of the bottom plate of the animal transport apparatus according to this embodiment. Fig. 39c schematically shows the setting of the installation strap structure 53900 in the animal transport apparatus.

As shown in Fig. 39a, the installation strap structure 53900 has a Y-shaped structure, which comprises a first support strap 53951, a second support strap 53952, a first connector 53953 connected to the end of the first support strap 53951, and a second connector 53954 connected to the end of the second support strap 53952. The other ends of the first support strap 53951 and the second support strap 53952 are connected at a junction 53955 (e.g., by sewing) to form a single installation strap 53950, the free end of which passes through the positioning buckle 53972 for adjustment and fixation.

As above described, the installation strap structure 53900 in this embodiment may be an ISOFIX soft connecting structure; that is, the installation strap 53950 and the first support strap 53951 and the second support strap 53952 are all made of soft woven straps, and the first connector 53953 and the second connector 53954, which are respectively provided on the first support strap 53951 and the second support strap 53952, are ISOFIX connectors connected to the ISOFIX anchor points between the vehicle rear seat and the seat backrest (not shown), thereby securely installing the animal transport apparatus of this embodiment on the vehicle rear seat. To prevent the ISOFIX connectors from accidentally detaching from the anchor points, causing instability of the animal transport apparatus or even danger to the animal, the first connector 53953 and the second connector 53954 are respectively provided with their own release straps 53953A and 53954A. The user must consciously press and release the release straps 53953A and 53954A to pull out the first connector 53953 and the second connector 53954 and detach them from the ISOFIX anchor points.

Referring to Figs. 39b (the upper surface of the bottom plate is omitted for clarity) and 39c, the aforementioned installation strap structure 53900 is arranged inside the bottom plate 53910 (on a plane different from the central recess 53810 and the guide slot 53813 shown in Fig. 38). The bottom plate 53910 is provided with a puraltiy of webbing guide wheels 53931 to 53936, which guide the first support strap 53951 and the second support strap 53952 to the junction 53955 to combine into a single installation strap 53950. The adjustment end 53950A of the single installation strap 53950 is exposed to the bottom plate 53910 through the positioning buckle 53972 that is combined with the installation strap opening 53919C on the bottom plate 53910. After the first connector 53953 and the second connector 53954 are fixed to the anchor points of vehicle rear seat, the user may adjust the length and the tightness of the installation strap 53950 (and the first support strap 53951 and the second support strap 53952) by pulling the adjustment end 53950A of the installation strap 53950, to securely installing the animal transport apparatus on the vehicle rear seat by the positioning buckle (e.g., "A-LOCK") 53972.

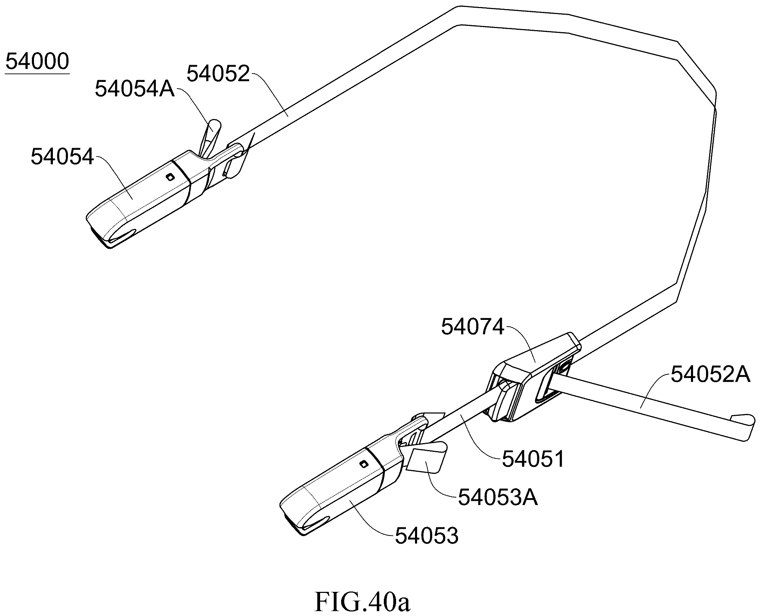

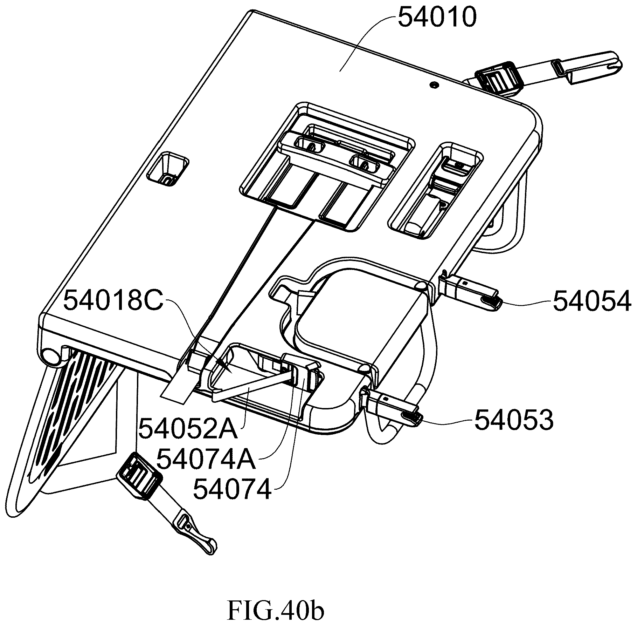

Referring to Figs. 40a and 40b, which schematically show the installation strap structure 54000 and its length adjuster 54074 of the animal transport apparatus according to an embodiment of the present disclosure.

As shown in Fig. 40a, the main webbing 54052 of the installation strap structure 54000 has one end connected to the second connector 54054, and the other end that passes through one end of the length adjuster 54074 and extends out of the side opening of the length adjuster 54074 as the adjustment end 54052A. The user can adjust the retractable webbing 54052 by controlling the length adjuster 54074. The other end of the length adjuster 54074 is connected to the webbing 54051, and the end of the webbing 54051 is connected to the first connector 54053. As above described, the first connector 54053 and the second connector 54054 may be ISOFIX connectors, to prevent the first connector 54053 and the second connector 54054 from accidentally detaching from the anchor points, and causing instability of the animal transport apparatus or even danger to the animal. The first connector 54053 and the second connector 54054 are respectively provided with their own release straps 54053A and 54054A, the user must consciously press and release the release straps 54053A and 54054A to pull out the first connector 54053 and the second connector 54054 and detach them from the ISOFIX anchor points.

As shown in Fig. 40b, in this embodiment, on the bottom of the bottom plate 54010, the short side of the bottom plate of the animal transport apparatus, close to the installation strap connector, there is an adjuster installation slot 54018C in which a length adjuster 54074 is fixedly mounted. As shown in the figure, after the length adjuster 54074 is embedded in the installation slot 54018C, the adjustment end 54052A of the installation strap structure 54000 and a side control part 54074A of the length adjuster 54074 are exposed out of the bottom plate 54010, for example, the user can push the side control part 54074A from a right side of the figure to release the locking of the main webbing 54052 and allow the extension or retraction of the webbing 54052 to adjust the extent to which the first connector 54053 and the second connector 54054 extend from the bottom plate 54010, thereby adjusting the installation position of the animal transport apparatus on the seat.

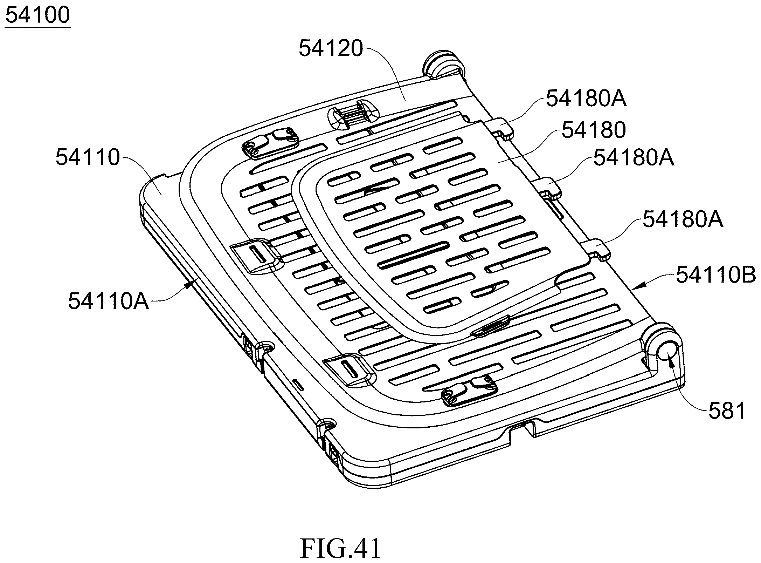

As above described, according to this embodiment, the side plate and the head guard (if have) of the animal transport apparatus are connected to the corresponding long side and short side of the bottom plate in a movable (or detachable) manner. Specially, as shown in Fig. 41, the side plate 54120 of the animal transport apparatus 54100 is pivotably connected to the long side 54110B of the bottom plate 54110, that is, the side plate 54120 may pivot relative to the bottom plate 54110 about a pivot axis 581. When a user intends to collapse the animal transport apparatus of this embodiment, the side plate 54120 may be folded towards the bottom plate 54110 by pressing the release button (not shown) at the pivot axis 581 to be directly stacked on the bottom plate 54110. Additionally, in this embodiment, the head guard 54180 is detachably engaged with the short side of the bottom plate 54110 through a plurality of snap-fit structures 54180A at the bottom side of the head guard 54180; when collapsing the animal transport apparatus of this embodiment, the user may easily detach the head guard 54180 from the bottom plate 54110, stack the head guard 54180 on the side plate 54120 for storage, thereby effectively reducing the storage space required by the animal transport apparatus when not in use.

Furthermore, since the head guard 54180 may be detachably connected to the bottom plate 54110, the head guard 54180 can be removed at any time when the animal needs care or attention from the owner while in a moving vehicle.

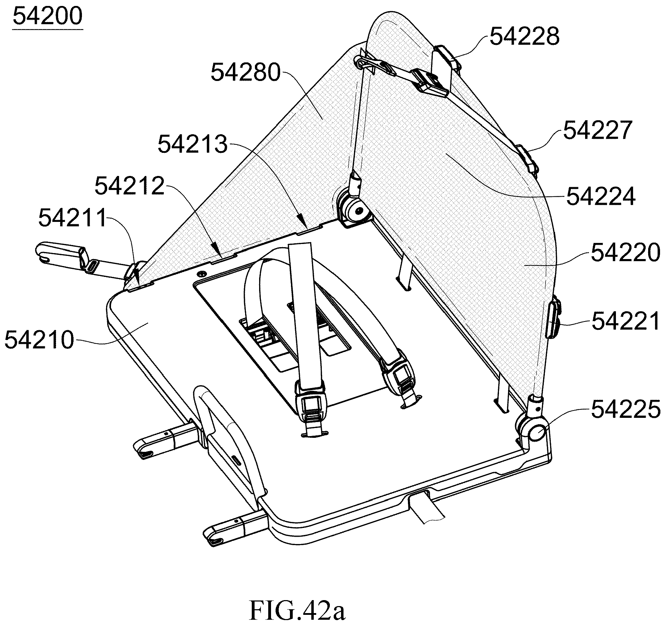

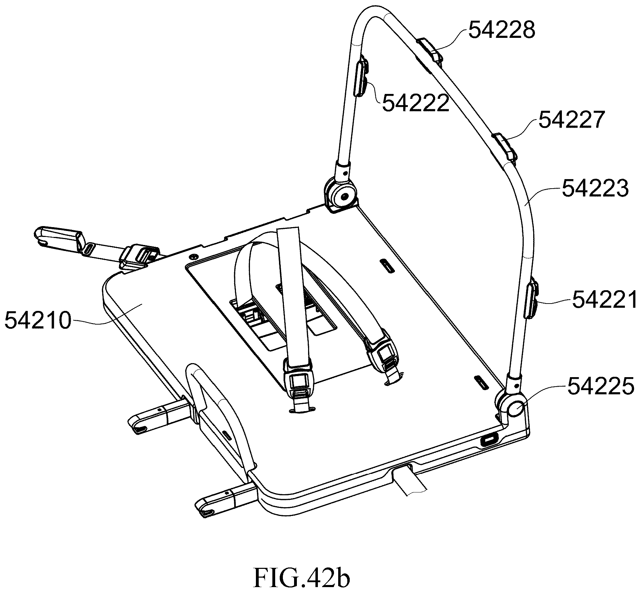

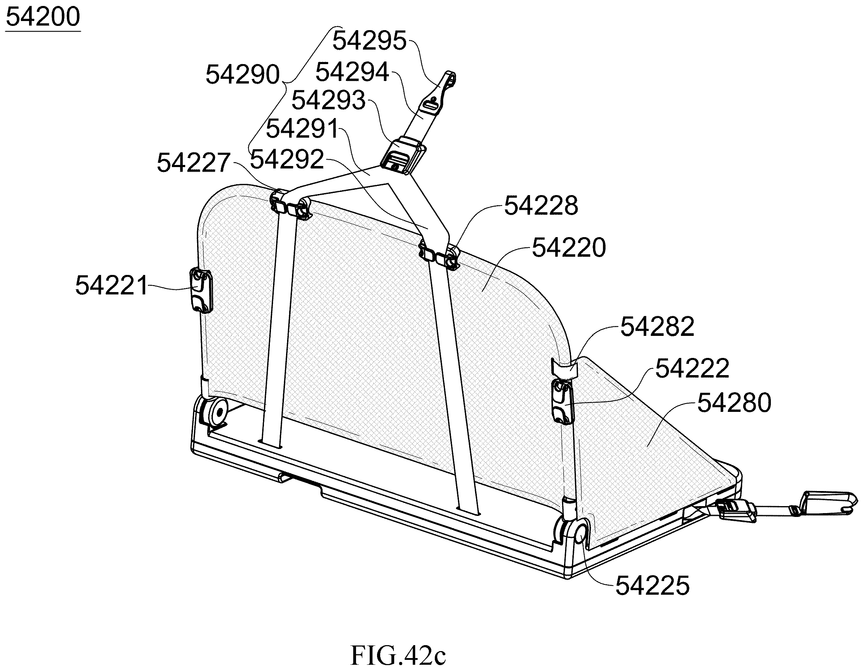

Referring to Figs. 42a to 42c, which schematically show an animal transport apparatus 54200 and its main structure according to another embodiment of the the present disclosure. The animal transport apparatus 54200 of this embodiment is similar to the animal transport apparatus 53400 shown in Figs. 34a and 34b, or the animal transport apparatus 53700 shown in Fig. 37 in the bottom plate structure and composition, comprising a bottom plate, fixing pull straps, fixing buckle straps, support rods, connectors, and an upper anchor assembly fixed to the bottom plate, etc.

The difference between the animal transport apparatus 54200 of this embodiment and the previous embodiments lies in that, in this embodiment, the side plate 54220 and the head guard 54280 of the animal transport apparatus 54200 are made of soft materials, rather than the rigid plastic materials in the previous embodiment ts. Specifically, the side plate 54220 of the animal transport apparatus 54200 is composed of a U-shaped support pipe 54223 as the main structure and a support fabric 54224 sleeved on it, and the head guard 54280 is also formed by a support fabric connected to the short side of the bottom plate 54210 and the short side of the side plate 54220.

In this embodiment, the U-shaped support pipe 54223 is connected to the bottom plate 54210 by a pivot axis 54225, such that the side plate 54220 of the animal transport apparatus 54200 may pivot relative to the bottom plate 54210 about the pivot axis 54225. When the user wants to collapse the animal transport apparatus 54200 of this embodiment, the U-shaped support pipe 54223 of the side plate 54220 may be folded along with the support fabric 54224 towards the bottom plate 54210 by pressing the release button (not shown) at the pivot axis 54225 and than stacked on the bottom plate 54210. Alternatively, the user may also remove the support fabric 54224 from the side plate 54220 before storage, and simply stack the U-shaped support pipe 54223 on the bottom plate 54210.

In this embodiment, the side plate 54220 of the animal transport apparatus 54200 has a first guide 54221 and a second guide 54222, through which the vehicle rear seat safety belt (not shown) is guided and positioned therein when being installed (as previous description regarding guides 51821, 51921, 53721, 53722), to prevent the safety belt from swaying or swinging arbitrarily. For example, in this embodiment, the first guide 54221 and the second guide 54222 are detachably connected (e.g., by buckles, clips, or screws) to the two short sides of the side plate 54220 (more specifically, buckled onto the two short sides of the U-shaped support pipe 54223 with the support fabric 54224 sleeved on it), such that the vehicle rear seat safety belt may pass through the first and second guides to be positioned therebetween. Optionally, in an alternative embodiment, a pair of tether guides 54227 and 54228 is arranged on the side plate 54220 of the animal transport apparatus 54200 close to the upper side (e.g., also by buckles, clips, or locks). The first tether 54291 and the second tether 54292 of the upper anchor assembly may pass through the tether guides to be positioned therebetween (as previous description regarding guides 53723 and 53724). That is, when the upper anchor assembly 54290 is fixed to the corresponding fixing point above or behind the vehicle rear seat with its connecting tether 54294 and connecting hook 54295 (not shown), the first tether 54291 and the second tether 54292, which are as long as the extension strap, are fixedly positioned by the tether guides 54227 and 54228 on the side plate 54220, and are secured to the bottom plate 54210 and have an overall strap length in contact with the side plate 54220, thereby providing more stable support for the animal transport apparatus 54200.

In this embodiment, the head guard 54280 is also a support fabric, one side of which is connected to the bottom plate 54210 through a plurality of snap-fit parts or connecting plugs (not shown) that are respectively snapped into or inserted into corresponding fixed grooves 54211, 54212, 54213 formed on the short side of the bottom plate 54210. The head guard 54280 has a connector 54282 on a side connected to the side plate 54220; the head guard 54280 is connected to the side plate 54220 through the connector 54282. For example, the connector 54282 may be an adhesive piece (e.g., Velcro) that provides the head guard 54282 with an adhesive connection to the side plate 54220.

In this embodiment, since the side plate 54220 and the head guard 54280 are both primarily made of support fabrics, in addition to providing storage elasticity, they can also significantly reduce the overall weight of the animal transport apparatus 54200, making it easier to carry or transport. Additionally, the support fabric 54224 of the side plate 54220 and the support fabric of the head guard 54280 may be mesh cloth or fabric material that allows external visibility, enabling the user (the animal owner or caregiver) to easily observe the animal's condition inside the animal transport apparatus 54200 from the outside of the head guard 54280 and facilitating the front-seat driver or the passenger to monitor the real-time condition of the animal inside the animal transport apparatus 54200 on the rear seat.

As above described, the animal transport apparatus according to the present disclosure is constructed as an L-shaped or U-shaped structure; compared to a closed storage space formed by surrounding side walls, the animal transport apparatus according to the present disclosure is more suitable for larger animals or pets. According to the present disclosure, the length of the animal transport apparatus is approximately between, for example, but not limited to, 70 cm and 100 cm, which is helpful to carrying medium to large dogs.

Additionally, the animal transport apparatus of the present disclosure may serve as an animal containment unit used on a seat of a vehicle. Further description will be made by taking an animal containment unit used on the seat of the vehice as an example.

According to the present disclosure, the exemplary animal containment units are designed to have strength sufficient to hold larger animals, e.g., up to 50 lbs., during a car crash event without failing while maintaining flexibility sufficient to cushion the animal.

In one aspect, the unit is reinforced with webbing across its front and top sides to absorb forces that would be applied to the unit in the event of a car crash, e.g., as the animal inside is thrown against the interior of the unit. In another aspect, a latch system comprising multiple latches rigidly mounted to the base of the unit is used to secure the bottom/rear of the unit to anchor points in the vehicle, (i.e., rigid elements coupled to the frame of the vehicle) accessible e.g., through gaps in the vehicle seat. In still another aspect, a tether on the top/rear of the unit is secured, e.g., to a further anchor point in the vehicle, e.g., on a rear of a vehicle seat on which the unit is mounted. These features provide a continuous loop of protection around the unit, e.g., 360 degrees of support in a longitudinal (front-back) and transverse (up-down) plane.

In an animal transport apparatus comprising a bottom and at least one side, the bottom may be formed by a base structure, and the at least one side can be formed by a frame structure.

In an animal transport apparatus comprising a containment structure and a webbing structure, the containment structure may be formed by the base structure and the frame structure.

In an animal transport apparatus comprising a bottom, at least one side, and a mounting structure, the bottom and the at least one side may constitute a base structure, the bottom may be a base of the base structure, the at least one side may be a base frame of the base structure, and the mounting structure may comprise a latch carriage.

In an animal transport apparatus comprising a bottom, at least one side, and a mounting structure, the bottom and the at least one side may constitute a base structure, the bottom may be a base of the base structure, and the mounting structure may comprise a latch system.

In an animal transport apparatus comprising a bottom, at least one side, and a mounting structure, the bottom and the at least one side may constitute a base structure, the bottom may be a base of the base structure, the at least one side may be a base frame of the base structure, and the mounting structure may comprise a latch system and an actuator.

In an animal transport apparatus comprising a bottom and a mounting structure, the bottom may be a base of the animal containment unit, and the mounting structure may comprise a latch system.

In an animal transport apparatus comprising a bottom, at least one side, and a mounting structure, the bottom and the at least one side may constitute a base structure, the bottom may be a base of the base structure, the at least one side may be a base frame of the base structure, and the mounting structure may comprise a latch system and an actuator.

Specifically, the units described herein generally comprise a frame structure supported by a base structure. The frame structure for the first and second exemplary embodiments comprises a front member and a rear member curved in the shape of a U, with ends that couple to the base structure and extend substantially orthogonally from the base structure and a top portion formed therebetween. In a first exemplary embodiment, the frame structure further comprises two middle support members connecting the front and rear members. In a second exemplary embodiment, a spanner bar is used to connect the front and rear members. The frame structure supports containment materials (e.g., soft goods) defining portions of the exterior surface of the unit and the interior surface defining the space within which the animal is contained. In some embodiments, the containment materials comprise a heavy duty outer layer, a middle stiffener layer, and an interior waterproof layer that can be removed, e.g., for cleaning. In some embodiments, the webbing can be woven into one or more layers of the containment materials to provide a secure but flexible surface that can absorb the forces applied thereto in a car crash event.

The base structure for the first and second exemplary embodiments comprises a molded base (e.g., molded from plastic) and a latch system. The first exemplary embodiment additionally comprises a rigid base frame, e.g., assembled from steel. The latch system comprises multiple rigid latches (e.g., two latches) that can be projected or pivoted out the bottom/rear of the base so that the latches can be rigidly coupled to anchor points in the vehicle to install the unit in the vehicle. The latches can be withdrawn into the base, e.g., when the unit is being uninstalled, carried or stored.

In one embodiment, the latch system comprises a latch carriage coupled to the base frame that supports the latches and facilitates the actuation of the latches. The latch carriage can be translated (e.g., slid) from a first side of the device to a second side of the device so that the latches can be extended from the base/rear in different positions, in view of the locations in the vehicle seat where the seat frame is accessible, so that the unit can be installed on either side of the rear car seat, e.g., driver side or passenger side. Additionally, the latch carriage can be coupled with a button on the frame that can, e.g., lock the latches in the projected position or the withdrawn position and/or release the latches to transition the latches in and out of the base. In another embodiment, the latches can be pivoted into and out of the rear of the base. Similar to above, the latches can be locked or unlocked and translated to either side of the device, to be described in greater detail below.

In still another aspect, the unit can be transitioned between an expanded state and a collapsed state. In one embodiment, the middle support members can comprise two members (a front middle support member and a rear middle support member) that can be attached to provide rigid support between the front member and rear member of the frame structure and define the top of the unit in the expanded state. The front and rear members of the middle support members can be detached from each other via a sliding actuator, whereupon the front middle support members can be rotated, relative to the front member, into a position flush with the front member and the rear middle support members can be rotated, relative to the rear member, into a position flush with the rear member. The front member (and front middle support member) can then be rotated toward the base structure (collapsed) via front rotating actuators and positioned flush with or within the base structure, whereupon the rear member (and rear middle support member) can be rotated toward the base structure (collapsed) via rear rotating actuators and positioned flush with the front member.

The sliding actuator of one embodiment comprises a length of tubing slidable over the front and rear members that can be locked in either a first position extended toward the opposing member so that the opposing member can slide thereinto or a second position retracted from the opposing member so that the opposing member is released and free to collapse. In another embodiment, the spanner bar can be detached from one or both the front member and/or the rear member, after which the front and rear members can be collapsed toward the base structure.

It is noted that a first animal containment unit according to a first exemplary embodiment, a second animal containment unit according to a second exemplary embodiment and a third animal containment unit according to a third exemplary embodiment are described herein and depicted in the Figures. However, it should be understood that various features described for the units of the first and second exemplary embodiments can interchanged among the embodiments in any suitable manner or may be implemented in other designs for animal containment units, to be described in further detail below, and the present disclosure is not limited to the specific arrangements described in the first, second and third exemplary embodiments and depicted in the Figures.

It should be further understood that the units described herein are generally six-sided and are described with regard to a front, a rear, a first side (e.g., left side, relative to a front view), a second side (e.g., right side, relative to a front view), a bottom and a top. When the units are installed in a vehicle, the front of the unit faces the front of the vehicle, the rear of the unit faces the rear of the vehicle, etc. However, it should be understood that reference to a "side" of the units is used for ease of explanation, and that multiple different components of the unit define the exterior of the unit. For example, the "front" of the unit can comprise multiple components comprising the front member of the frame structure, the front of the containment materials, a front portion of the base structure, etc. Additionally, the terms "inside" and/or "interior" and/or "internal" may refer to features in a direction toward the center of the unit, relative to a certain component of the unit, and the terms "outside" and/or "exterior" and/or "external" may refer to features in a direction away from the center of the unit, relative to a certain component of the unit.

### First Embodiment

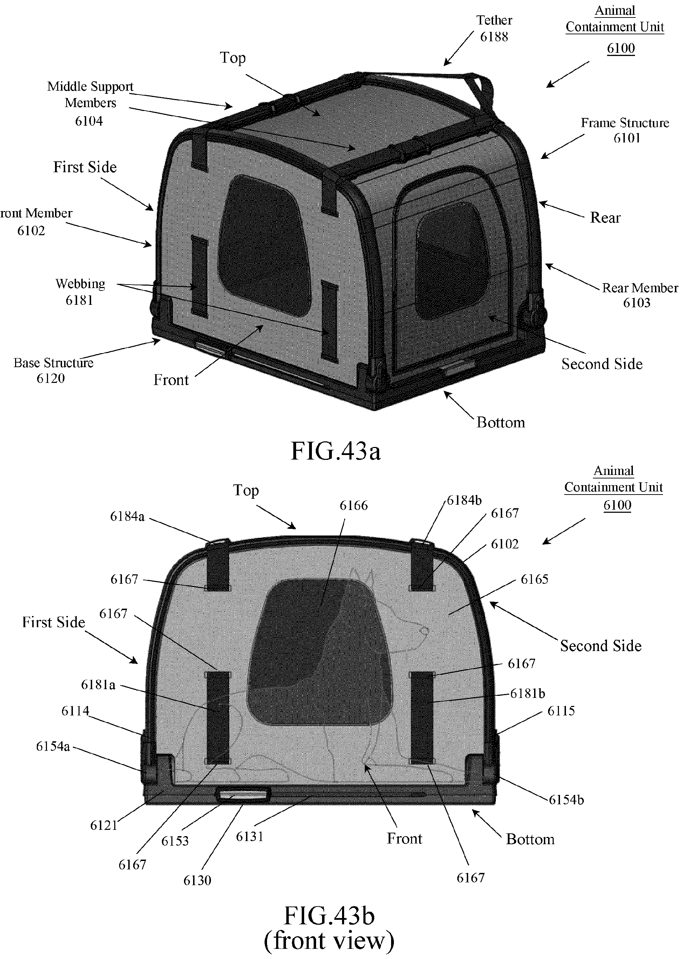

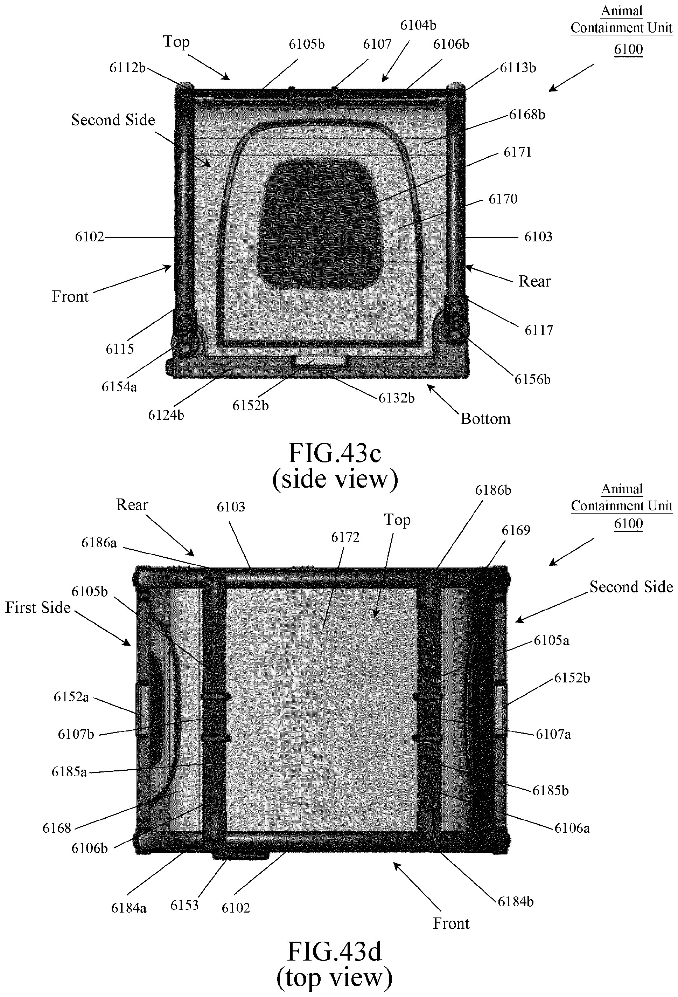

Figs. 43a-43d show views of an animal containment unit 6100 according to a first exemplary embodiment. The unit 6100 is generally six-sided and is described with regard to a front, a rear, a first side (e.g., left side, relative to a front view), a second side (e.g., right side, relative to a front view), a bottom and a top. These sides are labeled in Figs. 43a-43d and these labels are omitted in the subsequent figures. Fig. 43a shows a perspective view of the unit 6100; Fig. 43b shows a front view of the unit 6100; Fig. 43c shows a side view of the unit 6100; and Fig. 43d shows a top view of the unit 6100.

### Frame Structure

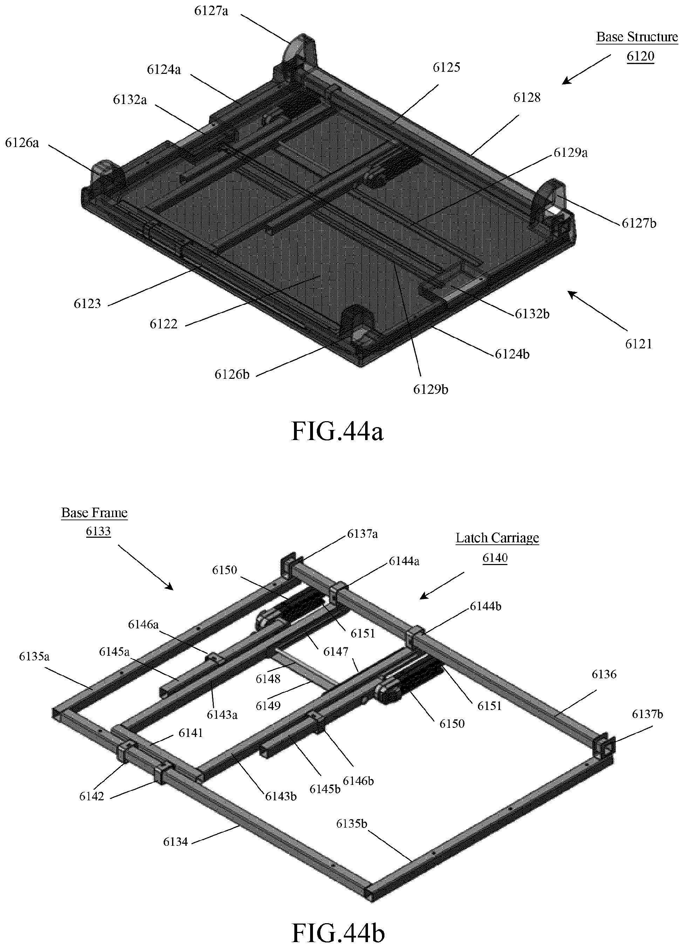

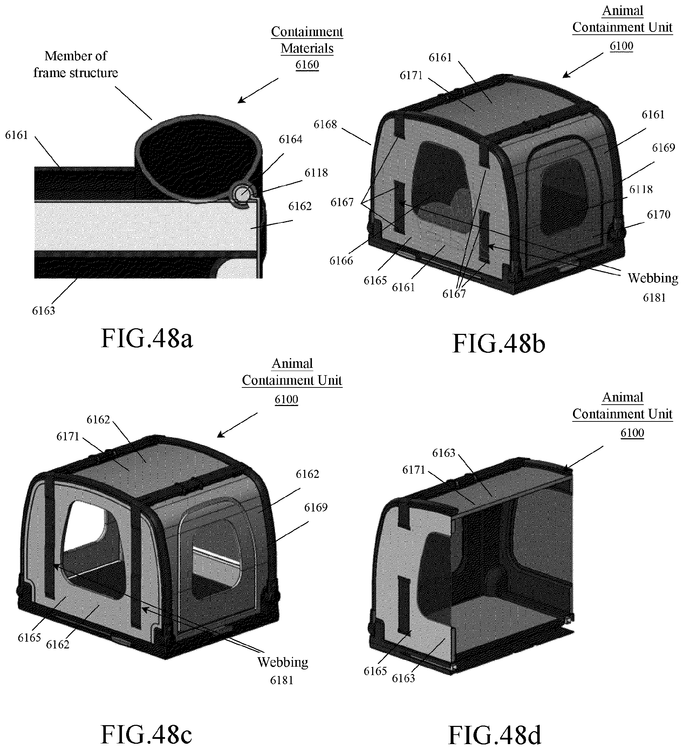

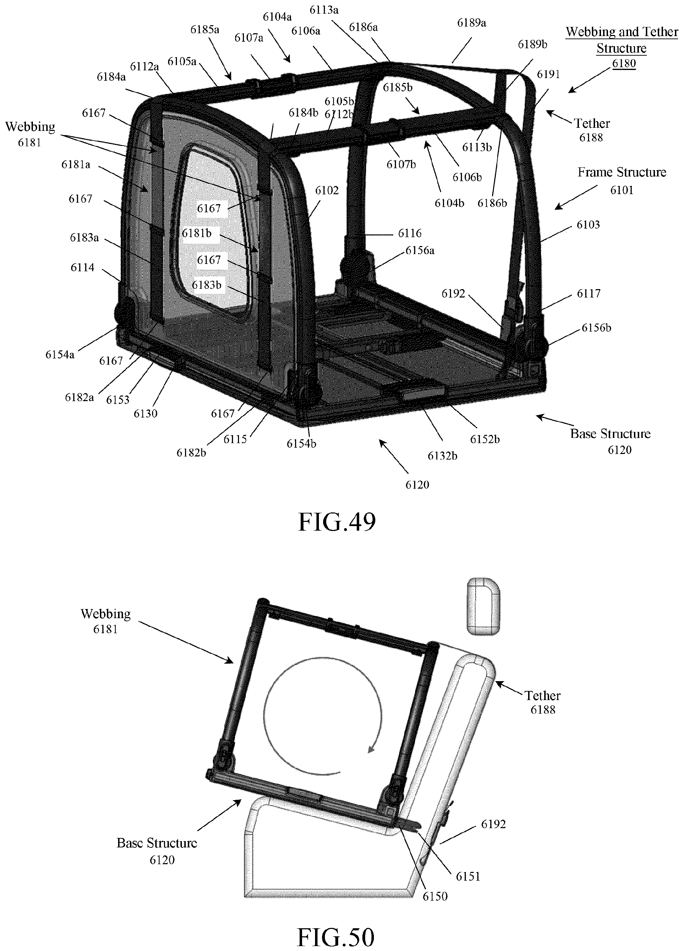

The unit 6100 comprises a frame structure 6101 coupled to and supported by a base structure 6120, to be described further below with regard to Figs. 44a-44c. The unit 6100 comprises containment materials 6160 (e.g., soft goods) forming the exterior of the unit 6100, to be described in further detail below with regard to Figs. 48a-48d. The unit 6100 further comprises a webbing and tether structure 6180 for containing the force of an animal during a vehicle crash, to be described in further detail below with regard to Fig. 49. Fig. 49 shows the frame structure 6101 and the webbing and tether structure 6180 in greater detail with the containment materials 6160 removed.

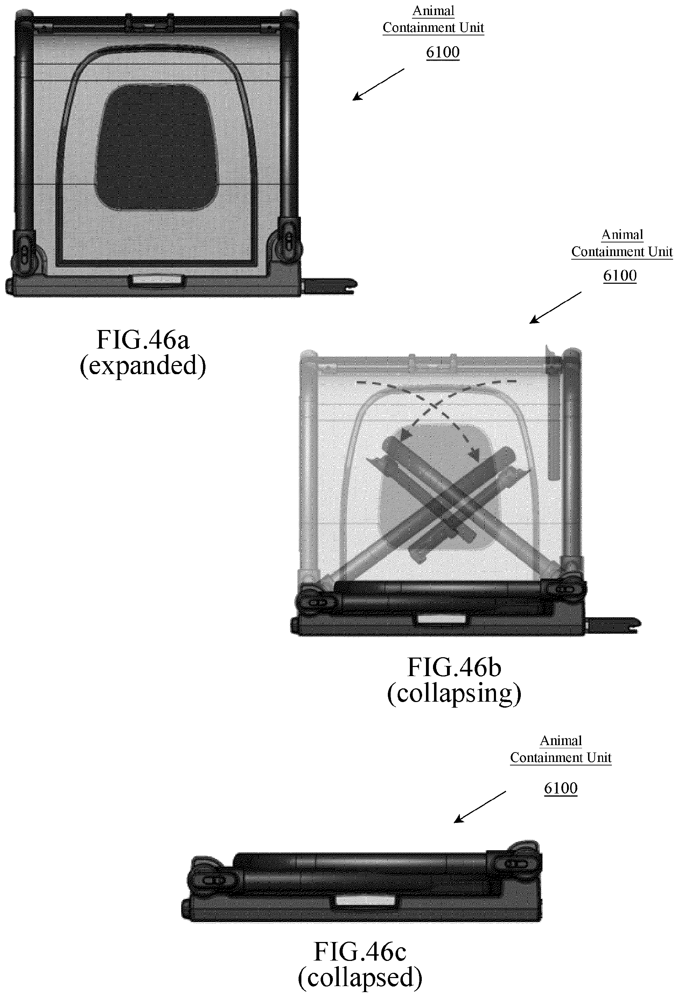

The frame structure 6101 comprises a front member 6102, a rear member 6103, and middle support members 6104 (a first middle support member 6104a and a second middle support member 6104b) connecting the front member 6102 and the rear member 6103 when the unit 6100 is in the expanded state, to be described in further detail below with regard to Figs. 46a-46c. The front member 6102 is curved in a shape similar to a U and couples to the base structure 6120 at both a first end 6114 and a second end 6115 via front rotating actuators 6154a, 6154b. The rear member 6103 is shaped similarly to the front member 6102 in a shape similar to a U and couples to the base structure 6120 at both a first end 6116 and a second end 6117 via rear rotating actuators 6156a, 6156b. It is noted that, in this example, the rear member 6103 is slightly shorter than the front member 6102 and is mounted to the base structure 6120 at a position slightly higher than the front member 6102 to facilitate the collapse of the unit 6100 and the definition of a rear cavity 6128 in the base structure 6120 for latch extension and withdrawal, to be described in further detail below.

The front member 6102 extends from the first end 6114 toward the top of the unit 6100, curves approximately 90 degrees toward the second side and across the top of the unit 6100, and curves approximately 90 degrees toward the bottom of the unit 6100 and to the second end 6115. The rear member 6103 extends from the first end 6116 toward the top of the unit 6100, curves approximately 90 degrees toward the second side and across the top of the unit 6100, and curves approximately 90 degrees toward the bottom of the unit 6100 and to the second end 6117. The front member 6102 of this embodiment comprises one unitary piece that extends from the first end 6114 to the second end 6115. Alternatively, the front member may comprise multiple pieces (e.g., having different curvatures to define the curvature of the front member 6102) joined together during assembly of the unit 6100. Similarly, the rear member 6103 can comprise one unitary piece or can comprise multiple pieces (e.g., having different curvatures to define the curvature of the rear member 6103) joined together during assembly.

In the present example, the middle support members 6104 comprise two pieces, e.g., a front, middle support member 6105 (a first front middle support member 6105a of the first middle support member 6104a and a second front middle support member 6105b of the second middle support member 6104b) and a rear middle support member 6106 (a first rear middle support member 6106a of the first middle support member 6104a and a second rear middle support member 6106b of the second middle support member 6104b) that can be joined and/or separated through operation of respective sliding actuators 6107 (a first sliding actuator 6107a of the first middle support member and a second sliding actuator 6107b of the second middle support member), to be described further below with regard to Figs. 46a-46c. The front middle support members 6105 are coupled to the front member 6102 at respective front rotating joints 6112 (a first front rotating joint 6112a of the front member 6102 and a second front rotating joint 6112b of the front member) and the rear middle support members 6106 are coupled to the rear member 6103 at respective rear rotating joints 6113 (a first front rotating joint 6112a of the front member 6102 and a second front rotating joint 6112b of the front member).

It is noted that, in this example, the front and rear middle support members 6105, 6106 are not detachable from their respective rotating joints 6112, 6113 and the collapsibility of the unit 6100 is provided via the actuators 6107 for separating the front and rear middle support members 6105, 6106. However, in other embodiments, the middle support members may comprise unitary pieces that are not separable into front and rear middle support members, and the collapsibility of the unit 6100 may be facilitated via a mechanism for detaching the middle support members from the rotating joints to separate the middle support members from the front and/or rear members, as will be described in greater detail below.

In the present example, when the middle support members 6104 are joined, e.g., when the unit 6100 is in the expanded state for transporting an animal in a vehicle, the middle support members 6104 extend rigidly from the front rotating joints 6112 of the front member 6102 to the rear rotating joints 6113 of the rear member 6102. The front rotating joints 6112 are oriented generally orthogonally to the front member 6102 to direct the middle support members 6104 toward the rear, where the middle support members 6104 are received in the rear rotating joints 6113 that are also oriented generally orthogonally to the rear member 6103 toward the front. When the middle support members 6104 are separated (the front middle support members 6105 are detached from the rear middle support members 6106 via the actuator 6107), e.g., to collapse the unit 6100, the front rotating joints 6112 may be rotated 90 degrees and oriented toward the bottom of the unit 6100 so that the front middle support members 6105 are brought flush with the front member 6102 and the rear rotating joints 6113 can be rotated 90 degrees and oriented toward the bottom of the unit 6100 so that the rear middle support members 6106 are flush with the rear member 6103.

The front rotating actuators 6154 can then be rotated 90 degrees and oriented toward the rear so that the front middle support members 6105 and front member 6102 are received within or flush with the base structure 6120, whereupon the rear rotating actuators 6156 can be rotated 90 degrees and oriented toward the front so that the rear middle support members 6106 and the rear member 6103 are flush with the collapsed front member 6102, as will be described in greater detail below with regard to Figs. 46a-46c. As noted above, the rear member 6103 is slightly shorter than the front member 6102 and the rear rotating actuators 6156 are raised relative to the front rotating actuators 6154, as shown, e.g., in Fig. 43c, such that, when the unit 6100 is collapsed, the rear member 6103 and/or rear middle support members 6106 fit snugly against and/or within the collapsed front member 6102 and/or front middle support members 6105.

The front and rear rotating actuators 6154, 6156 can be locked in either of the positions described above, e.g., oriented so that the front member 6102 extends toward the top of the unit 6100 and defines a front surface of the unit 6100 and the rear member 6103 extends toward the top of the unit 6100 and defines a rear surface of the unit 6100 (the expanded state) or oriented so that the front member 6102 extends toward the rear of the unit 6100 and the rear member 6103 extends toward the front of the unit 6100 (the collapsed state). Thus, the frame structure 6101 can be locked in the expanded state to provide a rigid frame defining the interior/exterior of the unit 6100 and the frame structure 6101 can be locked in the collapsed state for ease of transportation and/or storage of the unit 6100.

With reference to Figs. 48a-48d, the frame structure 6101 supports the containment materials 6160 defining the exterior and interior surfaces of the unit 6100, comprising containment materials 6160 for the front 6165, the first side 6168, the second side 6169, the top 6172 and the rear 6173 of the unit 6100. Some or all members of the frame structure 6101 may be formed to comprise an extrusion channel 6118, as shown in Fig. 48a, extending along the length of the member for receiving a plastic rod 6164 running through an end of the containment materials 6160. The plastic rod 6164 of the containment materials 6160 can be slid or snapped into the extrusion channel 6118 to mount the containment materials 6160 onto the members of the frame structure 6101, to be described further below with regard to Figs. 48a-48d. In the present example, only the front and rear members 6102, 6103 comprise the extrusion channel 6118 and the middle support members 6104 do not directly support the containment materials 6160 for, e.g., the first side 6168, the second side 6169 or the top 6172. However, in other embodiments, the middle support members 6104 may also comprise extrusion channels 6118 to support the containment materials 6160.

With reference to Figs. 44b and 49, the frame structure 6101 further supports a webbing and tether structure 6180 comprising webbing 6181 fixed at a first end to a front member 6134 of the base frame 6133 and run up the front of the unit 6100, around the front member 6102 of the frame structure 6101, and across the top of the unit 6100 to a second end fixed to the rear member 6103 of the frame structure 6101. As would be understood by those skilled in the art, the webbing 6181 is formed of a material similar to that of which seatbelts are formed so that it is capable of withstanding the forces that will be exerted thereon when a pet is thrown against the webbing in a vehicle accident.

The webbing 6181 comprises two spans, 6181a and 6181b, extending from front attachment points 6182 on the front member 6134 of the base frame 6133, toward the top of the unit 6100, around the exterior of the front member 6102 at wrap points 6184, and toward the rear of the unit 6100 to rear attachment points 6186 on the rear member 6103, to be described further below with regard to Fig. 49. The webbing 6181 has fix points at the bottom-front and the top-rear of the unit 6100, as described above, to provide a force containment structure extending across the front and top of the unit 6100. The frame structure 6101 further supports a tether 6188 fixed at a first end (comprising two spans) to the rear member 6103 of the frame structure 6101 at locations similar to those at which the webbing 6181 is fixed to the rear member 6103 (e.g., rear attachment points 6186). The tether 6188 of this embodiment extends from the top/rear of the unit 6100 and is attached to an anchor structure in the vehicle, e.g., a vehicle frame structure on the rear of the vehicle seat, as will be described in greater detail below with regard to Fig. 50. It will be appreciated that the webbing 6181 can be directly connected to the tether 6188 such that the webbing 6181 and tether 6188 combination is fixed to the base frame 6133 on one end and can be attached to an anchor structure in the vehicle on another end.

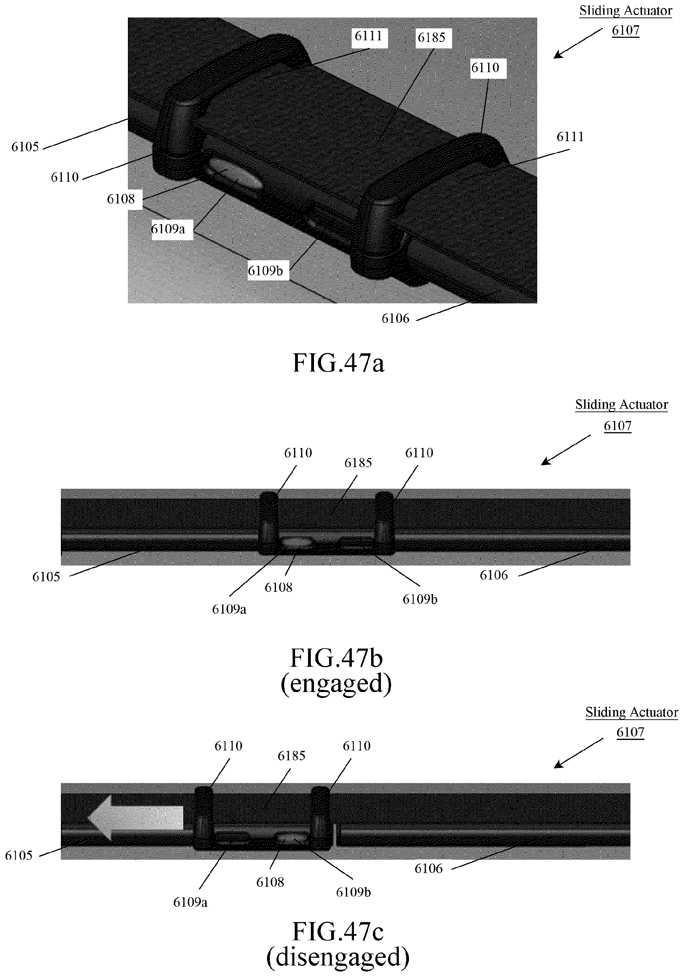

The frame structure 6101 can be formed from any suitably strong material such as, for example, extruded metal tubing (e.g., aluminum). The aluminum tubing provides a rigid frame structure 6101 that is sufficiently strong to make the unit 6100 robust but sufficiently flexible to absorb the force of an animal impact and deform to reduce the impact on the animal. The actuators 6107 can comprise metal tubing shaped similarly to the frame structure, but with internal dimensions slightly larger than the external dimensions of the middle support members 6104 so that the middle support members 6104 (the rear ends of the front middle support members 6105 and the front ends of the rear middle support members 6106) can be slidably received therewithin and the actuators 6107 can slide thereon to engage and/or disengage (e.g., join or separate) the front and middle support members 6105, 6106, to be described in greater detail below with regard to Figs. 47a-47c.

### Base Structure

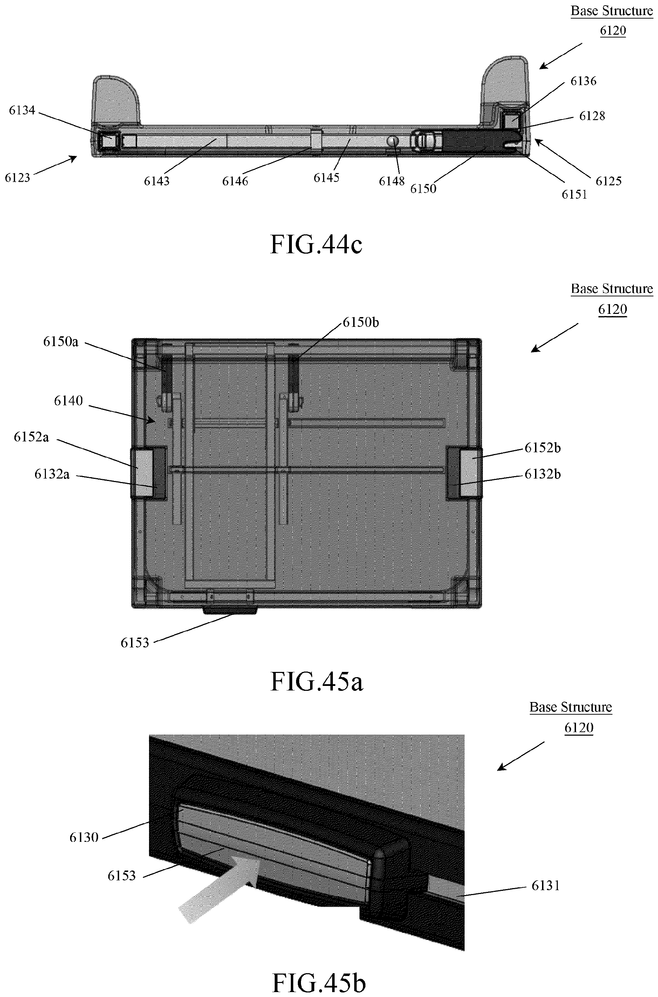

Figs. 44a-44c shows a base structure 6120 of the unit 6100 of the first exemplary embodiment. The base structure 6120 comprises a base 6121 and a base frame 6133 mounted to the base 6121. A latch carriage 6140 is slidably coupled to the base frame 6133. Fig. 44a shows the base structure 6120 and describes the base 6121 in greater detail. Fig. 44b shows the base frame 6133 and a latch carriage 6140 of the base structure 6120. Fig. 44c shows a side view of the base structure 6120.

The base 6121 may, for example, be molded from plastic. The base 6121 comprises a bottom 6122 and frame (not to be confused with the base frame 6133 described below) comprising a front portion 6123, side portions 6124 (a first side portion 6124a and a second side portion 6124b) and a rear portion 6125. The front portion 6123, side portions 6124 and rear portion 6125 are shaped with internal channels to receive corresponding members of the base frame 6133 to mount the base frame 6133 on the base 6121. On the front corners of the base 6121 (on the front portion 6123 near the intersection of the front portion 6123 and the first side portion 6124a; and on the front portion 6123 near the intersection of the front portion 6123 and the second side portion 6124b) are respective front recesses 6126 (a first front recess 6126a and a second front recess 6126b) extending toward the top of the unit 6100 for receiving and coupling to the front rotating actuators 6154, to be described in greater detail below with regard to Figs. 47a-47c. Similarly, on the rear corners of the base 6121 (on the rear portion 6125 near the intersection of the rear portion 6125 and the first side portion 6124a; and on the rear portion 6125 near the intersection of the rear portion 6125 and the second side portion 6124b) are respective rear recesses 6127 (a first rear recess 6127a and a second rear recess 6127b) extending toward the top of the unit 6100 for receiving and coupling to the rear rotating actuators 6156.

The interior channel formed in the rear portion 6125 of the base 6121 (for mounting the base frame 6133 (rear member 6136) to the base 6121) is raised relative to the channels formed in the front portion 6123 and the side portions 6124, as shown in detail in Fig. 44c. In the rear portion 6125, below the channel for the base frame 6133, is a rear cavity 6128 through which the latches 6150 of the latch carriage 6140 can be extended, to be described further below.

The base 6121 further comprises a first slot 6129a formed therein extending side-to-side (left-right) across the bottom 6122 and a second slot 6129b formed therein extending side-to-side (left-right) across the bottom 6122. The first slot 6129a is located further toward the rear of the unit 6100 than the second slot 6129b. The first and second slots 6129 facilitate the side-to-side translation of the latch carriage 6140, as will be described further below.

The base frame 6133, as shown in detail in Fig. 44b, comprises the front member 6134, two side members 6135 (a first side member 6135a and a second side member 6135b) and a rear member 6136. The front member 6134, the side members 6135 and the rear member 6136 of this embodiment are formed from metal, e.g., steel. In the present example, these members are formed from square stock steel and welded at the connections between the members. The rear member 6136 is raised relative to the front member 6134 and the side members 6135. The rear member 6136 is joined to the first side member 6135a and the second side member 6135b via respective brackets 6137a, 6137b that can be formed of, e.g., bent sheet metal. The front member 6134, side members 6135 and rear member 6136 of this embodiment comprise through-holes for mounting the base frame 6133 to the base 6121. In some embodiments, only the front and side members 6134, 6135 can comprise the through-holes. In the present example, the members of the base frame 6133 are formed from the same size of square stock steel. However, in other embodiments, the respective members of the base frame 6133 can have different cross-sectional sizes, e.g., the rear member 6136 of the base frame 6133 can be formed of higher stock steel than the front and side members 6134, 6135.

The base frame 6133 provides a structure for the unit 6100 that is constructed to withstand the large forces applied thereto, e.g., as would be experienced if the vehicle within which the unit 6100 were mounted were to crash. As will be described in greater detail below, the base frame 6133 provides a rigid structure to which the rigid latches 6150 are attached at the rear and the webbing 6181 is attached at the front. The webbing 6181 wraps around the front and top to the rear, and the tether 6188 extends from the rear to an anchor point within the vehicle (in some embodiments, behind the vehicle seat), effectively providing a full loop of protection around the unit 6100.

The latch carriage 6140 comprises a front member 6141 coupled to the front member 6134 of the base frame 6133 via two front guides 6142 slidably coupled to the front member 6134. The latch carriage 6140 further comprises two side members 6143 (a first side member 6143a and a second side member 6143b) extending from first ends on the interior surface of the front member 6141 toward the rear of the latch carriage 6140 to second ends. Each side member 6143 of the latch carriage 6140 has a rear guide 6144 fixed thereto (to the top of the side members 6143) to couple the side member 6143 to the rear member 6136 of the base frame 6133 (which is raised relative to the rest of the base frame 6133 and the latch carriage 6140). The first rear guide 6144a on the first side member 6143a and the second rear guide 6144b on the second side member 6143b are slidably coupled to the rear member 6136. The front and rear guides 6142, 6144 allow the latch carriage 6140 to translate along (in a direction parallel to) the front member 6134 and the rear member 6136 toward and/or away from the first side and/or the second side of the unit 6100, e.g., left-right. The front guides 6142 of this embodiment are formed, for example, from square stock steel having inner dimensions slightly larger than the outer dimensions of the front member 6134 and the rear guides 6144 can be formed from square stock having inner dimensions slightly larger than the outer dimensions of the rear member 6136. In the present example, the members of the base frame 6133 and the members of the latch carriage 6140 are formed from the same size of square steel stock and the front and rear guide 6142, 6144 have the same size. It will be appreciated that the front and rear guides 6142, 6144 and the corresponding front and rear members 6134 and 6136 can comprise stock steel having other configurations (e.g., rectangular, cylindrical, or still other configurations).

The two side members 6143 are coupled to two respective medial members 6145 (a first medial member 6145a and a second medial member 6145b) via two medial guides 6146 (a first medial guide 6146a and a second medial guide 6146b) slidably coupled to the medial members 6145. The medial guides 6146 allow the medial members 6145 to translate (slide) relative to the side members 6143 toward and/or away from the front and/or the rear of the unit 6100. The first medial member 6145a is coupled to the outside of the first side member 6143a (relative to the center of the latch carriage 6140) and the second medial member 6145b is coupled to the outside of the second side member 6143b (relative to the center of the latch carriage 6140).

A rod 6148 is fixed on its first end to the first medial member 6145a, extends through slots 6147 in the side members 6143, and is fixed on its second end to the second medial member 6145b. The side members 6143 each have slots 6147 extending therethrough (relative to a left-right direction) and further extending through a rear portion of the side members 6143 toward the rear of the latch carriage 6140 (e.g., a first slot 6147a extends through the first side member 6143a and a second slot 6147b extends through the second side member 6143b). A sliding member 6149 is hung from the rod 6148. When the unit 6100 is assembled and the latches 6150 are withdrawn into the rear cavity 6128 in the position shown in Figs. 44a, the sliding member 6149 is received in the first slot 6129a on the bottom 6122 of the molded base 6121 and can slide within the first slot 6129a as the latch carriage 6140 is translated side-to-side to reposition the latches 6150. When the latches 6150 are extended out the rear of the unit 6100, the sliding member 6149 is brought out of the first slot 6129a. As shown in Fig. 44c, the medial guides 6146 coupling the medial members 6145 to the side members 6143 of the latch carriage can slide side-to-side within the second slot 6129b.

A respective latch 6150 is fixed to each of the rear ends of the two medial members 6145 (a first latch 6150a is fixed to the first medial member 6145a and a second latch 6150b is fixed to the second medial member 6145b). The latches 6150 each have latching ends 6151 shaped to engage a support structure in the vehicle, e.g., a rigid member coupled to a steel frame within the seats, to be described further below with regard to Fig. 50. The latches can be extended out of the rear cavity 6128 of the rear portion 6125 of the molded base 6121 or can be withdrawn into the rear cavity 6128.

To be described in further detail below with regard to Figs. 45a-45g, a front button 6153 can be fixed or coupled to the latch carriage 6140 via a front slot 6131 formed in the front portion 6123 of the molded base 6121. In this example, the front button 6153 is mounted directly to the front guides 6142 fixed to the front member 6141 of the latch carriage 6140 and slidably coupled to the front member 6134 of the base frame 6133. The front button 6153 is coupled to the latches 6150 so that operation of the front button locks or unlock the latches 6150, so that the latches 6150 may be locked in or transitioned to the extended position (extending out the rear of the unit 6100 for installation in a vehicle) or retracted to the withdrawn position (retracted into the rear cavity 6128 in the rear portion 6125 of the molded base 6121).

Additionally, two side actuators 6152 (a first side actuator 6152a on the first side portion 6124a of the base 6121 and a second side actuator 6152b on the second side portion 6124b of the base 6121) can be coupled to or disengaged from the latch carriage 6140 to lock the latch carriage 6140 on either the first side or the second side of the unit 6100. The side actuators 6152 can be pushed in to lock the latch carriage 6140 or pulled out to release the latch carriage 6140. When the latches 6150 and/or the latch carriage 6140 are unlocked (via the front button 6153 or the side actuator 6152), a user may manually move the latches or the latch carriage into a desired position, e.g., by removing the interior removable cushion 6175 covering the base structure 6120 and accessing the latch carriage 6140. In an alternative embodiment, the latches 6150 can be connected to a biasing member that biases the latches 6150 toward the extended position so that, when the front button 6153 is pushed, the latches 6150 transition from the withdrawn position to the extended position.

### Actuation of the latches and repositioning latch carriage

As described above, the latches 6150 of the unit 6100 are fixed to the medial members 6145 that are slidably coupled to the side members 6143. The medial members 6145 can be released from the side members 6143 and slid toward and/or away from the rear and/or the front of the unit 6100. The front button 6153 is fixed to the front guides 6142 (the front guides 6142 fixed to the front member 6141 of the latch carriage 6140 and slidably coupled to the front member 6134 of the base frame 6133) via a front slot 6131 in the molded base 6121. The front button 6153 of this embodiment is spring-loaded (provided in a cavity 6130 comprising a spring) and can be depressed to either lock the medial members 6145 to prevent forward/backward translation or to release the medial members 6145 to allow forward/backward translation, e.g., to extend the latches 6150 out the rear of the unit 6100 or withdraw the latches 6150 within the rear of the unit 6100.

The medial members 6145 can then be locked to lock the latches 6150, e.g., in the extended position, by depressing the front button 6153 a further time. The front button 6153 can be depressed to lock the latches 6150 in the extended position or the withdrawn position and to unlock the latches 6150 from the extended position or the withdrawn position. Any appropriate mechanism can be used to lock the medial members 6145 to the side members 6143. For example, the front button 6153 can be connected to a cable that is connected to a pin extending off the side members 6143 toward the medial members 6145. The pin can be received in a corresponding hole in the medial members 6145 to lock the medial members 6145 relative to the side members 6143 and, accordingly, lock the latches 6150 in the extended position or the withdrawn position. Those skilled in the art will ascertain that other mechanisms may also be used to lock/unlock the medial members 6145.

In the present example, actuation of the front button 6153 locks/unlocks the latches 6150. However, in alternative embodiments, the front button 6153 may be configured to automatically extend and/or withdraw the latches 6150 without manual involvement by the user. In an alternative embodiment, the latches 6150 can be connected to a biasing member that biases the latches 6150 toward the extended position so that, when the front button 6153 is pushed, the latches 6150 transition from the withdrawn position to the extended position.

Independently from the mechanism described above for locking/releasing the latches 6150 for forward-backward movement, the latch carriage 6140 as a whole can be locked and or released with regard to side-to-side movement. As described above, the latch carriage 6140 can be positioned towards the first side of the unit 6100 or towards the second side of the unit 6100. When the latch carriage 6140 is positioned towards the first side of the unit 6100, the latch carriage 6140 can be locked in place using a first side actuator 6152a located in a side cavity 6132a of the molded base 6121. The first side actuator 6152a can, e.g., have an internal component that is coupled to the medial guide 6146a of the latch carriage 6140 when the medial guide 6146a is pushed into the first side actuator 6152a. The latch carriage 6140 can be released by pulling the first side actuator 6152a and disengaging the latch carriage 6140 from the first side actuator 6152a.

The latch carriage 6140 can be slid toward the second side of the unit 6100 with the sliding member 6149 in the first slot 6129a and the medial guides 6146 in the second slot 6129b. When the latch carriage 6140 is positioned towards the second side of the unit 6100, the latch carriage 6140 can be locked in place using a second side actuator 6152b located in a side cavity 6132b of the molded base 6121 that has an internal component that couples to the medial guide 6146b of the latch carriage 6140 when the medial guide 6146b is pushed into the first side actuator 6152b. It will be appreciated that either side actuator 6152a, 6152b can be actuated to release the latch carriage 6140. For example, regardless of whether the latch carriage 6140 is positioned at the first side or the second side of the unit 6100, actuating either of the side actuators 6152a, 6152b can release the latch carriage 6140 so that the latch carriage 6140 can transition to the other of the first and second side of the unit 6100.

Figs. 45a-45g show the actuation of the latches 6150 and the operation of the latch carriage 6140 to reposition the latches 6150 of the unit 6100 of the first exemplary embodiment. Fig. 45a shows the base structure 6120 with the latch carriage 6140 in a first position toward the first side of the unit 6100. The latches 6150a, 6150b are withdrawn into the rear cavity 6128 of the rear portion 6125 of the base 6121. In this example, the latches 6150a, 6150b are locked in the withdrawn position.

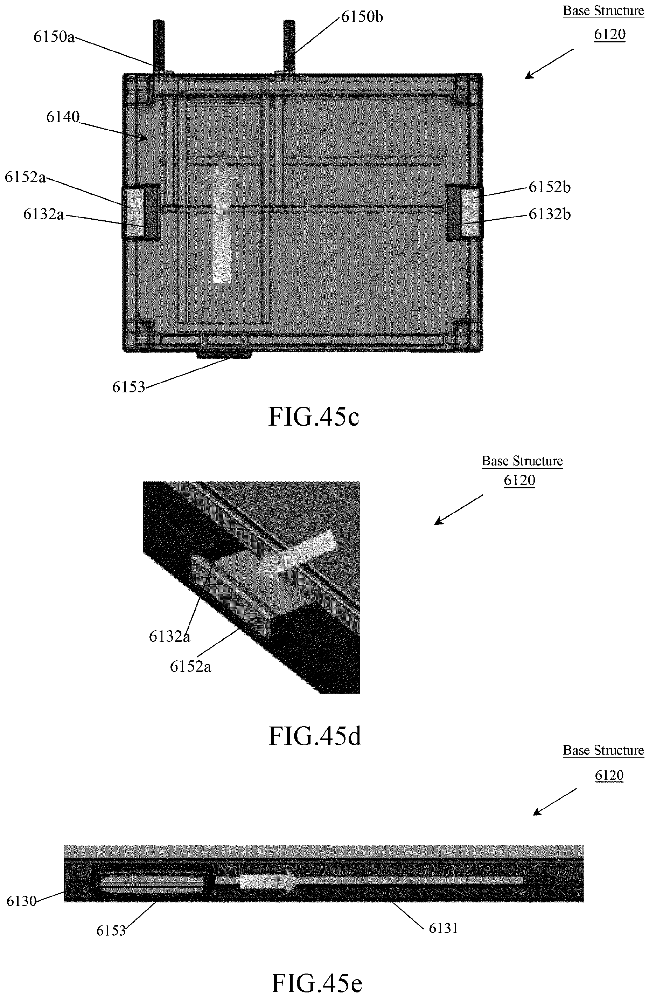

Fig. 45b shows the front button 6153 coupled to the latch carriage 6140 so that depressing the front button 6153 releases the latches 6150. The latches 6150 can be slid out to their desired length (e.g., manually) extending out of the rear cavity 6128. Fig. 45c shows the base structure 6120 with the latch carriage 6140 in the first position and with the latches 6150 extended out the rear cavity 6128. The front button 6153 can be depressed a second time to lock the latches 6150 in the extended position. Alternatively, after the latches 6150 are transitioned from the withdrawn position to the extended position, the latches 6150 can be automatically locked into the extended position. To release the latches 6150, the front button 6153 can be actuated, and the latches can transition back to the withdrawn position from the extended position.

Fig. 45d shows the first side actuator 6152a positioned in the first side cavity 6132a in the first side portion 6124a of the molded base 6121. The first side actuator 6152a can be pulled out to release the latch carriage 6140 from the first side. The latch carriage 6140 can then be translated toward the second side. As the latch carriage 6140 moves, the front button 6153 slides within the front slot 6131 as shown in Fig. 45e.

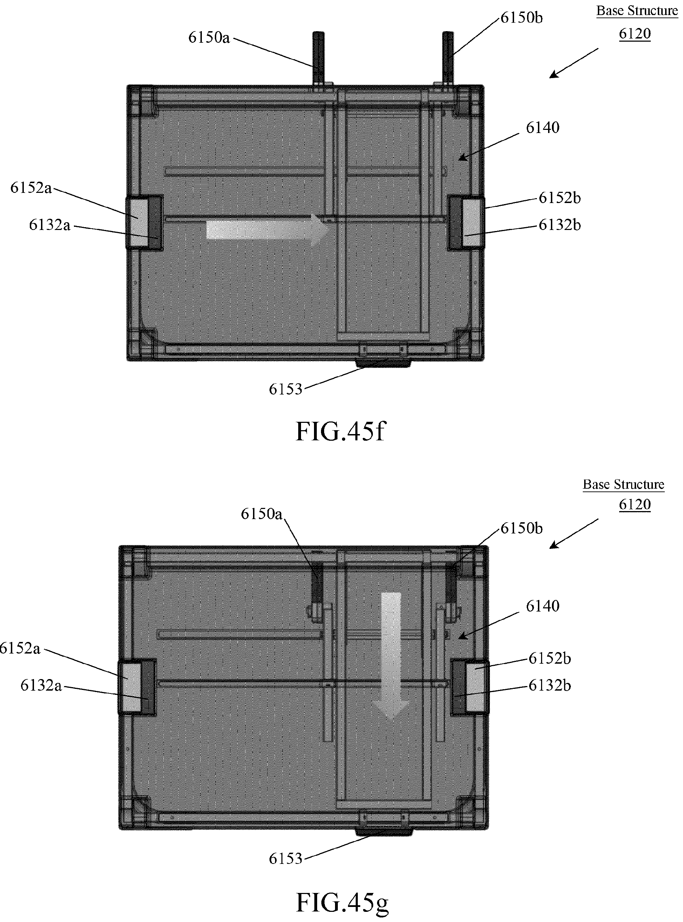

Fig. 45f shows the base structure 6120 with the latch carriage 6140 in the second position toward the second side of the unit 6100. When the latch carriage 6140 has been brought to the second position it can be locked into the second side actuator 6152b. When desired, the user can withdraw the latches 6150 back into the rear cavity 6128 by depressing the front button 6153 to release the latches 6150. Fig. 45g shows the base structure 6120 with the latch carriage 6140 in the second position and with the latches 6150 withdrawn into the rear cavity 6128. The front button 6153 can be depressed a second time to lock the latches 6150 in the withdrawn position.

### Expanding/Collapsing Animal Containment Unit

The unit 6100 of this embodiment may be transitioned between an expanded state and a collapsed state. The unit 6100 can be locked into either of the two states using front and rear rotating actuators 6154, 6156 and the actuators 6107 of the middle support members 6104 of the frame structure 6101. In the expanded state, the frame structure 6101 provides a rigid frame for supporting the containment materials 6160 and the webbing and tether structure 6180 and defining aspects of the interior/exterior of the unit 6100. In the collapsed state, the frame structure 6101, the containment materials 6160 and the webbing and tether structure 6180 are folded into or flush with the base structure 6120 to provide a slim profile for ease of portability.

Figs. 46a-46c show the unit 6100 of the first exemplary embodiment transitioning from an expanded state into a collapsed state. Fig. 46a shows the unit 6100 in the expanded state; Fig. 46b shows the unit 6100 transitioning to the collapsed state; Fig. 46c shows the unit 6100 in the collapsed state.

In the expanded state, the unit 6100 is configured so that the middle support members 6104 are engaged and form a rigid connection between the front member 6102 and the rear member 6103. To disengage the middle support members 6104, the actuators 6107 (first sliding actuator 6107a of the first middle support member 6104a and second sliding actuator 6107b of the second middle support member 6104b) are slid toward the front member 6102 to uncover the rear middle support members 6106. Figs. 47a-47c show the actuator 6107 of a middle support member 6104 being transitioned from a first position, engaged with the rear middle support member 6106, to a second position, disengaged from the rear middle support member 6106, to allow the unit 6100 to collapse. Fig. 47a shows a perspective view of the actuator 6107 in a first state with the front middle support member 6105 and the rear middle support member 6106 connected via the actuator 6107; Fig. 47b shows a side view of the actuator 6107 in the first state; Fig. 47c shows a side view of the actuator 6107 in the second state with the front middle support member 6105 and the actuator 6107 disconnected from the rear middle support member 6106.

The actuators 6107 comprise a length of tubing having an internal diameter slightly larger the external diameter of the middle support members 6104 so that the actuators 6107 slide over the front middle support members 6105 and the rear middle support members 6106. The actuators 6107 of this embodiment are coupled to the front middle support members 6105 at two different positions over the front middle support member 6105. The front middle support member 6105 has a spring-loaded button 6108 attached to its side surface and each of the sliding actuators 6107 has two openings 6109, e.g., a front opening 6109a and a rear opening 6109b, through which the button 6108 can project (e.g., snap/pop in). When the button 6108 is snapped into the front opening 6109a, the actuator 6107 extends off the front middle support member 6105 toward the rear of the unit 6100. The distance between the front middle support member 6105 and the rear middle support member 6106 is such that, when the actuator 6107 is extended toward the rear off the rear end of the front middle support member 6105, the front of the rear middle support member 6106 can slide into the tubing of the actuator 6107. This provides a rigid engagement that completes the rigid structure of the frame structure 6101 when the unit 6100 is expanded.

To disengage the actuator 6107 from the rear middle support member 6106 the button 108 can be depressed and the actuator 6107 can be slid toward the front and the button 6108 can be engaged with the rear opening 6109b of the actuator 6107. The position of the button 6108 relative to the rear opening 6109b of the actuator 6107 is such that, in this position, the rear middle support member 6106 is uncovered by the tubing of the actuator 6107, thus disengaging the front middle support member 6105 from the rear middle support member 6106. This allows the front middle support member 6105 and the rear middle support member 6106 to collapse towards their respective sides. As described previously, the front middle support members 6105 are coupled to the front member 6102 at front rotating joints 6112 and the rear middle support members 6106 are coupled to the rear member 6103 at rear rotating joints 6113. When the middle support members 6104 are disengaged via the actuator 6107, a user is free to rotate the respective members toward their respective sides by rotating the rotating joints 6112, 6113. It is noted that the webbing 6181 can be run through the channels 6111 formed by the plastic loops 6110 of the actuators.

As described previously, the front member 6102 of the frame structure 6101 is coupled to the base structure 6120 via front rotating actuators 6154 and the rear member 6103 of the frame structure 6101 is coupled to the base structure 6120 via rear rotating actuators 6156. The front rotating actuators 6154 and the rear rotating actuators 6156 comprise spring-loaded buttons that can be depressed to rotate the actuators 6154, 6156. When the buttons of both front rotating actuators 6154 are depressed, the front rotating actuator 6154 is freed to rotate towards the base of the unit 6100. When the buttons of both rear rotating actuators 6156 are depressed, the rear rotating actuators 6156 are freed to rotate toward the base of the unit 6100. The buttons can be released to lock the rotating actuators 6154, 6156, and the members of the frame structure 6101 coupled to the rotating actuators 6154, 6156, in position.

Fig. 46a shows the unit 6100 in the expanded state. The front rotating actuators 6154 are locked with the front member 6102 (e.g., a longitudinal plane thereof) positioned orthogonal to the base 6121. The rear rotating actuators 6156 are locked with the rear member 6103 positioned orthogonal to the base 6121. The front middle support members 6105 are engaged with the rear middle support members 6106 via the actuators 6107.

Fig. 46b shows the unit 6100 transitioning to the collapsed state. The sliding actuator 6107 has disengaged the front middle support members 6105 from the rear middle support members 6106. The front middle support members 6105 have rotated down so that the front middle support members 6105 (e.g., a longitudinal plane thereof) are parallel with the front member 6102. The rear middle support members 6106 have rotated down so that the rear middle support members 6106 (e.g., a longitudinal plane thereof) are parallel with the rear member 6103. The front member 6102 is rotated toward the base and collapsed first, and the rear member 6103 is rotated toward the base and collapsed next, following the front member 6102.

As described previously, the base 6121 is shaped so that the front recesses 6126 for the front rotating actuators 6154 are positioned closer to the bottom 6122 than the rear recesses 6127 for the rear rotating actuators 6156. Thus, when the front member 6102 and attached front middle support members 6105 are rotated toward the bottom 6122, these members can rotate 90 degrees from their original position and lie flat across the top of the latch carriage 6140 and partially or fully within the base 6121. When the rear member 6103 and attached rear middle support members 6106 are rotated toward the bottom 6122, these members can rotate 90 degrees from their original position and lie flat across the top of the front member 6102.

Fig. 46c shows the unit 6100 in the collapsed state. The unit 6100 can be locked into the collapsed state for ease of storage, shipping, portability, etc.

### Materials

As described above, the frame structure 6101 supports the containment materials 6160 (e.g., soft goods) defining exterior surfaces of the unit 6100 and interior surfaces of the unit 6100 defining the space within which the animal is contained. The containment materials can have a number of layers of material. In this example, the containment materials comprise a heavy duty outer layer, a middle stiffener layer, and an interior waterproof layer that can be removed, e.g., for cleaning.

Figs. 48a-48d show the containment materials 6160 of the unit 6100. Fig. 48a shows a cross-sectional view of the containment materials 6160. The containment materials 6160, as shown in Fig. 48a, generally comprise an exterior layer 6161, a stiffener layer 6162, and an interior layer 6163. The exterior layer 6161 may, for example, be a heavy-duty material while the stiffener layer 6162 is a softer material to protect the animal from harmful contact with the vehicle and the metal frame, e.g., foam. The interior layer 6163 may, for example, be a heavy-duty waterproof fabric. The interior layer 6163 can be removable for washing. It should be understood that additional layers can be provided. Fig. 48b shows the exterior layer 6161 for the containment materials 6160 with the unit 6100 in the expanded state; Fig. 48c shows the stiffener layer 6162 for the containment materials 6160 with the unit 6100 in the expanded state; Fig. 48d shows the interior layer 6163 for the containment materials 6160 with the unit 6100 in the expanded state.

The containment materials 6160 additionally comprise a plastic rod 6164 running through a side of the containment materials 6160. For certain portions of the containment materials, the plastic rod 6164 may be comprised to attach the containment materials 6160 to the base structure 6120. As described above, some or all members of the frame structure 6101 can be formed with an extrusion channel 6118, as shown in Fig. 48a, extending along the length of the member for receiving the plastic rod 6164 running through the containment materials 6160. The plastic rod 6164 can be slid or snapped into the extrusion channel 6118 to mount the containment materials 6160 onto the members.

The containment materials 6160 and the frame structure 6101 can be designed in various ways, e.g., so that the containment materials 6160 for the first side, top and second side comprise one piece that has plastic rods 6164 coupling to extrusion channels 6118 in the front and rear members 6102, 6103. In another example, the containment materials 6160 for each side (top, first side, second side, front, back) can be separate pieces, each supported via separate extrusion channels 6118 on the members of the frame structure 6101. In the present example, only the front and rear members 6102, 6103 comprise an extrusion channel 6118 and the middle support members 6104 do not directly support the containment materials 6160 for, e.g., the first side 6168, the second side 6169 or the top 6172. However, in other embodiments, the middle support members 6104 could also comprise extrusion channels 6118 to support the containment materials 6160.

The containment materials 6160 for the unit 6100 comprise a front 6165, a first side 6168, a second side 6169, a top 6172, and a rear 6173. The front 6165 comprises a window 6166 allowing for air flow for seeing in and out of the unit 6100. The front 6165 further comprises slits 6167 (e.g., a first slit, a second slit and a third slit) to weave the webbing 6181 into the front 6165, to be described in greater detail below with regard to Fig. 49. The first side 6168 and the second side 6169 can both comprise zipper doors 6170 for accessing the interior of the unit 6100, e.g., to place an animal inside or remove the animal. In another example, only the first side 6168 or the second side 6169 has the zipper door 6170. The first side 6168 and/or the second side 6169 and/or the rear 6173 can also have windows 6171, similar to the window 6166 in the front 6165.

**In** this example, the webbing 6181 is interlaced with (e.g., woven into) the slits 6167 in the exterior layer 6161 only (e.g., not woven into the middle or interior layers 6162). In other embodiments, the webbing 6181 is woven into additional layers. Additionally, the unit 6100 comprises an interior cushion 6174 on the base that can be removed to access the latch carriage 6140.

### Webbing and Tether

As discussed above, the unit 6100 is reinforced with a webbing and tether structure 6180 that provides additional reinforcement to the unit 6100 when it is installed in a vehicle. The webbing 6181 extends across the front and top of the unit 6100 to restrain the animal by absorbing and transmitting to the frame of the vehicle forces applied to the unit 6100 in the event of a car crash (e.g., as an animal inside is thrown against the interior of the unit 6100). In use, the tether 6188 on the top/rear of the unit 6100 is secured to one or more anchor points in the vehicle, e.g., on the rear of the vehicle seat. These features, in combination with the latches rigidly mounted to the base of the unit 6100 and the rigid base frame, provide a continuous loop of protection around the unit 6100 (e.g., 360 degrees of support).

Fig. 49 shows the webbing and tether structure 6180 for the unit 6100 assembled with the frame structure 6101 and the base structure 6120. The webbing 6181 comprises two spans (e.g., a first span 6181a and a second span 6181b) that extend from front attachment points 6182 (a first front attachment point 6182a and a second front attachment point 6182b) on the front member 6134 of the base frame 6133 to rear attachment points 6185 (a first rear attachment point 6185a and a second rear attachment point 6185b) on the rear member 6103. Each of the first and second spans 6181a, 6181b comprises a front portion 6183 woven through at least one layer of the front 6165 containment materials 6160. A first end of the front portion 6183 is attached to the front member 6134 of the base frame 6133, and is run within a first portion of the front 6165 to extend outside the front 6165 at the first slit so that the webbing continues to the second slit, is run within a second portion of the front 6165 to the third slit, at which point the remainder of the span of webbing 6181 is run outside the containment materials 6160.

The webbing 6181 continues to wrap around the top of the front member 6102 at the wrap points 6184. The webbing 6181 continues to a top portion and is routed through the channels 6111 of the actuators 6107 on the middle support members 6104 to a rear attachment point 6185 are on the rear member 6103. In an aspect, the webbing 6181 can continue along the top portion without being routed through the channels 6111 of the actuators 6107.

A tether 6188 comprises two spans 6189 sewn at a first end around the rear member 6103, e.g., at the rear attachment points 6185 for the webbing 6181. The two spans 6189 are brought together at an attachment point 6190. From the attachment point 6190 the tether 6188 continues to a rear span 6191 with a connector 6192 at its end for an anchor point in the vehicle. In an aspect, one end of the two spans 6189 of the tether 6188 connect directly to the respective spans 6181a, 6181b, and the other end of the two spans 6189 of the tether 6188 are brought together at the attachment point 6190.

**In** some vehicles, the rear-facing side of the rear seats may have anchoring locations for the tether 6188. In other vehicles, the anchoring locations may be located elsewhere in the vehicle.

Fig. 50 shows a diagram of the unit 6100 of the first exemplary embodiment installed in a vehicle. As shown, the latches 6150 are connected at their latching ends 6151 to the steel frame of the car. The connector 6192 at the end of the tether 6188 is wrapped from the rear member 6103 of the frame structure 6101 to an anchor point on the back of the seat. This forms a full loop of protection from the latches 6150 through the base frame 6133, through the webbing 6181, and finally through the tether 6188 attached to the anchor on the back of the seat.

### Second Embodiment

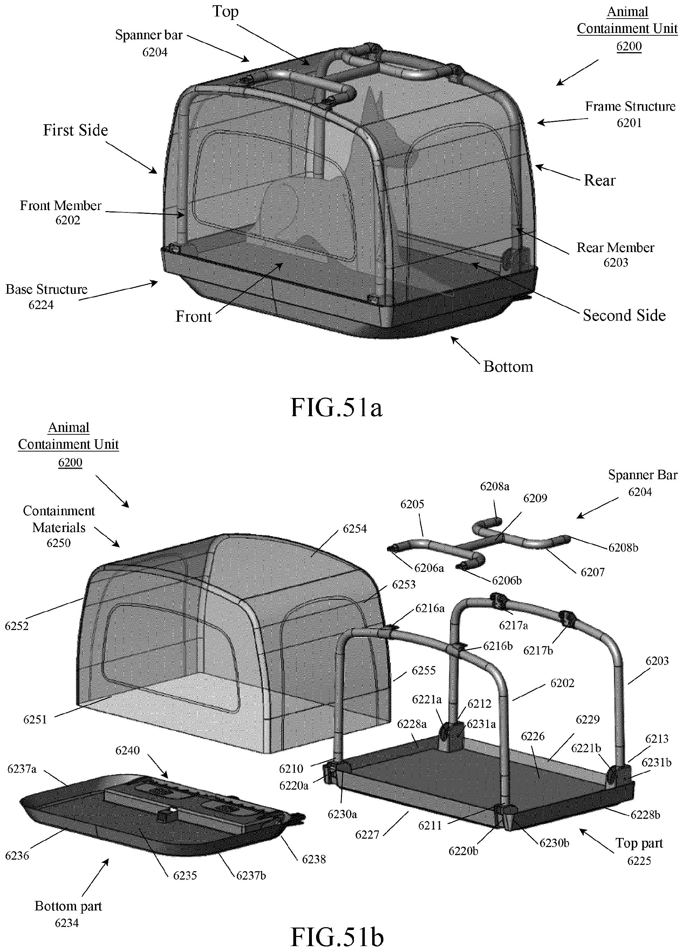

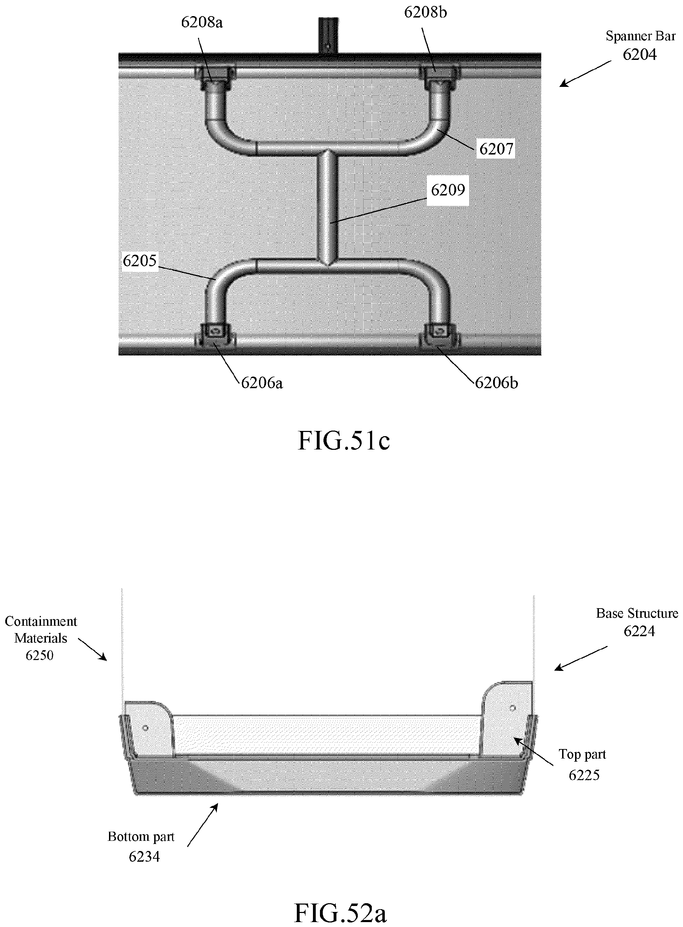

Figs. 51a-51c show views of an animal containment unit 6200 according to a second exemplary embodiment. Similar to the unit 6100 described above, the unit 6200 is generally six-sided (although any other arrangement that provides the desired space for containing the animal may be used) and is described with regard to a front, a rear, a first side (e.g., left side, relative to a front view), a second side (e.g., right side, relative to a front view), a bottom and a top. These sides are labeled in Fig. 51a and omitted in the subsequent figures. Fig. 51a shows a perspective view of the unit 6200; Fig. 51b shows an exploded view of the unit 6200; Fig. 51c shows a top view of the unit 6200.

### Frame Structure

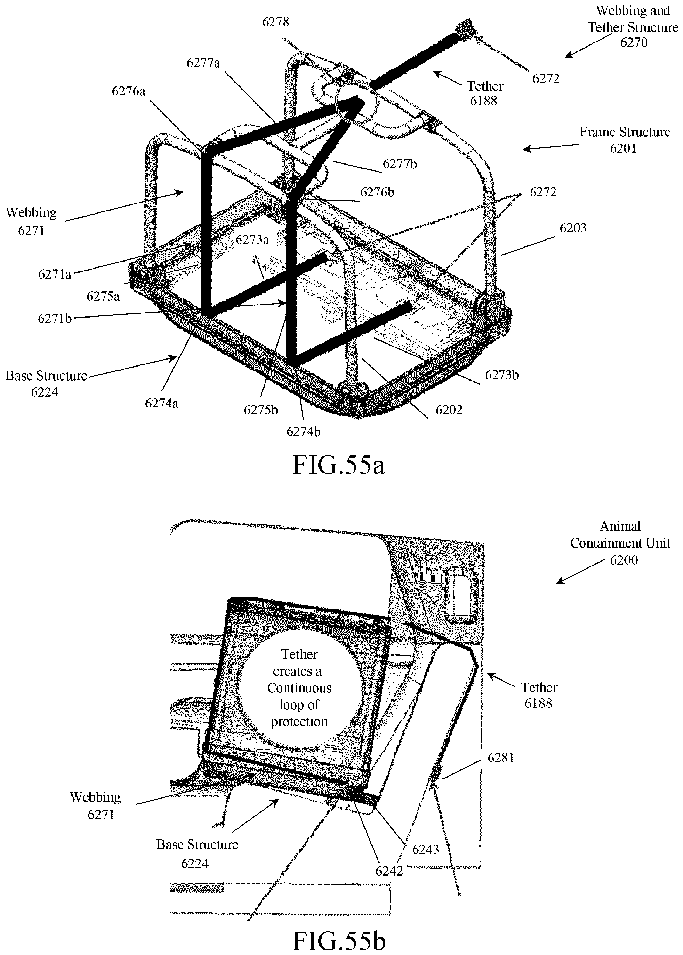

The unit 6200 comprises a frame structure 6201 coupled to and supported by a base structure 6224, as will be described further below with regard to Figs. 52a-52b. The unit 6200 comprises containment materials 6250 (e.g., soft goods) forming the exterior of the unit 6200, which may be similar to the containment materials 6160 described with regard to the first exemplary embodiment. The unit 6200 further comprises a webbing and tether structure 6270 (not shown in Figs. 51a-51c) for containing the force of an animal during a vehicle crash, similar to the webbing and tether structure 6180 of the first exemplary embodiment, as will be described in further detail below with regard to Figs. 55a-55c.

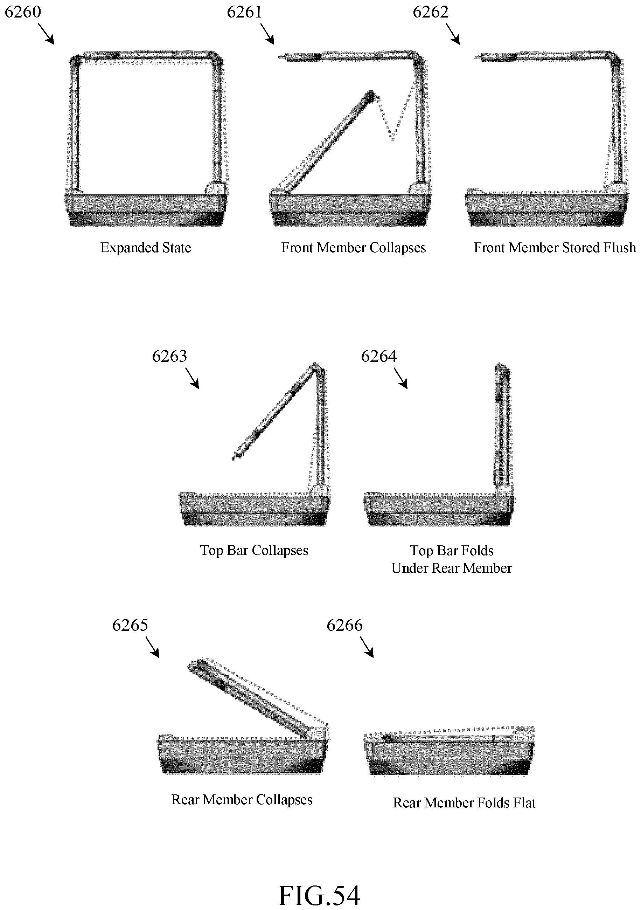

The frame structure 6201 comprises a front member 6202, a rear member 6203, and a spanner bar 6204 connecting the front member 6202 and the rear member 6203 when the unit 6200 is in the expanded state, to be described in further detail below with regard to Fig. 54. The front member 6202 is curved in a shape similar to a U and couples to the base structure 6224 at both a first end 6210 and a second end 6211 via front rotating actuators 6220a, 6220b. The rear member 6203 is shaped similarly to the front member 6202 in a shape similar to a U and couples to the base structure 6224 at both a first end 6212 and a second end 6213 via rear rotating actuators 6221a, 6221b. The front member 6202 and the rear member 6203 may be shaped similarly to the front member 6102 and the rear member 6103 of the first exemplary embodiment.

The front member 6202 extends from the first end 6210 toward the top of the unit 6200, curves approximately 90 degrees toward the second side and across the top of the unit 6200, and curves approximately 90 degrees toward the bottom of the unit 6200 and to the second end 6211. The rear member 6203 extends from the first end 6212 toward the top of the unit 6200, curves approximately 90 degrees toward the second side and across the top of the unit 6200, and curves approximately 90 degrees toward the bottom of the unit 6200 and to the second end 6213. The front member 6202 and rear member 6203 can each comprise one unitary piece or can each comprise multiple pieces joined together during assembly.

The spanner bar 6204 comprises a front middle support member 6205, a rear middle support member 6207, and a center middle support member 6209. The front middle support member 6205 is curved in a shape similar to a U and couples to the front member 6202 at both a first end 6206a and a second end 6206b via front rotating joints 6216a, 6216b. The rear member 6203 is shaped similarly to the front member 6202 in a shape similar to a U and couples to the base structure 6224 at both a first end 6212 and a second end 6213 via rear rotating actuators 6221a, 6221b. Similar to the first exemplary embodiment described above, the rear member 6203 is slightly shorter than the front member 6202 and is mounted to the base structure 6224 at a position slightly higher than the front member 6202 to facilitate the collapse of the unit 6200.

The spanner bar 6204 of the present example is not separable into multiple pieces, as contrasted to the middle support members 6104 described above for the first exemplary embodiment, which are separable into the front middle support member 6105 and the rear middle support member 6106 via the actuator 6107 to collapse the frame structure 6101. Rather, the spanner bar 6204 is detachable from either one or both of the front member 6202 and/or the rear member 6203 to collapse the frame structure 6201. The first and second ends 6206a, 6206b of the front middle support member 6205 of the spanner bar 6204 can clip into the front rotating joints 6216a, 6216b under a pushing force and can be unclipped from the front rotating joints 6216a, 6216b under a pulling force. In a similar manner, the first and second ends 6208a, 6208b of the rear middle support member 6207 of the spanner bar 6204 can clip into the rear rotating joints 6217a, 6217b under a pushing force and can be unclipped from the rear rotating joints 6217a, 6217b under a pulling force. To collapse the unit 6200, the spanner bar 6204 can be detached from either one or both of the front member 6202 and/or rear member 6203 of the frame structure 6201, as will be described in greater detail below.

Referring to Figs. 51a-51b, the frame structure 6201 supports the containment materials 6250 defining the exterior and interior surfaces of the unit 6200, comprising containment materials 6250 for the front 6251, the first side 6252, the second side 6253, the top 6254 and the rear 6255 of the unit 6200. Some portions of the containment materials 6250 can be wrapped outside of frame structure 6201, while other portions of the containment materials 6250 can be within the frame structure 6201. In the present example, the containment materials 6250 are wrapped around the exterior of the front and rear members 6202, 6203, however, the spanner bar 6204 is on the exterior of the containment materials 6250 on the top 6254 of the unit 6200. Thus, the spanner bar 6204 can additionally be used as a handle for carrying the unit 6200 in the expanded state.

Referring to Figs. 55a-55b, the frame structure 6201 further supports a webbing and tether structure 6270 comprising webbing 6271 fixed at a first end to the base structure 6224 and run up the front of the unit 6200, around the front member 6202 of the frame structure 6201, and across the top of the unit 6200 to a second end fixed to the rear member 6203 of the frame structure 6201, to be described in greater detail below.

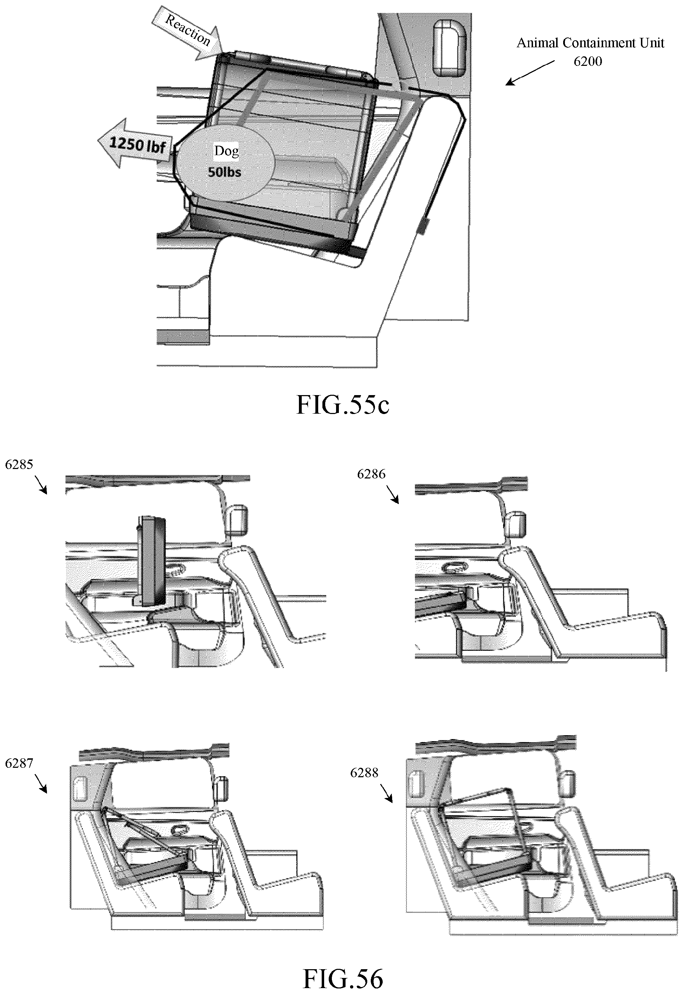

The frame structure 6201 can be formed from extruded metal tubing, e.g., aluminum, similar to the first exemplary embodiment. The aluminum tubing provides a rigid frame structure 6201 that is sufficiently strong to make the unit 6200 robust but sufficiently flexible to absorb the force of an animal impact and deform to reduce the impact on the animal, as described in further detail below with regard to Fig. 55c.

### Base Structure

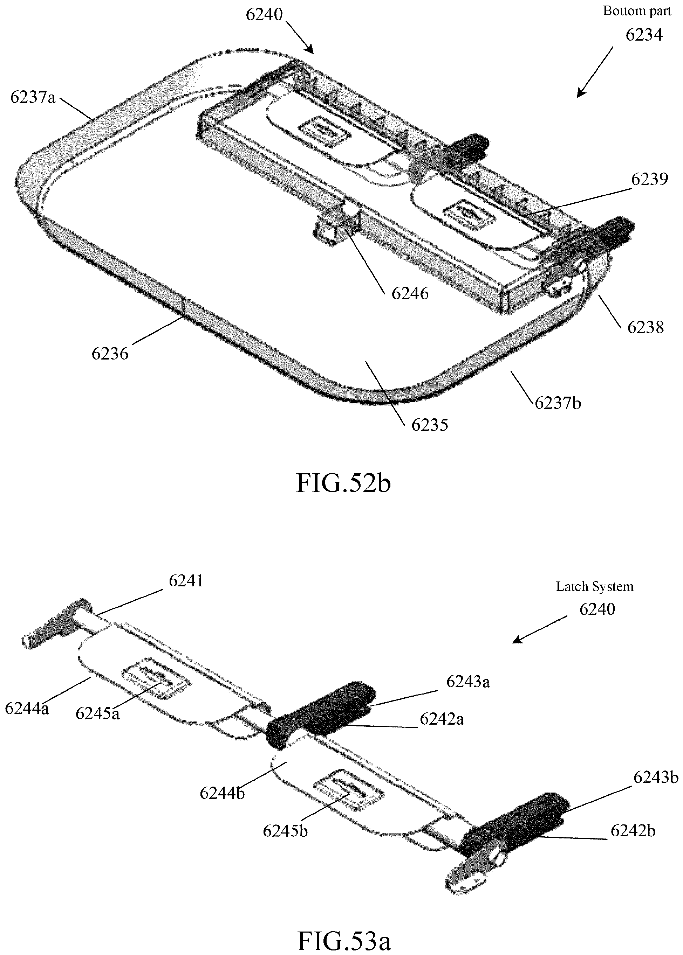

Figs. 52a-52b show the base structure 6224 of the unit 6200 of the second exemplary embodiment. The base structure 6224 comprises a top part 6225 and a bottom part 6234 that nest together with the top part 6225 sliding into the bottom part 6234. Fig. 52a shows the base structure 6224 with the top part 6225 nested with the bottom part 6234; Fig. 52b shows the bottom part 6234 of the base structure 6224.

The top part 6225 and the bottom part 6234 can be molded, for example, from plastic. The top part 6225 comprises a bottom 6226 and a frame comprising a front portion 6227, side portions 6228 (a first side portion 6228a and a second side portion 6228b) and a rear portion 6229. On the front corners of the top part 6225 (on the front portion 6227 near the intersection of the front portion 6227 and the first side portion 6228a; and on the front portion 6227 near the intersection of the front portion 6227 and the second side portion 6228b) are respective front recesses 6230 (a first front recess 6230a and a second front recess 6230b) extending through the top part 6225 for receiving and coupling to the front rotating actuators 6220. Similarly, on the rear corners of the top part 6225 (on the rear portion 6229 near the intersection of the rear portion 6229 and the first side portion 6228a; and on the rear portion 6229 near the intersection of the rear portion 6229 and the second side portion 6228b) are respective rear recesses 6231 (a first rear recess 6231a and a second rear recess 6231b) extending through the top part 6225 for receiving and coupling to the rear rotating actuators 6217. Similar to the first exemplary embodiment, the rear recesses 6231 are raised relative to the front recesses 6230, as shown in Fig. 51b and 52a.

The bottom part 6234 comprises a bottom 6235 and a frame comprising a front portion 6236, side portions 6237 (a first side portion 6237a and a second side portion 6237b) and a rear portion 6238. In the rear portion 6238 is a cutout portion 6239 in the bottom 6235 and rear portion 6238 that contains the latch system 6240 for the second exemplary embodiment, as described further below with regard to Figs. 53a-53d. The bottom part 6234 further comprises a lock 6246 for the latch system 6240 in a recess in the bottom 6235.

### Latch System

The latch system 6240 of the second exemplary embodiment comprises pivoting rigid latches. It will be appreciated that the latches can comprise sliding retractable rigid latches as described above in the first exemplary embodiment. The latch system 6240 is located at the bottom of the unit 6200 and can be accessed by a user from the exterior of the unit 6200 to transition (pivot) the latches 6242 into and/or out of the base structure 6224 and/or to slide the latches 6242 from a first position on the first side of the unit 6200 to a second position on a second side of the unit 6200.

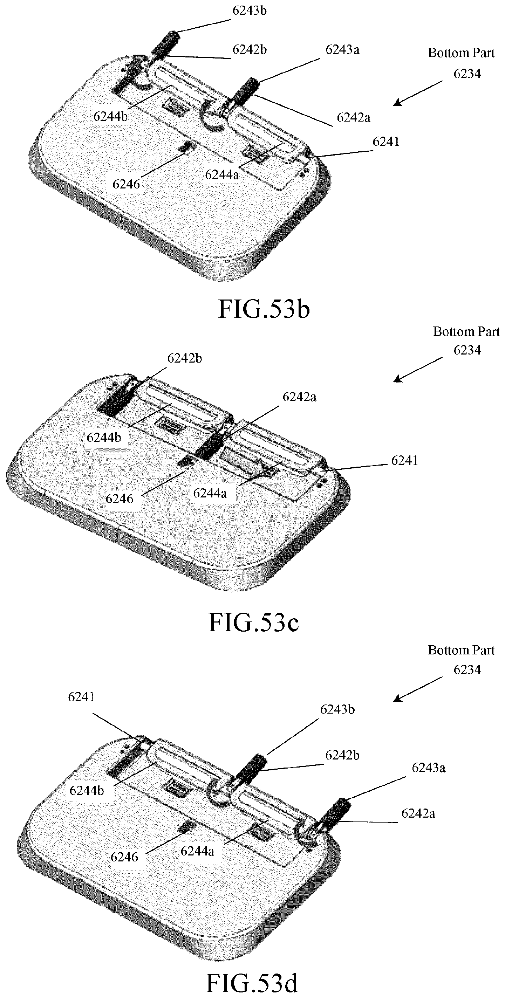

Figs. 53a-53d show the latch system 6240 of the unit 6200 of the second exemplary embodiment. Fig. 53a shows the latch system 6240 without the base structure 6224; Fig. 53b shows a bottom view of the latch system 6240 mounted in the bottom part 6234 of the base structure 6224 with the latches 6242 pivoted into the extended position on a first side of the unit 6200; Fig. 53c shows a bottom view of the latch system 6240 with the latches 6242 pivoted into the retracted position on the first side of the unit 6200; Fig. 53d shows a bottom view of the latch system 6240 with the latches 6242 pivoted into the extended position on a second side of the unit 6200.

The latch system 6240 comprises a rod 6241 mounted to the rear portion 6238 of the bottom part 6234 within the bottom cutout 6239. Two rigid latches 6242 (e.g., a first latch 6242a and a second latch 6242b) are slidably and rotatably coupled to the rod 6241, such that the latches 6242 can slide along the length of the rod 6241 and pivot about the rod 6241. The first and second latches 6242a, 6242b are connected with a rigid member therebetween so that a constant distance is maintained between the first and second latches 6242a, 6242b. The latches 6242 have latching ends 6243 for connecting to anchor points, e.g., steel frame structure, in the vehicle.

The latch system 6240 further comprises two brackets 6244 (a first bracket 6244a and a second bracket 6244b) fixed around the rod 6241. The brackets 6244 prevent lateral movement of the latches 6242 when the latches 6242 are pivoted out in the extended position. The brackets 6244 further comprise connection features 6245 for coupling the webbing 6271 to the bottom part 6234, as will be described in further detail below with regard to Figs. 55a-13c.

As shown in the bottom views of Figs. 53b-53d, the latch system 6240 further comprises a lock 6246 for locking and/or unlocking the latches 6242. In Fig. 53b, the latches 6242 are unlocked and positioned on the second side of the unit 6200. In Fig. 53c, the latches 6242 are pivoted into the bottom cutout 6239 of the rear portion 6238 of the bottom part 6234 of the base structure 6224. The latches 6242 can be coupled to the lock 6246 and locked in the retracted position. Alternatively, the latches 6242 can remain unlocked and slide to the first side of the unit 6200. In Fig. 53d, the latches are pivoted out of the bottom cutout 6239 on the first side of the unit 6200.

### Expanding/Collapsing

The unit 6200 can be transitioned between an expanded state and a collapsed state, similar to the first exemplary embodiment. In the expanded state, the frame structure 6201 provides a rigid frame for supporting the containment materials 6250 and the webbing and tether structure 6270 and defining aspects of the interior/exterior of the unit 6200. In the collapsed state, the frame structure 6201, the containment materials 6250 and the webbing and tether structure 6270 are folded into or flush with the base structure 6120 to provide a slim profile for ease of portability.

When the unit 6200 is in the expanded state for transporting an animal in a vehicle, the spanner bar 6204 extends rigidly from the front rotating joints 6216 of the front member 6202 to the rear rotating joints 6217 of the rear member 6202. The front rotating joints 6216 are oriented orthogonally to the front member 6202 to direct the front middle support member 6205 toward the rear. The rear middle support member 6207 is received in the rear rotating joints 6217 that are oriented orthogonally to the rear member 6203 toward the front. When either the ends 6206a, 6206b of the front middle support member 6205 or the ends 6208a, 6208b of the rear middle support member 6207 are separated from the rotating joints 6216, 6217, e.g., to collapse the unit 6200, the front rotating joints 6216 can be rotated 90 degrees and oriented toward the bottom of the unit 6200 and/or the rear rotating joints 6217 can be rotated 90 degrees and oriented toward the bottom of the unit 6200. If the spanner bar 6204 remains connected, the rotation of the rotating joints 6217 will bring the spanner bar 6204 within or flush with the member (e.g., front member 6202 or rear member 6203) to which it is connected. Alternatively, the spanner bar 6204 can be detached from both the front and rear members 6202, 6203 and removed completely.

The front rotating actuators 6220 can then be rotated 90 deg and oriented toward the rear so that the front member 6202 is received within or flush with the base structure 6224, whereupon the rear rotating actuators 6221 can be rotated 90 degrees and oriented toward the front so that the rear member 6203 is flush with the collapsed front member 6202. As noted above, the rear member 6203 is slightly shorter than the front member 6202 and the rear rotating actuators 6221 are raised relative to the front rotating actuators 6220 such that, when the unit 6200 is collapsed, the rear member 6203 fits snugly against and/or within the collapsed front member 6202. The front and rear rotating actuators 6220, 6221 can be locked in either of the positions described above, e.g., oriented so that the front member 6202 extends toward the top of the unit 6200 and defines a front surface of the unit 6200 and the rear member 6203 extends toward the top of the unit 6200 and defines a rear surface of the unit 6200 (the expanded state) or oriented so that the front member 6202 extends toward the rear of the unit 6200 and the rear member 6203 extends toward the front of the unit 6200 (the collapsed state). Thus, the frame structure 6201 can be locked in the expanded state to provide a rigid frame defining the interior/exterior of the unit 6200 and the frame structure 6201 can be locked in the collapsed state for ease of transportation and/or storage of the unit 6200.

Fig. 54 shows the unit 6200 of the second exemplary embodiment transitioning from an expanded state into a collapsed state. In 6260, the unit 6200 is in the expanded state. The spanner bar 6204 is connected to the front and rear members 6202, 6203 forming a rigid connection between the members. To disengage the spanner bar 6204, the ends 6206 of the front middle support member 6205 of the spanner bar 6204 are disengaged from the front member 6202. Alternatively, the ends 6208 of the rear middle support member 6207 can be disengaged from the rear member 6203. In 6261, the front member 6202 is collapsed toward the base structure 6224 via the front rotating actuators 6220. In 6262, the front member 6202 is stored flush with the base structure 6224 while in 6263, the spanner bar 6204 is collapsed toward the rear member 6203 via the rear rotating joints 6217. In 6264, the spanner bar 6204 folds under the rear member 6203. Finally, in 6265, the rear member 6203 is collapsed toward the base structure 6224 via the rear rotating actuators 6221. In 6266, the rear member 6203 is stored flush with the base structure 6224.

### Webbing and Tether

The unit 6200 is reinforced with a webbing 6271 and a tether structure 6270 that provides additional reinforcement to the unit 6200 when it is installed in a vehicle. The webbing 6271 extends across the bottom, front and top of the unit 6200 to absorb the force that could be applied to the unit 6200 in the event of a car crash, e.g., if the animal inside is thrown against the interior of the unit. The tether 6280 on the top/rear of the unit 6200 is configured to be secured to an anchor point in the vehicle. Those skilled in the art will understand that any known connectors for coupling to vehicle anchor points may be used for any of the connections described in regard to the exemplary embodiments. These features, in combination with the latches 6242 rigidly mounted to the base structure 6224 of the unit 6200, provide a continuous loop of protection around the unit 6200, e.g., 360 degrees of support. Alternatively, with any of the embodiments described herein, the loop of protection may extend only around 6270 degrees as the back of the seat on which the unit 6200 is mounted can provide protection for events in which the animal is thrown rearward.

Fig. 55a shows the webbing and tether structure 6270 for the unit 6200 of the second exemplary embodiment assembled with the frame structure 6201 and the base structure 6224. The webbing 6271 comprises a first span 6271a and a second span 6271b that extend from rear bracket attachment points 6272 (a first rear bracket attachment point 6272a and a second rear bracket attachment point 6272b) in the latch system 6240 of the base structure 6224 to a rear frame attachment point 6278 on the spanner bar 6204 or the rear member 6203 of the frame structure 6201. Each of the spans 6271a, 6271b comprises a bottom portion 6273 extending through the bottom part 6234 of the base structure 6224 around the bottom 6226 of the top part 6225. The webbing 6271 continues to a wrapping 6274 at which it wraps around the top part 6225 of the base structure 6224 and continues into front portions 6275.

The webbing 6271 then wraps 6276 around the front member 6202 of the frame structure 6201. The webbing 6271 continues to a top portion 6277 and the spans 6271a, 6271b are joined at a rear frame attachment point 6278 that may be on the spanner bar 6204 or the rear member 6203. In an aspect, the rear bracket attachment points 6272 can be defined by the brackets 6244 of the latch system 6240. The brackets 6244 can be rigidly fixed to the base structure 6224, such that when the latches 6242 are connected to the anchor structure in the vehicle, a rigid continuous loop is formed that extends from the anchor structure in the vehicle to an end of the webbing 6271.

The frame structure 6201 further supports a tether 6280 fixed to either the spanner bar 6204 or the rear member 6203. The tether 6280 can extend from the top/rear of the unit 6200 and attach to an anchor structure in the vehicle, e.g., on the back of the seat. In an aspect, the tether 6280 can be directly connected to the webbing 6271 on one end, and the tether 6280 can be configured to attach to the anchor structure in the vehicle on the other end.

Fig. 55b shows a diagram of the unit 6200 of the second exemplary embodiment installed in a vehicle. As shown, the latches 6242 are connected at their latching ends 6243 to the steel frame of the car. The connector 6281 at the end of the tether 6280 is wrapped from the rear member 6203 of the frame structure 6201 to an anchor point on the back of the seat. This forms a full loop of protection from the latches 6242 through the webbing 6271, and finally through the tether 6280 attached to the anchor on the back of the seat.

Fig. 55c shows the unit 6200 deflecting under the force of a car crash. Those skilled in the art will understand that the deformation of the unit 6200 will be substantially similar to that of the unit 6100 when subjected to similar forces. As seen in Fig. 55c, in the initial state the side view of the unit 6200 presents as substantially square in cross-section with the frame structure 6201 and webbing 6271 extending along substantially similar paths over the front and top surfaces of the unit 6200. Upon impact, the animal is thrown forward impacting the webbing 6271 and pushing the webbing 6271 forward out of line with the frame structure 6201. At the same time, as the webbing 6271 moves forward beyond the front of the frame structure 6201 (i.e., stretching of the webbing is minimal), the webbing 6271 pushes the front of the frame structure 6201 rearward while the base remains in the same position as it is coupled to the anchor points. Thus, in this position the top of the frame structure 6201 is further rearward and slightly lower while the sides of the frame structure 6201 have rotated (counterclockwise in this view) to accommodate the motion of the top of the frame structure 6201.

Fig. 56 shows the installation of the unit 6200 in a vehicle. In 6285, the unit 6200 is collapsed so that it may fit through the vehicle door. In 6286, the latches are pivoted into the expended position and attached to the steel frame of the vehicle. In 6287, the unit 6200 is unfolded. In 6288, the unit 6200 is fully unfolded.

### Third Embodiment

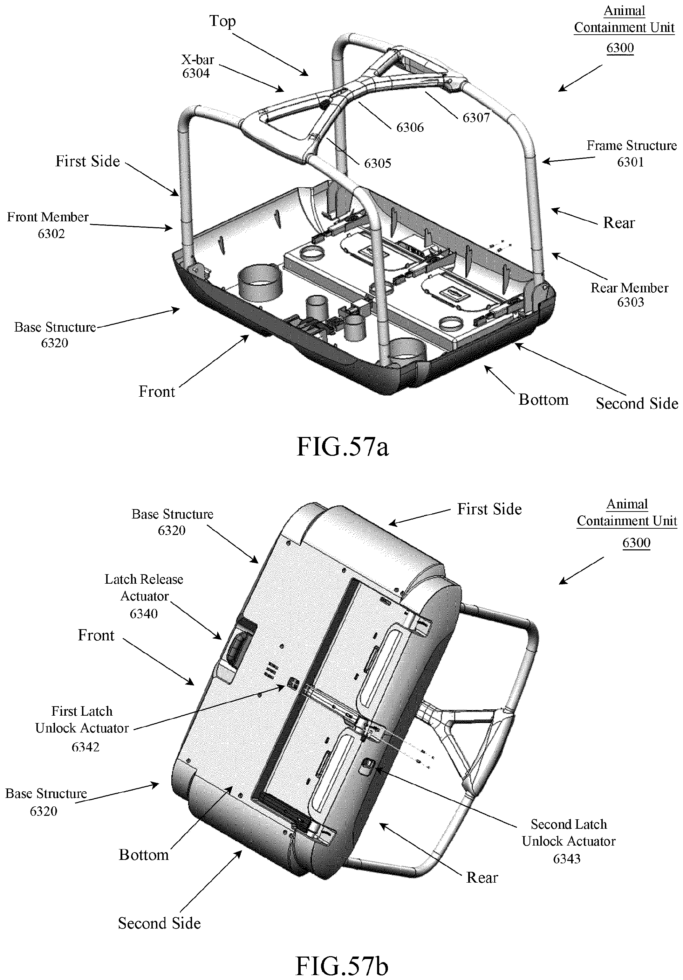

Figs. 57a-57b show views of an animal containment unit 6300 according to a third exemplary embodiment. Similar to the unit 6200 of the second exemplary embodiment described above, the unit 6300 of the third exemplary embodiment is generally six-sided (although any other arrangement that provides the desired space for containing the animal may be used) and is described with regard to a front, a rear, a first side (e.g., left side, relative to a front view), a second side (e.g., right side, relative to a front view), a bottom and a top. These sides are labeled in Figs. 57a-57b and omitted in the subsequent figures.

The unit 6300 of the third exemplary embodiment has certain features similar to the unit 6200 described for the second exemplary embodiment, comprising certain aspects of the frame structure, base structure, latch system, containment materials and webbing and tether structure. However, the unit 6300 of the third exemplary embodiment comprises certain actuation mechanisms different from those of the second exemplary embodiment as will be described Specifically below. It is noted that the containment materials and webbing and tether structure of the third exemplary embodiment are arranged similarly to those of the second exemplary embodiment and are not shown in Figs. 57a-57b. Fig. 57a shows a perspective view of the unit 6300; Fig. 57b shows a bottom view of the unit 6300.

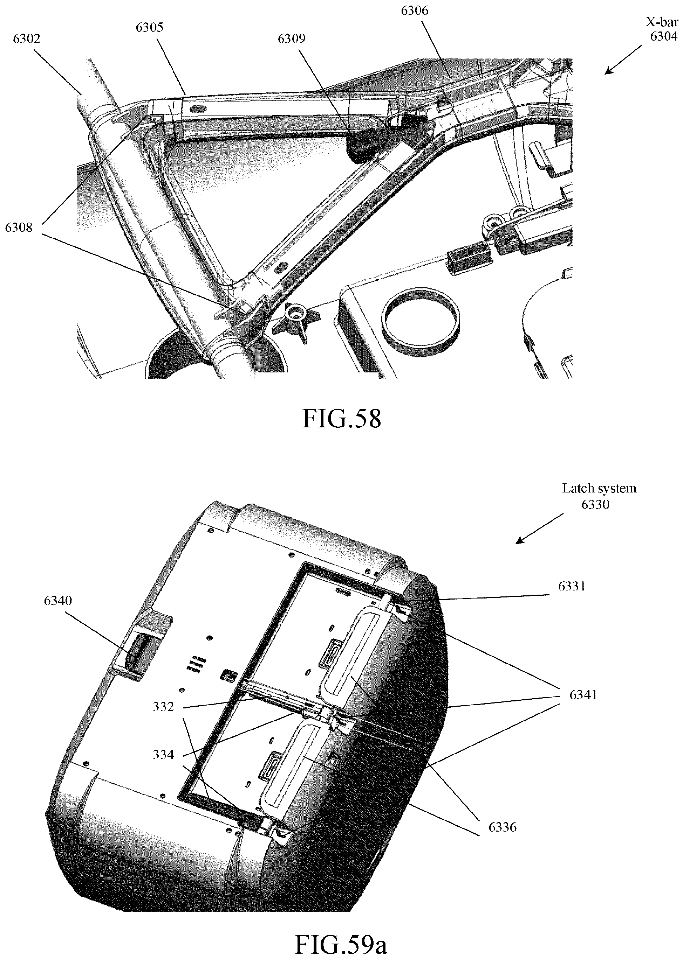

The unit 6300 comprises a frame structure 6301 coupled to and supported by a base structure 6320. The frame structure 6301 comprises a front member 6302, a rear member 6303, and an X-bar 6304 connecting the front member 6302 and the rear member 6303 when the unit 6300 is in the expanded state, to be described in further detail below with regard to Fig. 58. The front member 6302 and the rear member 6303 of the third exemplary embodiment may be shaped similarly to the front member 6202 and the rear member 6203 of the second exemplary embodiment. In this example, the front member 6302 additionally comprises recesses (e.g., slots) for receiving pins 6310 of the X-bar 6304 to attach the X-bar 6304 to the front member 6302, to be described below.

The X-bar 6304 comprises a front portion 6305, a middle portion 6306 and a rear portion 6307. The front portion 6305 of this embodiment is attached to the front member 6302 of the frame structure, and extends in two lengths toward the rear/middle and join at the middle portion 6306, and also extends from the middle portion 6306 to the rear portion 6307 in two lengths for attachment to the rear member 6303 of the frame structure 6301, forming a shape similar to an X.

The X-bar 6304 can be detachable from either or both of the front member 6302 and/or the rear member 6303, in a manner similar to the spanner bar 6204 of the unit 6200 of the second exemplary embodiment. In this example, the X-bar 6304 is detachable from the front member 6302. The X-bar 6304 can be detached from the front member 6302 via an X-bar release actuator 6309.

Fig. 58 shows the X-bar 6304 of the frame structure 6301 of the unit 6300 of the third exemplary embodiment. The X-bar 6304 comprises two pins 6308 (one pin 6308 at the front-facing end of each length of the front portion 6305 of the X-bar 6304) that are translatable (e.g., extendable and retractable) relative to the front portion 6305 of the X-bar 6304. The pins 6308 are connected to the X-bar release actuator 6309 via respective cables running through the front portion 6305. The X-bar release actuator 6309 comprises a plunger that can be pressed into and/or withdrawn from the middle portion 6306 of the X-bar 6304 by a user. To attach the X-bar 6304 to the front member 6302 the X-bar release actuator 6309 can be withdrawn from the middle portion 6306, pushing the cables outward (toward the front member 6302) and into the recesses of the front member 6302. To release the X-bar 6304 from the front member 6302, the X-bar release actuator 6309 is depressed into the middle portion 6306, pulling the cables inward (away from the front member 6302) and retracting the pins 6308 from the recesses of the front member 6302. When the X-bar 6304 is released the unit 6300 can be folded down into the collapsed state in a manner similar to that described above for the unit 6200 of the second exemplary embodiment.

The unit 6300 further comprises a base structure 6320. Similar to the base structure 6224 of the second exemplary embodiment. The base structure 6320 of the third exemplary embodiment comprises a top part and a bottom part that can be, for example, molded from plastic and nested together. Located in a rear portion of the bottom part is a cutout portion that contains the latch system 6330 of the third exemplary embodiment.

The latch system 6330 of the third exemplary embodiment comprises pivoting rigid latches 6332 slidably mounted to a rod 6331 comprising two brackets 6336 fixed around the rod 6331, similarly to the latch system 6240 of the unit 6200 of the second exemplary embodiment. The latches 6332 are slidable along the rod 6331 between a first position on the first side of the unit 6300 and a second position on the second side of the unit 6300. The latches 6332 comprise latching ends 6333 configured to be attached to anchor points in the vehicle in a known manner. The latch system 6330 of the third exemplary embodiment comprises a latch release actuator 6340 for releasing the latches 6332 from vehicle anchor points, a first latch unlock actuator 6342 to allow the latches 6332 to rotate into the extended position (e.g., a use position), and a second latch unlock actuator 6344 to allow the latches 6332 to rotate into the retracted position (e.g., a stored position).

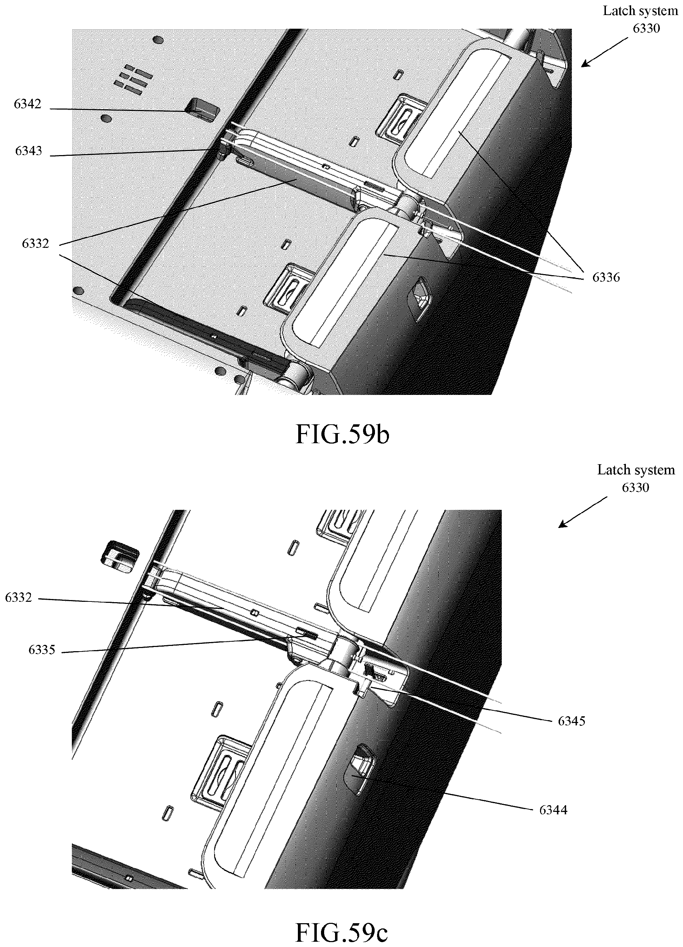

Figs. 59a-59c show the latch system 6330 on the bottom of the unit 6300 of the third exemplary embodiment comprising a latch release actuator 6340, a first lack unlock actuator 6342 and a second latch unlock actuator 6344. Fig. 59a shows an arrangement for a latch release actuator 6340; Fig. 59b shows an arrangement for a first latch unlock actuator 6342; Fig. 59c shows an arrangement for a second latch unlock actuator 6344.

As shown in Fig. 59a, the latch release actuator 6340 is connected to three actuator projections 6341 adjacent to the rod 6331 at locations along the base structure 6320 where the latches 6332 can be extended, e.g., adjacent to the brackets 6336. The actuator projections 6341 of this embodiment are connected to the latch release actuator 6340, e.g., via cables, so that actuating the latch release actuator 6340 (e.g., pulling the latch release actuator 6340 toward the front of the unit 6300) translates the actuator projections 6341 toward the front of the unit 6300.

Each of the latches 6332 comprises one or more actuator slots 6334 that can couple to the actuator projections 6341 when the latches 6332 are in the extended position. For example, when the latches 6332 are in the first position on the first side of the device, the actuator projection 6341 on the first side is received in the actuator slot 6334 of the latch 6332 on the first side and the actuator projection 6341 in the middle is received in the actuator slot 6334 of the latch 6332 in the middle; and when the latches 6332 are in the second position on the second side of the device, the actuator projection 6341 on the second side is received in the actuator slot 6334 of the latch 6332 on the second side and the actuator projection 6341 in the middle is received in the actuator slot 6334 of the latch 6332 in the middle. When the latch release actuator 6340 is actuated, the movement of the actuator projections 6341 within the actuator slots 6334 releases the latches 6332 (e.g., the latching ends 6333 thereof) from the anchor points within the vehicle. Accordingly, the latch release actuator 6340 can release the latches 6332 when the latches 6332 are in any position (e.g., the first position or the second position).

As shown in Fig. 59b, the first latch unlock actuator 6342 is connected to a projection 6343 that can connect to either of the latches 6332 (e.g., the latching end 6333 thereof) to retain the latches 6332 in the withdrawn (stored) position. The first latch unlock actuator 6342 can be actuated (e.g., slid or pulled) to retract the projection 6343 and unlock the latches 6332 so that the latches 6332 are free to rotate into the extended (use) position.

As shown in Fig. 59c, the second latch unlock actuator 6344 is connected to a pin 6345 that can be received in a pin receiving hole 6335 of either of the latches 6332 when the latches 6332 are in the extended (use) position. When the pin 6345 is received in the pin receiving hole 6335 the latches 6332 are locked in the extended position. Both latches 6332 comprise the pin receiving hole 6335, therefore, only one pin 6345 is required to lock the latches 6332. The second latch unlock actuator 6344 can be actuated (e.g., slid or pulled) to retract the pin 6345 from the pin receiving hole 6335 of the latch 6332 to allow the latches 6332 to freely rotate, e.g., transition the latches 6332 into the withdrawn position.

The present disclosure may comprise technical solutions of items below.
Item 1. A unit for containing animals on a seat of a vehicle, comprising:
   a base structure comprising a base, the base comprising a front portion and a rear portion;
   a frame structure comprising:
      a front member coupled to the front portion of base;
      a rear member coupled to the rear portion of the base; and
      containment materials extending at least partially about the frame structure; and
      a webbing structure comprising at least first and second spans of webbing, each of the spans comprising a first end coupled to a respective first anchor point defined by the base structure, the spans extending from the respective first anchor point about an exterior of the frame structure and wrapping around the front member to respective second ends of the spans, the second end of each of the spans being configured to couple to a rigid connection on or adjacent to the seat of the vehicle so that the webbing extends about the frame structure along a desired path configured to restrain a pet contained within the unit.
Item 2. The unit of item 1, wherein the front member comprises a first end coupled to the front portion of the base on a first side and a second end coupled to the front portion of the base on a second side, the front member of the frame structure being shaped in a curve to define in part a front of the unit and define in part a top of the unit and the rear member comprises a first end coupled to the rear portion of the base on the first side and a second end coupled to the rear portion of the base on the second side, the rear member of the frame structure being shaped in a curve to define in part a rear of the unit and define in part the top of the unit, wherein the spans extend along a top portion of the containment materials covering the top of the unit to a second end coupled to a second anchor point.
Item 3. The unit of item 1, wherein the base structure further comprises a base frame mounted to the base and wherein the base frame comprises a front member and the first ends of the spans of webbing are coupled to the front member of the base frame interior to the base.
Item 4. The unit of item 3, wherein the first ends of the spans of webbing are sewn to the front member of the base frame.
Item 5. The unit of item 3, wherein the containment materials comprise front containment materials defining in part the front of the unit and supported at least in part by the front member of the frame structure, a front potion of the containment materials covering the front of the unit, the front portion of the containment materials comprising an exterior surface and an interior surface, the unit further comprising a top portion of the containment materials covering the top of the unit and supported at least in part by the front member and the rear member of the frame structure.
Item 6. The unit of item 5, where the spans of webbing are woven through at least part of the front containment materials so that a portion the spans are exterior to the exterior surface of the front containment materials and a further portion of the spans are interior to the exterior surface of the front containment materials.
Item 7. The unit of item 6, wherein the containment materials comprise at least two layers and the spans of webbing are woven through a first one of the layers and are not woven through a second one of the layers.
Item 8. The unit of item 3, wherein the spans wrap around an exterior surface of the front member of the base frame.
Item 9. The unit of item 1, wherein the frame structure further comprises:
   first and second middle members each comprising a first end coupled to the front member and a second end coupled to the rear member, the first and second middle members being exterior to an exterior surface of the containment materials, and wherein the first span of webbing extends across the exterior surface of the containment materials along the first middle member and the second span of webbing extends across the exterior surface of the containment materials along the second middle member.
Item 10. The unit of item 9, wherein the middle members of the frame structure each comprise ring structures through which the spans of webbing are run.
Item 11. The unit of item 10, wherein the middle members of the frame structure each comprise a front middle member and a rear middle member detachable via a sliding actuator, the sliding actuator being translatable between a first position, where the sliding actuator is slid over the front middle member and detaches from the rear middle member, and a second position, where the sliding actuator is slid over the rear middle member and attaches the front middle member and the rear middle member, and wherein, when the sliding actuator is translated, the ring structures of the actuator slide over the spans of webbing.
Item 12. The unit of item 1, further comprising:
   a tether structure comprising at least two spans, each of the spans of the tether structure comprising a first end coupled to the rear member, the second ends of the spans joining together at a joint, the tether structure further comprising a unitary span extending from a first end at the joint to a second end on which a tether latch is adjustably positioned,
   wherein the tether latch is configured to attach to the rigid connection on or adjacent to the seat of the vehicle.
Item 13. The unit of item 12, wherein the first ends of the spans of the tether structure are adjacent to the second ends of the spans of webbing.
Item 14. The unit of item 12, wherein the first ends of the spans of the tether structure are sewn around the rear member.
Item 15. The unit of item 9, wherein the first ends of the spans of webbing are coupled to rigid brackets at the rear portion of the base.
Item 16. The unit of item 15, wherein the spans extend from the first end interior to the base structure, wrap around a front portion of the base structure and continue exterior to the exterior surface of a front portion of the containment materials covering the front of the unit.
Item 17. The unit of item 1, wherein the rigid connection on or adjacent to the seat of the vehicle is a first rigid connection, the unit further comprising:
   latches coupled to the frame structure, the latches being configured to couple the frame structure to a second rigid connection on or adjacent to the seat of the vehicle.
Item 18. The unit of item 17, wherein the second rigid connection is spaced from the first rigid connection.
Item 19. The unit of item 1, wherein the second ends of the first and second spans of webbing are configured to directly couple to the rigid connection on or adjacent to the seat of the vehicle.
Item 20. A unit for containing animals on a seat of a vehicle, comprising:
   a base structure comprising a base, the base comprising a front portion and a rear portion; and
   a frame structure that transitions between an expanded state and a collapsed state, the frame structure comprising:
      a front member comprising a first end and a second end, the first and second ends of the front member being rotatably coupled to the front portion of the base, the front member being shaped to define in part a front of the unit and define in part a top of the unit when the frame structure is in the expanded state,
      a rear member comprising a first end and a second end, the first and second ends of the rear member being rotatably coupled to the rear portion of the base, the rear member being shaped to define in part a rear of the unit and define in part the top of the unit when the frame structure is in the expanded state,
      at least one middle member comprising a first end rotatably coupled to either the front member or the rear member via a rotating joint and a second end that, when the frame structure is in the expanded state, is attached to a corresponding part of the frame structure such that a connection is made between the front member and the rear member via the at least one middle member and, when the frame structure is to be transitioned into the collapsed state, is detached from the corresponding part of the frame structure such that the front member and the rear member are disconnected and the rotating joint is rotated to a collapsed position in which the at least one middle member is within or flush with the front member or the rear member.
Item 21. The unit of item 20, wherein the frame structure comprises two middle members each comprising a front middle member and a rear middle member detachable via a sliding actuator, the sliding actuator being translatable between a first position in which the sliding actuator is slid over the front middle member and detached from the rear middle member, and a second position in which the sliding actuator is slid over the rear middle member and to attach the front middle member to the rear middle member.
Item 22. The unit of item 21, wherein the sliding actuator comprises a first opening and a second opening for receiving a button extending off an exterior of the front middle member, wherein, in the first position, the button is received in the first opening and, in the second position, the button is received in the second opening.
Item 23. The unit of item 20, further comprising:
   a first front rotating actuator rotatably coupled to the front portion of the base on a first side, a second front rotating actuator rotatably coupled to the front portion of the base on a second side, a first rear rotating actuator rotatably coupled to the rear portion of the base on the first side, and
   a second rear rotating actuator rotatably coupled to the rear portion of the base on the second side.
Item 24. The unit of item 23, wherein, after the at least one middle member is brought to the collapsed position, the first and second front rotating actuators are rotated to a stowed position in which the front member is within or flush with the base structure or with the rear member and the first and second rear rotating actuators are rotated to bring the rear member within or flush with the base structure or with the front member.
Item 25. The unit of item 23, wherein the first and second rear rotating actuators are positioned relative to the base higher than the first and second front rotating actuators so that, when the frame structure is in the collapsed state, the rear member lies flush on top of the front member.
Item 26. The unit of item 23, wherein the first and second front rotating actuators are lockable in a first position in which the front member of the frame structure extends orthogonally to the base and a second position in which the front member extends parallel to the base and wherein the first and second rear rotating actuators are lockable in a first position in which the rear member of the frame structure extends orthogonally to the base and a second position and wherein the rear member extends parallel to the base.
Item 27. The unit of item 20, wherein the at least one middle member is detachable from either the front member or the rear member while remaining attached to the other one of the front member or the rear member so that the at least one middle member can be rotated with the rotating joint.
Item 28. The unit of item 27, wherein the at least one middle member is detachable from either the front member or the rear member via a release actuator mounted to the at least one middle member.
Item 29. The unit of item 28, wherein the release actuator withdraws at least one pin extending off the at least one middle member from a corresponding recess in the front member or the rear member.
Item 30. A unit for containing animals on a seat of a vehicle, comprising:
   a base structure comprising a base and a base frame, the base comprising a front portion and a rear portion and the base frame comprising a front member mounted to the front portion of the base and a rear member mounted to the rear portion of the base; and
   a latch carriage slidably coupled to the front member and the rear member of the base frame so that the latch carriage can translate within the base in a direction parallel to the front and rear members from a first position on a first side of the unit to a second position on a second side of the unit, the latch carriage comprising latches configured to be rigidly coupled to the unit to anchor points within the vehicle.
Item 31. The unit of item 30, wherein the latch carriage is slidably coupled to the front member of the base frame via front guides extending from a front member of the latch carriage coupled to the front member of the base frame and the latch carriage is slidably coupled to the rear member of the base frame via rear guides extending from a rear member of the latch carriage coupled to the rear member of the base frame.
Item 32. The unit of item 30, further comprising:
   a first side actuator coupled to the base structure and accessible from an exterior of the unit for locking the latch carriage in the first position so that the latches extend out the rear portion of the base on the first side; and
   a second side actuator coupled to the base structure and accessible from the exterior of the unit for locking the latch carriage in the second position so that the latches extend out the rear portion of the base on the second side,
   wherein the latch carriage is releasable from the first or second side actuator by pulling the first or second side actuator out relative to the base structure.
Item 33. The unit of item 32, wherein the first and second side actuators comprise features for receiving a correspondingly shaped feature of the latch carriage to lock the latch carriage.
Item 34. The unit of item 30, wherein the latches can be transitioned into an extended position extended out the rear portion of the base frame or a retracted position withdrawn into the rear portion of the base frame.
Item 35. The unit of item 34, wherein the latches are telescopic.
Item 36. A unit for containing animals on a seat of a vehicle, comprising:
   a base structure comprising a base, the base comprising a rear cutout portion; and
   a latch system mounted in the rear cutout portion of the base and accessible from a bottom of the unit, the latch system comprising a rod extending across the rear cutout portion and fixed to the base, the latch system further comprising a plurality of latches slidably and rotatably coupled to the rod for rigidly coupling the unit to the anchor points within the vehicle, wherein the latches are coupled to one another so that a desired distance is maintained between the latches, the latch system further comprising brackets around the rod for preventing the latches from sliding when the latches are adjacent to the brackets,
   wherein the latches are positionable in a first position along the rod on a first side of the unit or a second position along the rod on a second side of the unit.
Item 37. The unit of item 36, wherein the latches are transitionable from a retracted position where the latches are withdrawn into the base to an extended position where the latches are pivoted around the rod and extend out from the base.
Item 38. The unit of item 37, further comprising:
   a latch release actuator connected to a projection and configured to translate the projection, wherein at least one latch comprises a slot for receiving the projection, the latch release actuator being configured so that, when the latch release actuator is actuated, the projection is translated so that the latches are released from the anchor points to which the latches were attached.
Item 39. The unit of item 37, wherein, when the latches are in the extended position, the brackets prevent the latches from sliding along the rod and, when the latches are in the retracted position, the brackets do not prevent the latches from sliding along the rod.
Item 40. The unit of item 8, wherein the latches are lockable in the retracted position in the base.
Item 41. The unit of item 40, further comprising:
   a latch unlock actuator in the base structure connected to a projection and configured to translate the projection, wherein a first one of the latches comprises a slot for receiving the projection, the latch unlock actuator being configured so that, when the latch unlock actuator is actuated, the projection is translated so that the first latch is released from the retracted position and free to transition into the extended position.
Item 42. The unit of item 37, wherein the latches are lockable in the extended position in the base.
Item 43. The unit of item 42, further comprising:
   a latch unlock actuator in the base structure connected to a pin and configured to translate the pin, wherein a first one of the latches comprises a hole for receiving the pin, the latch unlock actuator being configured so that, when the latch unlock actuator is actuated, the projection is translated so that the first latch is released from the extended position and free to transition into the retracted position.
Item 44. A unit for containing animals on a seat of a vehicle, comprising:
   a base structure comprising a base and a base frame, the base comprising a front portion and a rear portion and the base frame comprising a front member mounted to the front portion of the base and a rear member mounted to the rear portion of the base;
   a latch system coupled to the front member and the rear member of the base frame, the latch system comprising a plurality of latches configured to releasably couple the unit to anchor points within the vehicle, the latches being mounted to respective medial members slidably coupled to respective side members of the latch system so that the latches can be transitioned between an extended position in which the latches extend out of the rear portion and a retracted position in which the latches are withdrawn into the rear portion; and
   an actuator coupled to the latch system and accessible from an exterior of the unit for locking the medial members relative to the side members so that the latches are locked in the extended position or the withdrawn position, the actuator being operable to unlock the medial members relative to the side members so that the latches can be transitioned between the extended and withdrawn positions.
Item 45. The unit of item 44, wherein the actuator is mounted to a front member through the front portion of the base.
Item 46. The unit of item 45, wherein the latch system is translatable within the base in a direction parallel to the front member of the base frame, wherein a slot is formed in the front portion of the base so that the actuator can translate along with the latch system.
Item 47. A unit for containing animals on a seat of a vehicle, comprising:
   a base structure comprising a base, the base comprising a rear portion; and
   a latch system mounted in the rear portion of the base, the latch system comprising a rod fixed to the base, the latch system further comprising latches rotatably coupled to the rod for rigidly coupling the unit to anchor points within the vehicle, wherein the latches are coupled to one another so that a distance is maintained between the latches,
   wherein the latches can be transitioned from an extended position out the base to a retracted position within the base by rotating the latches about the rod.
   Item 48. The unit of item 47, wherein the latch system further comprises brackets around the rod for preventing the latches from sliding when the latches are adjacent to the brackets.
   Item 49. The unit of item 47, wherein the latches are lockable in the retracted position in the base via a lock accessible on a bottom of the base.
Item 50. A unit for containing animals on a seat of a vehicle, comprising:
   a base comprising a front portion and an opposing rear portion; and
   a latch system coupled to the base, the latch system comprising:
      a plurality of latches configured to releasably couple the unit to anchor points within the vehicle, the latches being movably to the base so that the latches can be transitioned between an extended position in which the latches extend out of the rear portion, and a retracted position in which the latches are withdrawn into the rear portion; and
      an actuator coupled to the base and accessible from an exterior of the unit, the actuator being configured to release the latches from the anchor points within the vehicle.
Item 51. The unit of item 50, wherein the actuator is configured to release each of the plurality of latches simultaneously.
Item 52. The unit of item 50, wherein the latch system comprises a latch carriage, the plurality of latches being coupled to the latch carriage, wherein the latch carriage can translate within the base in a direction parallel to the front and rear portion of the base from a first position on a first side of the unit to a second position on a second side of the unit, and wherein the actuator is configured to release the latches when the latch carriage is in either one of the first and second positions.

It should be noted that all parameters, dimensions, materials, and constructions described in this disclosure are exemplary and illustrative. The actual parameters, dimensions, materials, and/or constructions will be determined based on specific application of this disclosure or teachings of this disclosure. It should be understood that the aforementioned embodiments are presented primarily in a manner of examples and that concepts and methods of this disclosure can be realized in a manner different from the specifically described and claimed ways within the scope of the appended claims and their equivalents. The implementations of this disclosure involve each of the above-mentioned individual features, elements, products, materials, components, and/or methods.

Furthermore, unless such features, elements, products, materials, components, and/or methods are inconsistent with each other, any combination of two or more of such features, elements, products, materials, components, and/or methods is comprised within the scope for protection in this disclosure. Without departing from the scope of this disclosure, other substitutions, modifications, changes, and omissions can be made to the design, operating conditions, and configuration structures of the corresponding elements of the aforementioned embodiments. The use of numerical ranges does not exclude equivalents that fall outside such ranges but satisfy the same function in the same manner to achieve the same results.

## Claims

1. An animal transport apparatus for securing an animal wearing a wearable device thereon, comprising:
a bottom plate providing an animal bearing surface;
a side plate connected to a first long side of the bottom plate, and the bottom plate and the side plate being connected to form an L-shaped structure as viewed from a side of the animal transport apparatus; and
at least one pair of fixing buckle straps, each having one end secured to a first position and a second position on the animal bearing surface of the bottom plate, and the other end connected to the wearable device.

2. An animal transport apparatus, comprising:
a bottom plate providing an animal bearing surface, and having at least one bottom plate opening comprising at a first position on the animal bearing surface;
a side plate connected to a first long side of the bottom plate, and the bottom plate and the side plate being connected to form an L-shaped structure as viewed from a side of the animal transport apparatus; and
a positional fixing assembly, comprising:
at least one fixing buckle strap, one end of which is secured to a second position on the animal bearing surface of the bottom plate; and
at least one fixing pull strap, extending on a surface of the bottom plate opposite to the animal bearing surface, one end of the fixing pull strap extending out from the at least one bottom plate opening and connecting to the fixing buckle strap to form a closed positional fixing structure.

3. The animal transport apparatus of claim 2, wherein the bottom plate has a first bottom plate opening and a second bottom plate opening located on the animal bearing surface and spaced apart from each other, the positional fixing assembly comprising:
a first fixing buckle strap and a second fixing buckle strap, each of which having one end secured to the animal bearing surface of the bottom plate, and spaced apart from each other; and
a first fixing pull strap and a second fixing pull strap, extending on the surface of the bottom plate opposite to the animal bearing surface, having ends respectively extending from the first bottom plate opening and the second bottom plate opening, to connect with the first fixing buckle strap and the second fixing buckle strap to form a first closed positional fixing structure and a second closed positional fixing structure.

4. The animal transport apparatus of claim 3, wherein the first closed positional fixing structure is parallel to the second closed positional fixing structure or intersects with the second closed positional fixing structure at a midpoint.

5. The animal transport apparatus of claim 3, further comprising an adjustment assembly provided at a bottom of the bottom plate to adjust positions of the first bottom plate opening and the second bottom plate opening.

6. The animal transport apparatus of claim 5, wherein the adjustment assembly is movably provided in a central recess of the bottom plate, and adjusts the positions of the first bottom plate opening and the second bottom plate opening on the bottom plate by movement within the central recess.

7. The animal transport apparatus of claim 2, wherein the other end of the fixing pull strap is connected to a positioning buckle and exposed out of the bottom plate and the side plate.

8. The animal transport apparatus of claim 2, wherein the positional fixing assembly comprises:
at least one fixing buckle connected to a corresponding free end of the at least one fixing buckle strap; and
at least one buckle connected to the end of the at least one fixing pull strap extending from the first bottom plate opening,
the positional fixing assembly forming the closed positional fixing structure by engagement of the fixing buckle and the buckle.

9. The animal transport apparatus of claim 1 or 2, further comprising an animal head guard connected to a first short side of the bottom plate.

10. The animal transport apparatus of claim 9, wherein one or more of the animal head guard and the side plate is connected to the bottom plate in a movable manner.

11. The animal transport apparatus of claim 1 or 2, further comprising a support member connected to a second long side of the bottom plate, the second long side being opposite to the first long side.

12. The animal transport apparatus of claim 11, wherein the support member is one of a support side plate and a U-shaped support rod.

13. The animal transport apparatus of claim 12, wherein one or more of the side plate and the support member is connected to the bottom plate in a movable manner.

14. The animal transport apparatus of claim 13, wherein one or more of the side plate and the support member is pivotally connected to the bottom plate.

15. The animal transport apparatus of claim 12, wherein one or more of the side plate and the support member is detachably connected to the bottom plate.

16. The animal transport apparatus of claim 15, wherein one or more of the support side plate and the U-shaped support rod is connected to the bottom plate in an insertion manner.

17. The animal transport apparatus of claim 1 or 2, wherein the side plate is connected to the bottom plate in a movable manner or in a detachable manner.

18. The animal transport apparatus of claim 17, wherein the side plate is pivotally connected to the bottom plate.

19. The animal transport apparatus of claim 1 or 2, further comprising a mounting structure located in the bottom plate, the animal transport apparatus being secured to a vehicle rear seat through the mounting structure.

20. The animal transport apparatus of claim 19, wherein the mounting structure is a ISOFIX soft connecting structure, a ISOFIX rigid connecting frame, or a LATCH system.

21. The animal transport apparatus of claim 20, further comprising an upper anchor assembly to further secure the animal transport apparatus to an anchor point on the vehicle rear seat, the upper anchor assembly comprising:
a first tether and a second tether each having a first end and a second end;
a length adjuster, a first end of which is connected to a first end of each of the first tether and the second tether;
a connecting tether, the first end of which is movably connected to a second end of the length adjuster to form an adjustable end;
and
a connecting hook, connected to the second end of the connecting tether,
wherein the first tether and the second tether are connected to the side plate or the bottom plate with their respective second ends,
wherein the upper anchor assembly secures the animal transport apparatus to the anchor point through the connecting hook.

22. The animal transport apparatus of claim 21, further comprising a transverse connecting tether connected between the first tether and the second tether.

23. The animal transport apparatus of claim 21, wherein the first tether and the second tether are engaged with the side plate by fixing buckles connected to the respective second ends thereof.

24. The animal transport apparatus of claim 21, wherein the first tether and the second tether are securely connected to the bottom plate with their respective second ends.

25. The animal transport apparatus of claim 20, wherein the ISOFIX soft connecting structure comprises a Y-shaped webbing, a first connector, and a second connector, wherein the first connector and the second connector are respectively connected to a first end and a second end of the Y-shaped webbing, and a third end of the Y-shaped webbing is connected to a positioning buckle; wherein the animal transport apparatus is secured to the ISOFIX anchor points on the vehicle rear seat through the first connector and the second connector.

26. The animal transport apparatus of claim 25, wherein the Y-shaped webbing extends out of the bottom plate and the side plate with its third end.

27. The animal transport apparatus of claim 20, wherein the ISOFIX rigid connecting frame comprises a first connector and a second connector, the first connector and the second connector are located at both ends of the ISOFIX rigid connectimg frame close to one side of the vehicle rear seat to be secured to the ISOFIX anchor points on the vehicle rear seat.

28. The animal transport apparatus of claim 20, wherein a plurality of storage slots is provided on a bottom of the bottom plate, the storage slots are designed to match and accommodate one or more of the mounting structure, the ISOFIX soft connecting structure, the ISOFIX rigid connecting frame, the LATCH system, the support member, the U-shaped support rod, and the animal head guard.

29. The animal transport apparatus of claim 1 or 2, wherein the side plate comprises a reinforcing frame, and the reinforcing frame has a shape corresponding to a perimeter of the side plate and is embedded in the side plate.

30. The animal transport apparatus of claim 1 or 2, wherein the side plate comprises at least one guide on an outer surface of the side plate, the outer surface faces away from the animal bearing surface.

31. The animal transport apparatus of claim 1 or 2, wherein the side plate comprises a U-shaped support rod connected to the bottom plate, and a support fabric sleeved on the U-shaped support rod.

32. The animal transport apparatus of claim 31, further comprising an animal head guard, which is formed by the support fabric connected to the side plate.

33. An animal transport apparatus, comprising:
a bottom providing an animal bearing surface; and
at least one side part respectively connected to one side of the bottom, and one of the side parts is connected to the bottom in a movable manner or in a detachable manner.

34. The animal transport apparatus of claim 33, wherein,
the animal transport apparatus is an animal containment unit used on a seat of a vehicle;
the bottom is formed by a base structure, the base structure comprises a base, the base comprises a front portion and a rear portion;
the at least one side is fromed by a frame structure, the frame structure that transitions between an expanded state and a collapsed state, the frame structure comprising:
a front member comprising a first end and a second end, the first and second ends of the front member being rotatably coupled to the front portion of the base, the front member being shaped to define in part a front of the unit and define in part a top of the unit when the frame structure is in the expanded state,
a rear member comprising a first end and a second end, the first and second ends of the rear member being rotatably coupled to the rear portion of the base, the rear member being shaped to define in part a rear of the unit and define in part the top of the unit when the frame structure is in the expanded state,
at least one middle member comprising a first end rotatably coupled to either the front member or the rear member via a rotating joint and a second end that, when the frame structure is in the expanded state, is attached to a corresponding part of the frame structure such that a connection is made between the front member and the rear member via the at least one middle member and, when the frame structure is to be transitioned into the collapsed state, is detached from the corresponding part of the frame structure such that the front member and the rear member are disconnected and the rotating joint is rotated to a collapsed position in which the at least one middle member is within or flush with the front member or the rear member

35. The animal transport apparatus of claim 34, wherein the frame structure comprises two middle members each comprising a front middle member and a rear middle member detachable via a sliding actuator, the sliding actuator being translatable between a first position in which the sliding actuator is slid over the front middle member and detached from the rear middle member, and a second position in which the sliding actuator is slid over the rear middle member and to attach the front middle member to the rear middle member.

36. The animal transport apparatus of claim 35, wherein the sliding actuator comprises a first opening and a second opening for receiving a button extending off an exterior of the front middle member, wherein, in the first position, the button is received in the first opening and, in the second position, the button is received in the second opening.

37. The animal transport apparatus of claim 34, further comprising:
a first front rotating actuator rotatably coupled to the front portion of the base on a first side,
a second front rotating actuator rotatably coupled to the front portion of the base on a second side,
a first rear rotating actuator rotatably coupled to the rear portion of the base on the first side, and
a second rear rotating actuator rotatably coupled to the rear portion of the base on the second side.

38. The animal transport apparatus of claim 37, wherein, after the at least one middle member is brought to the collapsed position, the first and second front rotating actuators are rotated to a stowed position in which the front member is within or flush with the base structure or with the rear member and the first and second rear rotating actuators are rotated to bring the rear member within or flush with the base structure or with the front member.

39. The animal transport apparatus of claim 37, wherein the first and second rear rotating actuators are positioned relative to the base higher than the first and second front rotating actuators so that, when the frame structure is in the collapsed state, the rear member lies flush on top of the front member.

40. The animal transport apparatus of claim 37, wherein the first and second front rotating actuators are lockable in a first position in which the front member of the frame structure extends orthogonally to the base and a second position in which the front member extends parallel to the base and wherein the first and second rear rotating actuators are lockable in a first position in which the rear member of the frame structure extends orthogonally to the base and a second position and wherein the rear member extends parallel to the base.

41. The animal transport apparatus of claim 34, wherein the at least one middle member is detachable from either the front member or the rear member while remaining attached to the other one of the front member or the rear member so that the at least one middle member can be rotated with the rotating joint.

42. The animal transport apparatus of claim 41, wherein the at least one middle member is detachable from either the front member or the rear member via a release actuator mounted to the at least one middle member.

43. The animal transport apparatus of claim 42, wherein the release actuator withdraws at least one pin extending off the at least one middle member from a corresponding recess in the front member or the rear member.

44. The animal transport apparatus of claim 33, wherein,
the bottom comprises a bottom plate;
the at least one side comprises a side plate connected to a first long side of the bottom plate, and the bottom plate and the side plate are connected to form an L-shaped structure as viewed from a side of the animal transport apparatus.

45. The animal transport apparatus of claim 44, wherein,
the at least one side further comprises an animal head guard connected to a first short side of the bottom, and one or more of the animal head guard and the side plate is connected to the bottom plate in a movable manner.

46. The animal transport apparatus of claim 44, wherein the at least one side further comprises a support member connected to a second long side of the bottom plate, the second long side is opposite to the first long side.

47. The animal transport apparatus of claim 46, wherein the support member is one of a support side plate or a U-shaped support rod.

48. An animal transport apparatus, comprising:
a containing structure, in which an animal is contained; and
a webbing structure arranged to span an exterior of the containing structure and to apply force to an upper part of the containing structure, thereby securing the containing structure relative to a carrier.

49. The animal transport apparatus of claim 48, wherein
the animal transport apparatus is an animal containing unit used on a seat of a vehicle,
the containing unit is formed by a base structure and a frame structure;
a base structure comprising a base, the base comprising a front portion and a rear portion;
a frame structure comprising:
a front member coupled to the front portion of base;
a rear member coupled to the rear portion of the base; and
containment materials extending at least partially about the frame structure; and
a webbing structure comprising at least first and second spans of webbing, each of the spans comprising a first end coupled to a respective first anchor point defined by the base structure, the spans extending from the respective first anchor point about an exterior of the frame structure and wrapping around the front member to respective second ends of the spans, the second end of each of the spans being configured to couple to a rigid connection on or adjacent to the seat of the vehicle so that the webbing extends about the frame structure along a desired path configured to restrain a pet contained within the unit.

50. The animal transport apparatus of claim 49, wherein the front member comprises a first end coupled to the front portion of the base on a first side and a second end coupled to the front portion of the base on a second side, the front member of the frame structure being shaped in a curve to define in part a front of the unit and define in part a top of the unit and the rear member comprises a first end coupled to the rear portion of the base on the first side and a second end coupled to the rear portion of the base on the second side, the rear member of the frame structure being shaped in a curve to define in part a rear of the unit and define in part the top of the unit, wherein the spans extend along a top portion of the containment materials covering the top of the unit to a second end coupled to a second anchor point.

51. The animal transport apparatus of claim 49, wherein the base structure further comprises a base frame mounted to the base and wherein the base frame comprises a front member and the first ends of the spans of webbing are coupled to the front member of the base frame interior to the base.

52. The animal transport apparatus of claim 51, wherein the first ends of the spans of webbing are sewn to the front member of the base frame.

53. The animal transport apparatus of claim 51, wherein the containment materials comprise front containment materials defining in part the front of the unit and supported at least in part by the front member of the frame structure, a front potion of the containment materials covering the front of the unit, the front portion of the containment materials comprising an exterior surface and an interior surface, the unit further comprising a top portion of the containment materials covering the top of the unit and supported at least in part by the front member and the rear member of the frame structure.

54. The animal transport apparatus of claim 53, wherein the spans of webbing are woven through at least part of the front containment materials so that a portion the spans are exterior to the exterior surface of the front containment materials and a further portion of the spans are interior to the exterior surface of the front containment materials.

55. The animal transport apparatus of claim 51, wherein the spans wrap around an exterior surface of the front member of the base frame.

56. The animal transport apparatus of claim 49, wherein the frame structure further comprises:
first and second middle members each comprising a first end coupled to the front member and a second end coupled to the rear member, the first and second middle members being exterior to an exterior surface of the containment materials, and wherein the first span of webbing extends across the exterior surface of the containment materials along the first middle member and the second span of webbing extends across the exterior surface of the containment materials along the second middle member.

57. The animal transport apparatus of claim 56, wherein the middle members of the frame structure each comprise ring structures through which the spans of webbing are run.

58. The animal transport apparatus of claim 57, wherein the middle members of the frame structure each comprise a front middle member and a rear middle member detachable via a sliding actuator, the sliding actuator being translatable between a first position, where the sliding actuator is slid over the front middle member and detaches from the rear middle member, and a second position, where the sliding actuator is slid over the rear middle member and attaches the front middle member and the rear middle member, and wherein, when the sliding actuator is translated, the ring structures of the actuator slide over the spans of webbing.

59. The animal transport apparatus of claim 49, further comprising:
a tether structure comprising at least two spans, each of the spans of the tether structure comprising a first end coupled to the rear member, the second ends of the spans joining together at a joint, the tether structure further comprising a unitary span extending from a first end at the joint to a second end on which a tether latch is adjustably positioned,
wherein the tether latch is configured to attach to the rigid connection on or adjacent to the seat of the vehicle.

60. The animal transport apparatus of claim 59, wherein the first ends of the spans of the tether structure are adjacent to the second ends of the spans of webbing.

61. The animal transport apparatus of claim 56, wherein the first ends of the spans of webbing are coupled to rigid brackets at the rear portion of the base.

62. The animal transport apparatus of claim 61, wherein the spans extend from the first end interior to the base structure, wrap around a front portion of the base structure and continue exterior to the exterior surface of a front portion of the containment materials covering the front of the unit.

63. The animal transport apparatus of claim 49, wherein the rigid connection on or adjacent to the seat of the vehicle is a first rigid connection, the unit further comprising:
latches coupled to the frame structure, the latches being configured to couple the frame structure to a second rigid connection on or adjacent to the seat of the vehicle.

64. The animal transport apparatus of claim 63, wherein the second rigid connection is spaced from the first rigid connection.

65. The animal transport apparatus of claim 49, wherein the second ends of the first and second spans of webbing are configured to directly couple to the rigid connection on or adjacent to the seat of the vehicle.

66. The animal transport apparatus of claim 48, wherein,
the containing structure comprises:
a bottom plate providing an animal bearing surface;
a side plate connected to a first long side of the bottom plate, and the bottom plate and the side plate are connected to form an L-shaped structure as viewed from a side of the animal transport apparatus;
wherein the webbing structure comprises an upper anchor assembly for securing the animal transport apparatus to an anchor point on a vehicle seat, the upper anchor assembly comprising:
a first tether and a second tether, each having a first end and a second end;
a length adjuster, the first end of which is connected to the first end of each of the first tether and the second tether;
a connecting tether, which is adjustably connected to the second end of the length adjuster with the first end of the connecting tether to form an adjustable end; and
a connecting hook connected to the second end of the connecting tether,
wherein the first tether and the second tether are respectively connected to the side plate or the bottom plate with their respective second ends,
wherein the upper anchor assembly secures the animal transport apparatus to the anchor points through the connecting hook.
